# EUROPÄISCHE PATENTANMELDUNG

(11) **EP 2 959 797 A1**
(43) Veröffentlichungstag der Anmeldung: **30.12.2015**
(21) Anmeldenummer: 14174758.4
(22) Anmeldetag: 27.06.2014
(51) Int. Cl.: A46B 7/02, A46B 7/06

(54) **Zahnbürste mit bewegten Elementen**

(71) Anmelder: Trisa Holding AG, 6234 Triengen (CH)
(72) Erfinder: Willi, Christoph, 6215 Beromünster (CH); Kirchhofer, Pierre, 6205 Eich (CH); Brätschi, Armin, 4652 Winznau (CH); Patel, Vivek, Yardley, PA Pennsylvania 19067 (US); Kwang, Matthew, Old Bridge, NJ New Jersey 08857 (US); Huy, Gerhart, Hamilton Sq., NJ New Jersey 08690 (US)
(74) Vertreter: Frei Patent Attorneys

(57) **Zusammenfassung**

Die Erfindung betrifft eine Zahnbürste, enthaltend einen Grundkörper mit einem Griffteil, einem Halsteil und einem Kopfteil (6.1). Im Kopfteil (6.1) ist mindestens ein, relativ zum Kopfteil (6.1) beweglicher Bürstenkörper (10a, 10b) angeordnet, welcher zusammen mit dem Kopfteil (6.1) mindestens einen Teil des Bürstenkopfes (5.1) ausbildet. Der mindestens eine Bürstenkörper (10a, 10b) ist über eine manuell auf die Zähne ausgeübte Reinigungsbewegung bewegbar.

## Beschreibung

Die Erfindung bezieht sich auf das Gebiet der Zahnpflege und betrifft eine Zahnbürste enthaltend einen Grundkörper mit einem Griffteil, einem Halsteil und einem Kopfteil, wobei im Kopfteil wenigstens ein relativ zum Kopfteil beweglicher Bürstenkörper mit Reinigungsborsten angeordnet ist. Die Erfindung betrifft ferner ein Verfahren zur Herstellung einer erfindungsgemässen Zahnbürste.

Herkömmliche Zahnbürsten, bei welchen die Borstenbewegung ausschliesslich über eine von Hand ausgeführte Reinigungsbewegung erfolgt, nachfolgend Handzahnbürsten genannt, enthalten ein im Bürstenkopf angeordnetes Borstenfeld aus einer Mehrzahl von Reinigungsborsten. Die Reinigungsborsten sind fest im Bürstenkopf verankert. Die Bewegung der Reinigungsborste relativ zum Bürstenkopf beschränkt sich auf die elastische Biegung der Reinigungsborsten.

Es sind auch Handzahnbürsten bekannt, bei welchen Reinigungsborsten auf einem Trägerkörper fixiert sind, welcher wiederum beweglich am Bürstenkopf angebracht ist.

So beschreibt die Publikationsschrift US 5, 996,157 eine Handzahnbürste, bei welcher Reinigungsborsten auf einem Drehplättchen angebracht sind. Das Drehplättchen mit den Reinigungsborsten ist hierzu auf einer Drehachse am Bürstenkopf gelagert. Das Drehplättchen mit den Reinigungsborsten wird nun bei Ausführen einer Reinigungsbewegung in Drehung versetzt.

Im Gegensatz zu elektrischen Zahnbürsten, bei welchen eine Vielzahl von Bewegungsmuster für Reinigungsborsten bzw. Borstenfelder bekannt sind, ist die Entwicklung auf dem Gebiet der Handzahnbürsten, bei welchen Reinigungsborsten bzw. Borstenfelder relativ zum Bürstenkopf bewegbar sind, weniger weit.

Dabei ermöglichen neue Bewegungsmuster von Reinigungsborsten bzw. von ganzen Borstenfeldern bei Handzahnbürsten verbesserte Reinigungs- und Pflegeeffekte oder eine schonendere Zahnpflege.

Es ist deshalb eine Aufgabe der Erfindung, eine Handzahnbürste vorzuschlagen, welche optimale Reinigungs- und Pflegeeffekte ermöglicht.

Eine weitere Aufgabe der Erfindung ist es, eine Handzahnbürste vorzuschlagen, welche eine schonende Zahnpflege ermöglicht.

Die Aufgabe wird mit den Merkmalen des Anspruchs 1 gelöst. Die abhängigen Ansprüche beinhalten besondere Ausführungsformen und Weiterbildungen der Erfindung.

Die Erfindung zeichnet sich nun dadurch aus, dass im Kopfteil mindestens ein, relativ zum Kopfteil beweglicher Bürstenkörper angeordnet ist, welcher zusammen mit dem Kopfteil wenigstens einen Teil eines Bürstenkopfes ausbildet, wobei der mindestens eine Bürstenkörper über eine manuell auf die Zähne ausgeübte Reinigungsbewegung relativ zum Kopfteil bewegbar ist.

Gemäss einer Weiterbildung der Erfindung sind im Kopfteil mindestens zwei, relativ zum Kopfteil sowie relativ zueinander bewegliche Bürstenkörper angeordnet, welche zusammen mit dem Kopfteil wenigstens einen Teil eines Bürstenkopfs ausbilden, wobei die mindestens zwei Bürstenkörper über eine manuell auf die Zähne ausgeübte Reinigungsbewegung relativ zum Kopfteil bewegbar sind.

Der Bürstenkörper enthält einen Borstenträger, auf welchem die Reinigungsborsten angeordnet sind. Der Borstenträger kann eine Höhe von 2 bis 4 mm, insbesondere von 2 bis 3 mm aufweisen. Der Bürstenkörper kann eine Länge von 5 bis 18 mm aufweisen. Der Bürstenkörper kann eine Breite von 5 bis 18 mm aufweisen. Ist der Bürstenkörper elliptisch oder rund, insbesondere kreisrund ausgebildet, so kann dieser einen maximalen Durchmesser von 5 bis 18 mm, insbesondere von 10 bis 15 mm haben.

Der Kopfteil kann zusammen mit dem mindestens einen bzw. den mindestens zwei Bürstenkörpern den Bürstenkopf der Zahnbürste ausbilden.

Der Bürstenkopf definiert eine geometrische Reinigungsebene, welche jener Ebene entspricht, die bei der Zahnreinigung parallel zur Zahnoberfläche geführt wird. So liegt beispielsweise bei gleichgerichteten Borsten gleicher Länge die Oberfläche der Borstenenden parallel zur Reinigungsebene. Die Reinigungsebene ist insbesondere parallel zur Längsachse der Zahnbürste.

Unter den Begriff "parallel" ist grundsätzlich nicht eine streng geometrische Parallelität zu verstehen. Unter den Begriff sollen auch im Wesentlichen parallele Anordnungen fallen, welche dieselbe Wirkung entfalten wie eine streng parallele Anordnung.

Der Bürstenkopf weist insbesondere eine Zahnpflegeseite, auch Vorderseite, und eine der Zahnpflegeseite gegenüber liegende Rückseite auf. Die Zahnpflegeseite entspricht jener Seite, welche den zu reinigenden Zähnen zugewandt ist. Die Reinigungsborsten sind mit ihren freien Enden insbesondere zur Zahnpflegeseite hin gerichtet.

Der Grundkörper ist insbesondere einteilig in einem Spritzgiessverfahren hergestellt. Der Grundkörper enthält insbesondere eine Hartkomponente, welche dem Grundkörper die notwendige Biegesteifigkeit und Formstabilität verleiht. Der Grundkörper kann auch aus einer Hartkomponente bestehen. Insbesondere der Kopfteil enthält oder besteht aus einer Hartkomponente, welche diesem die notwendige Steifigkeit und Formstabilität verleiht.

Der Grundkörper kann aus mehreren Komponenten aufgebaut sein. Eine erste Komponente kann eine Hartkomponente sein, welche dem Grundkörper Formstabilität verleiht. Eine zweite Komponente kann eine Weichkomponente sein, welche dem Grundkörper zusätzliche Funktionen, wie Reinigungsfunktionen oder Griff-Funktionen, verleiht. So kann der Grundkörper einen Daumengriff aus einer Weichkomponente enthalten.

Weiters kann der Grundkörper eine dritte Komponente und gegebenenfalls auch weitere Komponenten beinhalten. Jede dieser Komponenten kann jeweils eine Hartkomponente oder eine Weichkomponente sein.

Die Handzahnbürste ist insbesondere eine nicht-elektrische betriebene Zahnbürste. Das heisst, der Bürstenkopf ist nicht motorisch angetrieben. Der oder die beweglich am Kopfteil gelagerten Bürstenkörper oder Teile davon werden vielmehr durch die manuelle Reinigungsbewegung relativ zum Kopfteil bewegt. Die Handzahnbürste kann eine Einweg- oder Mehrwegzahnbürste sein.

Die Reinigungsborsten am Bürstenkopf bilden ein oder mehrere Borstenfelder aus. Das oder die Borstenfelder werden insbesondere durch Reinigungsborsten an den Bürstenkörpern ausgebildet.

Es kann auch vorgesehen sein, dass zusätzlich zum mindestens einen Bürstenkörper auch Reinigungsborsten am Kopfteil angeordnet sind. Die Reinigungsborsten können insbesondere direkt am Kopfteil bzw. Grundteil befestigt sein. Diese Reinigungsborsten sind daher gegenüber dem Kopfteil insbesondere nicht verschiebbar. Diese Reinigungsborsten können insbesondere einen Teil des Borstenfeldes ausbilden.

Die Reinigungsborsten können z. B. in Längsrichtung betrachtet seitlich, vor oder hinter einem Bürstenkörper oder zwischen zwei Bürstenkörpern am Kopfteil angeordnet sein. Dasselbe trifft übrigens auch auf die nachfolgend beschriebenen weiteren Funktionselemente zu.

Die Reinigungsborsten können zylindrisch sein. Der Querschnitt der Reinigungsborsten ist über die gesamte Länge der Borste insbesondere konstant. Der Querschnitt kann insbesondere rund, das heisst die Borsten bilden einen geraden Zylinder aus.

Die Enden der zylindrischen Reinigungsborsten können gerundet sein und z. B. einen halbkugelförmigen oder halbkugelähnlichen Abschluss aufweisen.

Weiter können die Reinigungsborsten auch zugespitzt sein. Zugespitzte Reinigungsborsten weisen ebenfalls insbesondere einen runden Querschnitt auf.

Doppelseitig zugespitzte Reinigungsborsten weisen einen von einem Mittelbereich der Reinigungsborste her abnehmenden Querschnitt auf. Dies bedeutet, dass die Enden der Reinigungsborsten zugespitzt sind.

Einseitig zugespitzte Reinigungsborsten haben im Gegensatz dazu eine Seite mit einem konstanten zylindrischen Querschnitt der in ein halbkugelförmiges oder halbkugelähnliches Ende führt und eine Seite mit eine zugespitzten Ende, das heiss eine Seite der Reinigungsborste nimmt vom Querschnitt her hab und führt in ein zugespitztes Ende.

Reinigungsborsten mit zugespitzten Enden werden, um den Verschleiss zu minimieren, insbesondere direkt am Grundkörper bzw. am Kopfteil befestigt. Alternativ oder zusätzlich werden Reinigungsborsten mit zugespitzten Enden insbesondere auch an der Peripherie von beweglichen Bürstenkörpern befestigt. Die Spitzen der zugespitzten Reinigungsborsten überragen insbesondere die anderen Reinigungsborsten oder Funktionselemente.

Eine Kombination von Reinigungsborsten mit runden und ein- bzw. doppelseitig zugespitzten Enden ist möglich.

Die Reinigungsborsten und weitere Funktionselemente können in einem rechten Winkel zur geometrischen Reinigungsebene bzw. zur Längsachse angeordnet sein. Die Reinigungsborsten und weitere Funktionselemente können zur Erzielung besonderer Reinigungswirkung in einem Winkel von kleiner 90° zur geometrischen Reinigungsebene bzw. zur Längsachse angeordnet sein.

Weiter können die Reinigungsborsten und weiteren Funktionselemente auch in einem Winkel angeordnet sein, um die Bewegung des entsprechenden Bürstenkörpers zu unterstützen und diesen anzutreiben. Beispielsweise kann die Neigung der Borsten in Richtung der Bewegungsachse gewählt werden, damit die Bewegung unterstützt wird.

Reinigungsborsten sind insbesondere mittels Extrusion hergestellt.

Alternativ können Reinigungsborsten auch mittels Spritzgiessverfahren hergestellt werden. Die gespritzten Reinigungsborsten können insbesondere integral mit dem Grundkörper bzw. dem Kopfteil in einem Mehrkomponentenspritzgiessverfahren hergestellt werden.

Die Reinigungsborsten können auch in einem separaten Arbeitsschritt hergestellt werden. Die Reinigungsborsten können insbesondere integral mit dem Borstenträger des Bürstenkörpers spritzgegossen sein. Der Bürstenkörper wird danach auf das Kopfteil montiert.

Der Borstenträger besteht insbesondere aus einem härteren Material als die spritzgegossenen Reinigungsborsten. Bürstenkörper mit spritzgegossenen Reinigungsborsten werden insbesondere im Mehrkomponentenspritzgussverfahren hergestellt

Die Reinigungsborsten, die im Spritzgiessverfahren hergestellt sind, können aus einem der folgenden Kunststoffe bestehen:
- Polyamid Elastomer (z.B. Grilflex ELG 5930 von Ems-Chemie AG)
- Polyester Elastomer (z.B. Riteflex 672 RF Nat oder Riteflex RKX 193 RF Nat von Ticona Polymers oder Hytrel 7248 von DuPont)
- Thermoplastische Elastomere auf Urethanbasis (z. B. Desmopan von Bayer MaterialScience oder Elastollan von BASF Polyurethanes GmbH

Die Kunststoffe für gespritzte Reinigungsborsten haben beispielsweise eine Shore D Härte von 0 bis 100 vorzugsweise 30 bis 80. Gespritzte Reinigungsborsten weisen vorzugsweise in Längsrichtung eine gestufte und/oder konische Form auf

Konventionelle, mittels Extrusion hergestellte Reinigungsborsten, welche zum Beispiel zugespitzt oder zylindrisch sein können, sind vorzugsweise aus Polyamid (PA) oder Polyester (PBT) hergestellt.

Die Befestigung der Borsten am Bürstenkörper bzw. an dessen Borstenträger kann auf verschiedene Weisen erfolgen. Beispielsweise kann das Anchor Free Tufting (AFT) - Verfahren angewendet werden. Beim AFT-Verfahren (Anchor Free Tufting) werden die konventionellen bzw. extrudierten zylindrischen oder zugespitzten Borsten beziehungsweise die Borstenbündel ohne Hilfe eines Ankers an einem Trägerkörper befestigt. Der Trägerkörper kann ein Trägerplättchen sein.

Der Trägerkörper kann dem Borstenträger entsprechen. Der Trägerkörper kann aber auch als separates Bauteil nach Anbringen der Borsten in einem weiteren Montageschritt am Borstenträger des Bürstenkopfs angebracht werden. So kann der Trägerkörper nach Anbringen der Borsten in einer Ausnehmung am Borstenkörper befestigt werden. Dies geschieht beispielsweise durch Ultraschall-Schweissen oder andere Verbindungsverfahren. Die Ausnehmung ist dabei speziell an die Geometrie des Trägerkörpers angepasst.

Damit der Bürstenkörper möglichst leicht und einfach zu bewegen ist, kann dieser einen Hohlraum zwischen Borstenträger und Trägerkörper aufweisen. Vorzugsweise verfügt der Borstenträger über die Mittel, welche zur Verbindung mit dem Bürstenkopf dienen. Der Trägerkörper kann alternativ ebenfalls über Mittel zur Verbindung mit dem Bürstenkopf verfügen.

Die gerundeten Reinigungsborsten werden bündelweise profiliert und mit ihrem dem freien Nutzende gegenüberliegenden Ende durch Durchlässe im Trägerkörper hindurchgeführt, so dass ein Endbereich der Borstenbündel über die Unterseite des Trägerkörpers hinausragt. An diesem über die Unterseite des Trägerkörpers hinausragenden Endbereich der Borsten werden diese durch Aufschmelzen, Verkleben oder Verschweissen befestigt.

Der Trägerkörper kann eine Länge von 15 bis 35 mm, eine Breite von 6 bis 15 mm und eine Höhe von 1 bis 4 mm aufweisen.

Weiter können die Borsten mittels des konventionellen Ankerstanz-Verfahren im Borstenträger befestigt werden. Hierzu werden mittels eines metallenen Ankerplättchens die Borstenbündel gefaltet und anschliessend in den Borstenaufnahmelöchern fixiert. Durch die Faltung mittels des Ankers weist das Borstenbündel zwei Hälften auf, die je eines der Enden der gefalteten Borsten umfassen. Nach dem Befestigen der Borsten folgt je nach Borstenart die Nachbearbeitung wie profilieren und schneiden. Der Borstenträger mit den Borstenaufnahmelöchern kann dabei zusätzlich mit weichelastischen Massage- und Reinigungselementen versehen sein, welche im Mehrkomponentenspritzgussverfahren stoffschlüssig am Borstenträger angebracht sind.

Die Borstenaufnahmelöcher können einen Durchmesser von 1,2 bis 2,4 mm, insbesondere von 1, 4 bis 1,9 mm, und eine Tiefe von 2 bis 4 mm, insbesondere von 2,5 bis 3,5 mm aufweisen.

Selbstverständlich können auch andere Beborstungsverfahren wie beispielsweise IAP (Integrated Anchorless Production) oder IMT (In Mould Tufting) zum Einsetzen der Borsten verwendet werden. Wie beschrieben können die Borsten natürlich auch mittels Spritzgiessen direkt aus einem Kunststoffmaterial im Spritzgiesswerkzeug geformt werden.

Ebenfalls einsetzbar als Borstenmaterial oder als eine der Materialkomponente sind so genannte Biokunststoffe. Dies sind Kunststoffe, die aus nachwachsenden Rohstoffen hergestellt sind.

Der Bürstenkörper kann neben den konventionellen Reinigungsborsten auf der Vorderseite oder auf der Rückseite des Bürstenkopfes noch weitere Funktionselemente enthalten. Die weiteren Funktionselemente können aus einer Weichkomponente hergestellt sein. Die weiteren Funktionselemente können insbesondere weichelastische Massage- und Reinigungselemente sein.

Weiters können die Funktionselemente auch als Hartkomponente ausgebildet sein. Die weiteren Funktionselemente können auch aus einer Kombination aus Hart- und Weichkomponente hergestellt sein.

Die Funktionselemente können z. B. lamellenförmig, noppenförmig oder "prophy cup"-förmig sein. Die Funktionselemente können auch als Borsten, insbesondere gespritzte Borsten, ausgebildet sein.

Die Funktionselemente können ferner auch ein Rauhigkeitsmuster auf einer Oberfläche sein

Das Funktionselement kann z. B. als Zungenreiniger ausgebildet sein.

Die weiteren Funktionselemente können in ein Borstenfeld integriert sein. Die weiteren Funktionselemente können auf dem Bürstenkörper angeordnet sein. Die weiteren Funktionselemente können auf dem Kopfteil angeordnet sein.

Die weiteren Funktionselemente können auf der Vorderseite oder der Rückseite des Kopfteils angeordnet sein.

Funktionselemente können insbesondere auf der, der Rückseite des Kopfteils zugewandten Seite von beweglichen oder unbeweglichen Teilen des Bürstenkörpers angeordnet sein.

So können die Funktionselemente z. B. auf jener, der Rückseite des Kopfteils zugewandten Seite eines in einer Führungsöffnung translatorisch verschiebbar geführten Führungselementes angeordnet sein, wie nachfolgend noch erläutert.

Solche Funktionselemente können ferner z. B. auf der, der Rückseite des Kopfteils zugewandten Seite eines in einer Achsöffnung drehbar gelagerten Achselementes angeordnet sein, wie nachfolgend noch erläutert.

Funktionselemente können insbesondere so derart flexibel gestaltet sein, dass diese im Zusammenspiel mit dem Bürstenkörper bzw. Borstenträger Bewegungen ausführen.

Beispielsweise können in Bürstenkörpern bzw. in Borstenträgern Ausnehmungen etc. vorgesehen sein, in welchen weichelastische Reinigungselemente geführt sind. Durch die Bewegung des Bürstenkörpers wird die Bewegung auf die weichelastischen Reinigungselemente übertragen und diese werden so bewegt.

Solche Funktionselemente können ferner z.B. auf der, der Rückseite des Kopfteils zugewandten Seite des Umfassungselements am Kopfteil angeordnet sein, wie nachfolgend noch erläutert.

Oben genannte, weitere Funktionselemente können nicht nur am Kopfteil sondern alternativ oder zusätzlich auch am Halsteil oder am Griffteil des Grundkörpers angeordnet sein.

Die weiteren Funktionselemente können ebenfalls mittels Spritzgiessverfahren gespritzt sein. Die weiteren Funktionselemente können insbesondere integral mit dem Grundkörper oder dem Borstenträger hergestellt sein. Die Funktionselemente können auch in einem separaten Arbeitsschritt hergestellt und anschliessend montiert sein.

Nachfolgend werden der Bürstenkörper und seine bewegbare Anordnung auf dem Kopfteil näher beschrieben.

Die Aussenkontur des Kopfteils kann insbesondere dergestalt sein, dass der mindestens eine bewegliche Bürstenkörper in keiner Bewegungsposition über die Aussenkontur des Kopfteils ragt. Dies dient zum Schutz des Benutzers vor möglichen Verletzungen, bzw. Einklemmen der Mundschleimhaut, des Zahnfleisches oder der Zunge.

Der Bürstenkörper kann als separates Bauteil hergestellt und auf den Kopfteil montiert sein. Dies kann beispielsweise über eine Schnapp-Klickverbindung geschehen. Unter " Schnapp-Klickverbindung" soll in dieser Patentanmeldung allgemein eine Verbindung verstanden werden, bei welcher die Elastizität der Kunststoffwerkstoffe zur Herstellung der Verbindung genutzt wird, um die Fügteile in ihre Verbindungsposition zu führen. Während der Herstellung der Verbindung verformt sich eines oder beide Fügeteile elastisch. Bei Einnahme der Verbindungsposition verformt sich das oder die Fügeteile wenigstens teilweise wieder in ihre ursprüngliche Form zurück, so dass die Verbindung nicht mehr bzw. nur nach Zerstörung oder nur unter grösserer Kraftaufwendung gelöst werden kann. Das Einklicken kann insbesondere ein Einrasten, z. B. in eine Führung, sein. Die Schnapp-Klickverbindung kann insbesondere eine Formschlussverbindung sein.

Der Bürstenkörper kann auch zusammen mit dem Kopfteil, z. B. mittels Spritzgiessen, integral hergestellt sein. Der Bürstenkörper kann in diesem Fall, wie nachfolgend noch erläutert, beispielsweise über Filmscharniere mit dem Kopfteil verbunden sein.

Der Bürstenkörper beziehungsweise der zugehörige Borstenträger kann auch mit einer Topographie versehen sein. Das heisst, die Oberfläche des Borstenträgers ist beispielsweise gewölbt oder gestuft. Die Borstenlöcher bzw. die Borstenbefestigungsebene ist somit nicht zwingend flach ausgebildet. Beispiele von möglichen Oberflächentopographien sind:
- Borstenträger wird vom Rand her höher (d.h. der mittlere Bereich liegt höher, z. B. konvexe Form);
- Borstenträger wird vom Rand her tiefer (d.h. der mittlere Bereich liegt tiefer, z. B. konkave Form);
- Borstenträger weist einen ansteigenden Höhenverlauf von der einen Aussenseite zur andere Aussenseite hin (d.h. die Borstenbefestigungsebene ist pultförmig)

Die Profilierung des Bürstenkörper respektive des Borstenträgers kann neben einer unregelmässigen Gestaltung auch eine regelmässige Gestaltung haben. Beispiele hierfür:
- Borstenträger der weiter unten beschriebenen ersten Bewegungsvariante (Rotation) ist rotationssymmetrisch gestaltet;
- Borstenträger der weiter unten beschriebenen zweiten oder vierten Bewegungsvariante (Translation, Wippe) ist spiegelsymmetrisch entlang der Längsachse oder entlang einer Symmetrieachse quer zur Längsachse oder ist punktsymmetrisch gestaltet

Weiter können der Borstenträger oder auch die Borstenlöcher gegenüber der Drehachse oder generell der Bewegungsachse eine Neigung aufweisen.

Neben dem mindestens einen relativ zum Kopfteil beweglich auf dem Kopfteil angeordneten Bürstenkörper kann der Bürstenkopf auch einen oder mehrere Bürstenkörper enthalten, welche bewegungsfest am Kopfteil montiert sind oder einen integrierten Bestandteil des Kopfteiles bilden.

Die Bewegung der beweglichen Bürstenkörper der nachfolgend beschriebenen Art kann durch eine Druckkraft senkrecht zur geometrischen Reinigungsebene bzw. zur Längsachse ausgelöst werden, wie sie z. B. beim Andrücken des Bürstenkopfes an die Zähne aufgebaut wird. Die Bewegung der Bürstenkörper kann alternativ oder zusätzlich auch durch eine längs zur Längsachse wirkende Kraft ausgelöst werden, wie sie zum Beispiel durch das Hin- und Herbewegen der Zahnbürste während der Zahnreinigung erzeugt wird.

Der mindestens eine bewegbare Bürstenkörper ist in seiner Bewegung insbesondere einzig von der Zahnreinigung beeinflusst. Die Bürstenkörper werden insbesondere nicht durch einen Antriebsmechanismus an der Zahnbürste aktiv angetrieben.

Sind mindestens zwei bewegliche Bürstenkörper vorgesehen, so können diese voneinander unabhängig bewegbar sein. Das heisst, die mindestens zwei Bürstenkörper beeinflussen sich in ihrer Bewegung nicht gegenseitig.

Die mindestens zwei beweglichen Bürstenkörper können auch über Kopplungsmittel miteinander gekoppelt sein, derart dass eine Bewegung des einen Bürstenkörpers über die Kopplungsmittel die Bewegung des anderen Bürstenkörpers beeinflusst. Unter dem Begriff Kopplung soll daher verstanden werden, dass wenigstens ein erster Bürstenkörper über die Kopplungsmittel die Bewegung eines zweiten Bürstenkörpers beeinflusst.

So kann die Bewegung des einen Bürstenkörpers über die Kopplungsmittel eine Bewegung im anderen Bürstenkörper auslösen oder verstärken. So kann die Bewegung des einen Bürstenkörpers über die Kopplungsmittel eine Bewegung im anderen Bürstenkörper hemmen oder abschwächen.

Die beiden Bürstenkörper können sich auch gegenseitig in ihrer Bewegung beeinflussen und diese jeweils beim anderen Bürstenkörper hemmen bzw. abschwächen oder auslösen bzw. verstärken.

Die Kopplungsmittel sind zum Beispiel Kopplungselemente. Die Kopplungselemente können aus einer Hart- oder Weichkomponente sein. Die Kopplungselemente können über eine gelenkige Verbindung schwenkbar gelagert sein.

So können die beiden Bürstenkörper über die Kopplungsmittel fest bzw. permanent miteinander verbunden sein. Die Kopplungsmittel können auch mit keinem oder nur mit einem Bürstenkörper fest verbunden sein.

Die Kopplungsmittel können insbesondere Kopplungselemente mit einem Kontaktabschnitt umfassen, welche mit einem Bürstenkörper verbunden sind, und welche in Abhängigkeit vom Bewegungsverlauf des einen oder von beiden Bürstenkörpern mit dem anderen Bürstenkörper über den Kontaktabschnitt einen temporären Kontakt herstellen. Über den temporären Kontakt wird die Bewegung des einen Bürstenkörpers oder beider Bürstenkörper beeinflusst.

So kann ein erster Bürstenkörper drehbar und ein zweiter Bürstenkörper translatorisch verschiebbar gelagert sein.

Gemäss einer ersten Ausführungsform sind die beiden Bürstenkörper über ein Kopplungselement miteinander verbunden. Die Verbindung ist derart, dass der sich translatorisch alternierend verschiebende Bürstenkörper den anderen Bürstenkörper über das Kopplungselement in eine ebenfalls alternierende Drehbewegung versetzt. Die Drehbewegung liegt jedoch innerhalb eines bestimmten Drehwinkels von insbesondere weniger als 180°. Das Kopplungselement übt also die Funktion eines Treib- und Zugelementes aus.

Gemäss einer weiteren Ausführungsform ist am translatorisch verschiebbaren Bürstenkörper ein Kopplungselement angeordnet. Das Kopplungselement bildet einen Kontaktabschnitt zum drehbaren Bürstenkörper hin aus. Der drehbare Bürstenkörper enthält eine zahnradförmige Umfangsstruktur, in welche das Kopplungselement mit seinem Kontaktabschnitt temporär eingreift.

Die beiden Bürstenkörper wirken derart zusammen, dass der sich translatorisch hinund her bewegende zweite Bürstenkörper den ersten Bürstenkörper über das Kopplungselement in eine Drehbewegung versetzt. Während der Drehung springt der Kontaktabschnitt des Kopplungselements in die nächste Vertiefung der Zahnradstruktur.

Das Kopplungselement kann auch eine Sägezahnstruktur aufweisen, welche in die Zahnradstruktur am Bürstenkörper eingreift. Durch translatorisches Bewegen des Kopplungselementes wird der Bürstenkörper über den zahnenden Eingriff in eine alternierende Rotationsbewegung versetzt.

Der erste Bürstenkörper kann lediglich in eine Richtung drehbar gelagert sein (Freilauf). Es kann auch vorgesehen sein, dass der erste Bürstenkörper mit einem Rastmechanismus zusammenwirkt, welcher bewirkt, dass das Kopplungselement den Bürstenkörper lediglich um einzelne Rastpositionen weiterdrehen kann.

Das Kopplungselement kann eines Bürstenkörpers bzw. Borstenträgers sein und beispielsweise aus derselben Komponente, wie Hartkomponente bestehen. Die Kopplung eines Elements des Bürstenkörpers mit einer rotierenden Bewegung mit einem Element des Bürstenkörpers mit einer translatorischen Bewegung kann auf diese Weise ausgeführt sein.

Der translatorisch bewegbare Bürstenkörper kann mit einem Kopplungselement in Form einer vorstehenden Nase ausgestattet sein. Der rotierende Bürstenkörper kann eine Kontaktfläche ausbilden, welche dem Kopplungselement als Anschlag dient. Durch das Andrücken des Kopplungselements und Weiterbewegen desselbigen wird der rotierende Bürstenkörper in Drehung versetzt. Der rotierende Bürstenkörper kann für die Rückstellung mit einem weichelastischen Federelement in Wirkverbindung stehen. Das Federelement ist beispielsweise am Kopfteil befestigt. Der rotierende Bürstenkörper wird durch das Federelement in die Ausgangslage zurückgedrückt, sobald die vom Kopplungselement ausgeübte Kraft nachlässt.

Das Kopplungselement kann verschiedenartig ausgestaltet sein. So kann das Kopplungselement beispielsweise schlangenförmig, mäandrierend oder in der Art einer Schrauben- oder Spiralfeder geformt sein. Das Kopplungselement kann so auch die Funktion eines Rückstellelementes haben. Die Kopplungselemente können ferner Funktionselemente der weiter oben beschriebenen Art enthalten.

Das Kopplungselement kann insbesondere auch mit einem fixen Drehpunkt am Kopfteil befestigt sein.

Gemäss einer weiteren Ausführungsform werden die beiden Bürstenkörper über ein Einfassungselement gemeinsam eingefasst. Die Bürstenkörper sind jeweils mindestens teilumfänglich mit dem Einfassungselement in Kontakt. Der Kontakt kann insbesondere ein Formschluss oder Materialschluss sein.

Wirkt nun der eine Bürstenkörper durch seine Bewegung, z. B. durch eine seitliche Auslenkung oder durch die Mitnahme des Einfassungselementes am Kontaktabschnitt aufgrund einer Rotation, auf das Einfassungselement ein, so wird das Einfassungselement elastisch verformt, insbesondere gedehnt. Durch die elastische Verformung des Einfassungselements wird im anderen Bürstenkörper eine Bewegung ausgelöst oder diese beeinflusst.

Das Einfassungselement kann gummielastisch ausgebildet sein und durch eine elastische Dehnung, welche durch den einen sich bewegenden Bürstenkörper ausgelöst wird, eine Bewegung im anderen Bürstenkörper auslösen oder beeinflussen. Das Einfassungselement kann ein gummielastisches Umfassungsband oder ein gummielastischer Umfassungsreif sein. Das Einfassungselement ist insbesondere an den Bürstenkörpern angeordnet.

Am Einfassungselement, z. B. auf der Vorderseite, Rückseite und/oder zur Seite hin, können Funktionselemente, wie Noppen, Prophy Cups, Lamellen oder sogar Borsten, angeordnet sein. Die Funktionselemente können zur Reinigung und/oder Massage und insbesondere als Zungenreiniger dienen.

Das Einfassungselement kann in Draufsicht n-eckig oder eine beliebige geschlossene Kontur aufweisen. Der Querschnitt des Einfassungselements kann sich über dessen Höhe verändern.

Die Dimension des Einfassungselements ist so gestaltet, dass der Teil des Einfassungselements, welcher direkt am Borstenträger des Bürstenkörpers anliegt, maximal gleich hoch ist wie der Borstenträger des Bürstenkörpers. Das Einfassungselement kann eine Höhe von z. B. 1 mm bis 5 mm aufweisen.

Am Einfassungselement kann mindestens ein Funktionselement angeordnet sein. Das mindestens eine Funktionselement kann z. B. auf der Vorderseite des Kopfteils über den Borstenträger hinaus ragen.

Eine weitere Ausführungsform für eine gekoppelte Bewegung zwischen zwei Bürstenkörpern beinhaltet einen hufeisenförmig ausgebildeten Bürstenkörper. Hufeisenförmig soll insbesondere auch U-, V- und C-förmig mitumfassen. Der hufeisenförmige Bürstenkörper umfasst zwei laterale Schenkel, welche einen, zu einer Seite hin offenen Aufnahmeraum einschliessen. Ein weiterer Bürstenkörper ist entlang der Längsachse translatorisch verschiebbar auf dem Kopfteil geführt. Dieser weitere Bürstenkörper ist in den Aufnahmeraum des hufeisenförmigen Bürstenkörpers verschiebbar. Dadurch werden die elastisch ausgebildeten Schenkel aufgrund einer Spreizkraft durch den sich in den Aufnahmeraum bewegenden Bürstenkörper zur Seite gedrückt. Beim Hinausbewegen des Bürstenkörpers aus dem Aufnahmeraum nehmen die Schenkel aufgrund einer Rückstellkraft wieder ihre Ausgangsposition ein.

Dabei ist es möglich, dass die Rückstellkraft so gross ist, dass der Bürstenkörper durch das Zurückweichen der Schenkel in seine Ausgangsposition zurück gelenkt wird.

Der translatorisch verschiebbare Bürstenkörper kann über eine Schlittenführung, insbesondere der weiter unten beschriebenen Art, verschiebbar sein.

Nachfolgend werden verschiedene Bewegungsvarianten für den Bürstenkopf ausführlich beschrieben.

Am Kopfteil kann auch mindestens ein Bürstenkörper bewegungsfest, d.h. fix befestigt sein. Bürstenkörper, welche bewegungsfest am Kopfteil montiert sind, sind nicht als eigentliche Bewegungsvariante benannt, da sie keine Bewegung ausführen, wenn die Kräfte der Zahnreinigung auf diese wirken. Dennoch sind diese Bürstenkörper in Kombination mit Bürstenkörpern verschiedenster Bewegungsvarianten kombinierbar.

Die Bürstenkörper, welche bewegungsfest am Kopfteil montiert sind, sind von der Gestaltung her insbesondere so ausgelegt, dass sie Reinigungsborsten umfassen. Diese können von unterschiedlicher Ausführung sein. Das heisst, es können beispielsweise sowohl zylindrische wie auch zugespitzte Borsten kombiniert werden. Weiter ist es auch möglich, dass noch andere Borstenarten kombiniert werden. Weiter können auch Funktionselemente, wie weichelastische Lamellen etc., auf den genannten Bürstenkörpern angeordnet sein. Die Reinigungsborsten können in den verschiedenen weiter oben beschriebenen Verfahren am dazugehörigen Borstenträger befestigt sein.

Der Bürstenkörper gemäss einer ersten Bewegungsvariante ist am Kopfteil um eine geometrische Drehachse drehbar bzw. rotierbar gelagert. Der Drehwinkel kann 360° (Winkelgrade) betragen, so dass der Bürstenkörper vollständig drehbar ist. Der Drehwinkel kann auch weniger als 360° betragen, so dass der Bürstenkörper nur in einem definierten Drehwinkel drehbar ist. Die Begrenzung des Drehwinkels kann über einen Anschlag oder auch über entsprechend ausgeformte Dämpfungselemente erfolgen. Die Dämpfungselemente können federnd wirken, damit der Bürstenkörper über eine Rückstellwirkung des Dämpfungselementes mindestens teilweise zurückgedreht wird.

Der Bürstenkörper kann in beide Richtungen oder nur in eine Richtung drehbar gelagert sein. Die Drehung in nur eine Richtung kann über einen Freilauf erreicht werden.

Die Drehachse ist insbesondere senkrecht zur geometrischen Reinigungsebene ausgerichtet. Die Drehachse ist insbesondere senkrecht zur Längsachse angeordnet. Die Drehachse kann auch in einem Winkel zur Längsachse bzw. geometrischen Reinigungsebene angeordnet sein. Die Drehachse ist gegenüber dem Kopfteil insbesondere ortsfest.

Alternativ kann die Drehachse mit einer Translation des Bürstenkörpers in Längsrichtung der Zahnbürste oder senkrecht dazu kombiniert sein, und so ebenfalls in Translationsrichtung verschiebbar sein.

Der drehbare Bürstenkörper kann insbesondere am freien Endabschnitt des Kopfteils angeordnet sein.

Der Bürstenkörper und insbesondere das Borstenfeld können rund, insbesondere kreisrund oder oval ausgebildet sein. Der Bürstenkörper kann auch eine zahnradförmige Aussenkontur aufweisen.

Ferner kann der Bürstenkörper auch nierenförmig oder in einer anderen Form, wie eine polygonale Form, mit geschlossener Kontur vorliegen. Der Bürstenkörper kann insbesondere Konturelemente, wie Zahnradzacken, seitliche Rillen oder vorstehende Elemente, aufweisen. Die Konturelemente können als Positionierhilfe des Bürstenkörpers bei seiner Herstellung dienen. Des Weiteren können die Konturelemente dem Nutzer auch dazu dienen, den Bürstenkörper von Hand zu bewegen, z. B. zum Testen der Funktion, zum Deblockieren des Bürstenkörpers bei Verschmutzung oder zur Reinigung.

Konturelemente können überdies auch bei allen anderen in dieser Schrift beschriebenen Bürstenkörpern mit anderen Bewegungsmustern, wie z.B. Translation, etc., eingesetzt werden. Vorzugsweise werden Konturelemente in der für den Nutzer zugänglichen Peripherie des Bürstenkörpers angeordnet.

Der Bürstenkörper kann ein Achselement enthalten, welches in einer Achsaufnahme, auch Achsöffnung genannt, im Kopfteil drehbar gelagert ist.

In umgekehrter Anordnung kann auch das Kopfteil das Achselement enthalten, welches in einer Achsaufnahme im Bürstenkörper gelagert ist. Der Bürstenkörper ist über die Achsaufnahme drehbar auf dem Achselement gelagert.

Das Achselement kann über eine Schnapp-Klickverbindung in die Achsaufnahme eingesteckt und so axial gesichert sein.

Die Achsaufnahme kann rund, insbesondere kreisrund sein. Die Achsaufnahme kann das Achselement formschlüssig aufnehmen. Die Achsaufnahme kann geometrisch gegengleich zum Achselement geformt sein. Die Achsaufnahme hat z. B. einen Durchmesser von 3 mm bis 9 mm.

Zur Verbesserung der Montage der Schnapp-Klickverbindung können Schlitzungen, Ausnehmungen und/oder dünnere Wandstärken im Bereich der Achsaufnahme und/oder im Bereich des Achselements realisiert werden.

Um die Achsaufnahme kann eine ringförmige Ausnehmung angeordnet sein, welche durch eine ringförmige Wand von der Achsaufnahme getrennt ist. Die ringförmige Wand weist insbesondere eine relativ geringe Wandstärke von z. B. 1 mm bis 3 mm auf. Die ringförmige Wand weist dank der Dünnwandigkeit federnde bzw. nachgiebige Eigenschaften auf. Die ringförmige Wand kann zudem radiale Schlitze bzw. schlitzförmige Ausnehmungen enthalten. Die Achsaufnahme kann auch unabhängig von der Präsenz einer solchen ringförmigen Ausnehmung in ihrem Wandbereich radiale Schlitze bzw. schlitzförmige Ausnehmungen aufweisen. So können z. B. 3 bis 8 solcher Schlitze bzw. schlitzförmige Ausnehmungen vorgesehen sein, welche ebenfalls ein gewisses Nachgeben erlauben.

Das Achselement kann an seinem freien Ende im Zentrum eine Ausnehmung beinhalten. Das Achselement kann so in seinem freien Endabschnitt eine ringförmige Wand ausbilden. Dies kann einen Federeffekt bzw. eine Nachgiebigkeit bei der Montage bringen. Die Form der Ausnehmung kann quasi beliebig sein. Die Ausnehmung kann im Querschnitt rund bzw. kreisförmig oder polygonal oder eine Kombination davon sein. Die Ausnehmung hat eine Tiefe, welche maximal der Länge des Achselements entspricht, das heisst die Ausnehmung reicht höchstens bis zum Borstenträger. Die Wandstärke gegen aussen beträgt insbesondere 1 mm bis 3 mm. Die so ausgebildete ringförmige Wand kann ebenfalls radiale Schlitze bzw. schlitzförmige Ausnehmungen beinhalten.

Die Ausnehmung im Achselement bietet weiter die Möglichkeit, dass Verschlusselemente darin verankert werden können, wie dies weiter unten noch beschrieben wird.

Die Elemente für die Achsaufnahme wie auch für das Achselement können selbstverständlich kombiniert werden.

Die Achsaufnahme kann eine durchgehende Öffnung sein. Das Achselement kann auf der Rückseite aus der Achsaufnahme austreten. Es kann auch vorgesehen sein, dass die Achsaufnahme auf der Rückseite über ein Verschlusselement verschlossen ist. Das Verschlusselement kann über eine Formschlussverbindung, wie Schnapp-Klickverbindung, als Montageteil eingefügt sein. Das Verschlusselement kann auch im Spritzgiessverfahren angespritzt sein. Das Verschlusselement kann aus einer Hart- oder Weichkomponente geformt sein.

Das Verschlusselement kann mit dem Achselement verbunden sein, und z. B. mit einem Verbindungselement in eine Ausnehmung im Achselement eingreifen. Das Verschlusselement kann mit dem Kopfteil auch mit der Achsaufnahme verbunden sein.

Das Verschlusselement kann auf seiner nach aussen weisenden Oberfläche mit weiteren Funktionselementen, wie beispielsweise einem Zungenreiniger, ausgestattet sein.

Die Achsaufnahme kann auch als Vertiefung, wie Sackloch, ausgebildet sein.

Konzentrisch oder radial um die Achsaufnahme können Schlitze angeordnet sein, welche die elastische Dehnbarkeit des Durchmessers der Achsaufnahme zur Herstellung einer Schnapp-Klickverbindung verbessern.

Das Achselement kann als Zapfen, insbesondere als kreiszylinderförmiger Zapfen, ausgebildet sein.

Das Achselement und/oder die Achsaufnahme können im Querschnitt auch eine andere geometrische Form als kreisrund aufweisen. Das Achselement und/oder die Achsaufnahme können eine Oberflächenstruktur aufweisen. Die Oberflächenstruktur kann so ausgelegt sein, dass mit der Bewegung des Bürstenkörpers Verunreinigungen von der Achsaufnahme verdrängt werden. Damit kann eine selbstreinigende Wirkung erzielt werden.

Es können generell Mittel die zur Befestigung von Bürstenkörpern dienen mit Oberflächenstrukturen versehen sein, welche für die Führung eine selbstreinigende Wirkung entfalten.

Das Achselement kann in Achslängsrichtung einen veränderlichen Durchmesser ausbilden. Das Achselement kann insbesondere am freien Ende eine Verdickung aufweisen. Da Achselement bzw. der Zapfen kann an der engsten Stelle einen Durchmesser von 2.5 mm bis 8.5 mm haben und an der breitesten Stelle einen maximalen Durchmesser von 3 mm bis 9 mm. Die Länge des Achselements beträgt vom Austrittspunkt aus dem Borstenträger bis zur freien Ende insbesondere 1 mm bis 4 mm.

Das Achselement kann. wie erwähnt, durch eine Durchgangsöffnung am Kopfteil hindurchgeführt sein. Am freien Ende des Achselementes, welches auf der Rückseite des Kopfteils angeordnet ist, können Funktionselemente, wie Noppen, Prophy Cups, Lamellen oder sogar Reinigungsborsten, angeordnet sein. Die Funktionselemente können zur Reinigung und/oder Massage und insbesondere als Zungenreiniger dienen. Die Funktionselemente sind durch diese Anordnung durch die Reinigungsbewegung parallel und gleichzeitig mit dem Bürstenkörper rotativ bewegt

Gemäss einer besonderen Weiterbildung ist die Achsaufnahme als Schlitzöffnung (Nut oder Durchgangsöffnung) ausgebildet. Diese erlaubt eine kombinierte Bewegung aus einer Rotation des Bürstenkörpers um die Drehachse und einer translatorischen Verschiebung des Bürstenkörpers entlang der Schlitzöffnung.

Der Bürstenkörper kann auch eine Art Drehring ausbilden, welcher auf einem Achselement oder in einer Ringöffnung am Kopfteil drehbar gelagert ist. Eine umgekehrte Anordnung ist ebenfalls möglich. Der Drehring kann über eine Schnapp-Klickverbindung am Achselement oder in der Ringöffnung drehbar, aber axial gesichert befestigt werden.

Im Gegensatz zur oben beschriebenen Ausführungsform dreht sich der Drehring um das Achselement bzw. um die Ringöffnung. Das Achselement bzw. die Ringöffnung kann drehfest am Kopfteil ausgebildet sein. Das Achselement kann als Zapfen, insbesondere als kreiszylinderförmiger Zapfen ausgebildet sein.

Der Drehring kann vollständig in einer insbesondere ringförmigen Ausnehmung im Borstenträger eingelassen sein.

Gemäss einer besonderen Ausführungsform ist der Bürstenkörper als Drehring ausgelegt, welcher in einer ringförmigen Ausnehmung am Kopfteil drehbar gelagert ist. Der Drehring ist sogleich Borstenträger für die Reinigungsborsten.

Es kann umgekehrt auch vorgesehen sein, dass der Bürstenkörper eine ringförmige Ausnehmung enthält, in welche ein Führungsring am Kopfteil eingreift, wobei der Bürstenkörper drehbar am Führungsring gelagert ist. Der Führungsring kann z. B. ein ringförmiger Vorsprung am Kopfteil sein.

Innerhalb des Führungsringes besteht die Möglichkeit der Anbringung weiterer Reinigungselemente. Diese können beispielsweise fix montiert sein. Daneben ist es auch möglich weitere bewegte Elemente innerhalb des Führungsringes anzubringen beispielsweise weitere bewegte Elemente der ersten Bewegungsvariante.

Gemäss einer Weiterbildung der Erfindung kann der Bürstenkörper in Draufsicht rund, insbesondere kreisrund ausgebildet sein und drehbar in einer, insbesondere gegengleichen Ausnehmung im Kopfteil eingelassen sein. Die Ausnehmung kann insbesondere rund, wie kreisrund sein. Der Bürstenkörper ist gemäss dieser Ausführungsform als eine Art Drehteller ausgebildet.

Die geometrische Drehachse bzw. das Achselement kann bezüglich des drehbaren Bürstenkörpers zentriert oder exzentrisch angeordnet sein. Im letztgenannten Fall schwenkt der Bürstenkörper seitlich aus.

Es können Mittel vorgesehen sein, welche während der Drehung des Bürstenkörpers entlang der Drehachse eine Auf- und Ab-Bewegung des Bürstenkörpers bewirken. Diese Bewegung kann federnd ausgebildet sein. Die Mittel können z. B. wellenförmig ausgestaltete Schnittstellenebenen zwischen Kopfteil und Bürstenkörper sein, welche einander berühren. Die Auf- und Ab-Bewegung kann 0,5 bis 3 mm betragen. Die Schnittstellenebene kann auch flach ausgestaltet sein. Die Breite der Schnittstellenebene, welche der Auflagefläche entspricht, beträgt 1 mm bis 3 mm.

Achselement und Achsaufnahme können auch eine Schraubgewindeanordnung aufweisen, welche bewirkt dass der Bürstenkörper über eine Schraubbewegung relativ zum Kopfteil rotiert und gleichzeitig axial bewegt wird. Die Schraubbewegung kann zum Beispiel durch einen axialen Druck auf den Bürstenkörper ausgelöst werden. Ein Rückstellelement kann den Bürstenkörper mittels einer Schraubbewegung in eine Ausgangsposition zurückführen.

Die sich berührenden Oberflächen des Achselementes und der Achsaufnahme können aus einer Hartkomponente sein. Eine oder beide der sich berührenden Oberflächen des Achselementes und der Achsaufnahme können auch ganz oder teilweise aus einer Weichkomponente sein. Dies kann zu einer Dämpfung bzw. Hemmung der Drehbewegung führen oder auch federnd wirken.

Der Borstenträger dieser Bewegungsvariante kann verschieden ausgestaltet sein. Das heisst, der Borstenträger kann ein- oder mehrteilig sein. Die Teile können miteinander verbunden sein, z. B. über eine Weichkomponente. Weiter ist es möglich Teile des Borstenträgers über Filmscharniere oder andere Verbindungsvarianten miteinander zu verbinden. Die Mehrteiligkeit erlaubt z. B. eine Flexibilität des Borstenträgers, beispielsweise in den äusseren Bereichen. So kann der Borstenträger mit äusseren Teilen wegkippen, wenn dieser zu stark belastet wird.

Der Bürstenkörper gemäss einer zweiten Bewegungsvariante ist am Kopfteil translatorisch bewegbar geführt. Die translatorische Bewegung ist insbesondere eine Hin- und Herbewegung.

Die translatorische Bewegung kann eine Bewegung parallel zur Längsachse der Zahnbürste sein. Die translatorische Bewegung kann eine seitliche Bewegung quer zur Längsachse sein. Die translatorische Bewegung kann eine Bewegung nach oben vom Kopfteil weg in Richtung der zu reinigenden Zähne quer zur Längsachse sein. Beliebige Kombinationen dieser drei Bewegungsrichtungen sind möglich. Die Schlittenführung ist entsprechend ausgebildet.

Die translatorische Bewegung kann also auch in einem Winkel zur Längsachse verlaufen.

Die translatorische Bewegung kann parallel zur geometrischen Reinigungsebene sein. Die translatorische Bewegung kann jedoch auch in einem Winkel zur geometrischen Reinigungsebene sein.

Gemäss einer besonderen Ausführungsform bewegt sich der Bürstenkörper über eine translatorische Bewegung zu den zu reinigenden Zähnen hin und wieder von diesen weg. Dies kann beispielsweise in der Art einer wellenförmigen Bewegung geschehen, wobei die Bewegung auch mehrere Wellenberge und Wellentäler durchlaufen kann. Die Grösse der translatorischen Bewegungskomponente vom Kopfteil zu den Zähnen hin kann 0,5 bis 5 mm betragen.

Die translatorische Längs-Bewegung ist insbesondere geradlinig. Entsprechend ist eine Führungsöffnung oder ein Längsführungskörper einer Schlittenführung wie nachfolgend noch beschrieben ebenfalls geradlinig ausgebildet.

Die translatorische Längs-Bewegung kann jedoch auch kurvenförmig sein. Entsprechend ist eine Führungsöffnung oder ein Längsführungskörper ebenfalls gekurvt insbesondere wellenförmig, wie S-förmig, ausgebildet.

Der translatorisch bewegbare Bürstenkörper kann in einer Gleitführung, insbesondere einer Schlittenführung geführt sein. Eine translatorische Bewegung entlang der Längsachse kann 2 bis 12 mm, insbesondere 2 bis 5 mm, betragen. Eine seitliche translatorische Bewegung quer zu Längsachse kann 2 bis 10 mm betragen.

Die Schlittenführung kann gemäss einer ersten Ausführungsform einen durch das Kopfteil ausgebildeten Längsführungskörper enthalten. Dieser dient als eine Art Gleitschiene. Der Bürstenkörper ist auf dem Längsführungskörper gleitend geführt. Hierzu enthält der Bürstenkörper wenigstens ein, den Längsführungskörper wenigstens teilweise umgreifendes Führungselement, auch Umfassungselement genannt.

Der Bürstenkörper kann, den Längsführungskörper beidseitig umgreifende Führungselemente enthalten. Die Breite eines einzelnen Führungselementes kann, gemessen parallel zum Längsführungskörper, 8 bis 15 mm betragen.

Der Bürstenkörper kann pro umgreifende Seite jeweils ein oder eine Mehrzahl von voneinander beabstandeten, und entlang des Längsführungskörpers hintereinander angeordnete Führungselemente, wie Führungsarme bzw. Führungsfinger, enthalten. Pro Seite können insbesondere 1 bis 5 Führungselemente vorgesehen sein. Bei mehreren Führungselementen pro Seite können diese, gemessen parallel zum Längsführungskörper, eine Breite von 1,5 bis 3 mm aufweisen.

Die Umfassungselemente können aus einer Hart- und/oder Weichkomponente sein. Im letzten Fall sind die Umfassungselemente flexibel, insbesondere elastisch. Die Umfassungselemente können jedoch insbesondere als Hartkomponente ausgebildet sein, wobei die Flexibilität über die geometrische Ausgestaltung bzw. Materialstärke der Elemente erreicht wird. Weiter ist es auch möglich, weichelastische Zonen zu vorzusehen, die eine Flexibilität ergeben.

Auf den Umfassungselementen können zur Seite hin und/oder auf der Rückseite Funktionselemente, Noppen, Prophy Cups, Lamellen oder sogar Reinigungsborsten angeordnet sein. Die Funktionselemente können zur Reinigung und/oder Massage und insbesondere als Zungenreiniger dienen. Selbstverständlich können solche Funktionselemente auch im Borstenfeld zur Vorderseite hin gerichtet ausgestaltet sein.

Die maximale Bewegung der Bürstenkörper wird durch die Geometrien am und um den Längsführungskörper sowie durch die Geometrie am Bürstenkörper definiert. Der Längsführungskörper enthält in Längsachsenrichtung betrachtet insbesondere am vorderen und am hinteren Ende Anschlagelemente. Diese können beispielsweise direkt am Kopfteil ausgeformt sein. Weiter können diese auch als Bürstenkörper ausgeformt sein. So kann zum Beispiel der zweite Bürstenkörper am ersten Bürstenkörper anschlagen.

Der Längsführungskörper ist vorzugsweise so ausgelegt, dass die Bewegung des Bürstenkörpers über die gesamte Auslenkung geführt ist. Dabei kann beispielsweise eine Mittelrippe zwischen den Umfassungsarmen vorgesehen sein, welche eine Rotation des Bürstenkörpers um die Längsachse verhindert.

Im Querschnitt betrachtet weist der Längsführungskörpers eine geschlossene Kontur auf. Diese kann beispielsweise rund oder polygonal sein. Die Kontur kann insbesondere T-förmig sein.

Die Schlittenführung kann gemäss einer zweiten Ausführungsform eine durch das Kopfteil ausgebildete Führungsöffnung umfassen. Der Bürstenkörper enthält wenigstens ein Führungselement, welches in die Führungsöffnung eingreift und darin gleitend geführt ist. Der Bürstenkörper kann nun über das wenigstens eine Führungselement entlang der Führungsöffnung gleitend geführt sein. Eine umgekehrte Anordnung von Führungsöffnung und Führungselement ist auch möglich.

Die Führungselement und/oder Führungsöffnung können, wie weiter oben bereits beschrieben, über eine Oberflächenstruktur zur Selbstreinigung der Führung verfügen.

Die Führungsöffnung kann eine Länge von 5 bis 20 mm, insbesondere von 8 bis 15 mm aufweisen. Die Breite der Führungsöffnung kann 1 bis 5 mm betragen.

Das Führungselement hat insbesondere eine Länge von 3 mm bis 15 mm. Die weiteren Masse sind insbesondere identisch mit denjenigen der weiter oben beschriebenen Achszapfen.

Die Führungsöffnung kann eine Längsnut oder ein durchgängiger Öffnungsschlitz im Kopfteil sein.

Das wenigstens eine Führungselement ist insbesondere gegen ein Herausfallen aus der Führungsöffnung gesichert. Dies kann über eine formschlüssige Führung erfolgen. Das wenigstens eine Führungselement kann z. B. über eine Schnapp-Klickverbindung entlang der Führungsöffnung verschiebbar in die Führungsöffnung eingeführt sein. Dabei wird der Bürstenkörper insbesondere zwischen der Unterseite des Borstenträgers und einem vorstehenden Teil am Führungselement geklemmt. Die Ausführung der Klemmung ist bezüglich Spaltmassen, Toleranzen etc. analog zur ersten Bewegungsvariante ausgeführt.

Das Führungselement kann im Zentrum eine Ausnehmung beinhalten. Dadurch ergibt sich ein Federeffekt bei der Montage. Die Querschnittsform der Ausnehmung ist frei wählbar und kann langlochförmig, rund, oval, polygonal oder eine Kombination davon sein. Die Querschnittsform der Ausnehmung ist jedoch insbesondere geschlossen. Die Ausnehmung hat insbesondere eine Tiefe, welche maximal der Höhe des Führungselementes entspricht. Das heisst, die Ausnehmung reicht höchstens bis zum Borstenträger. Die Wandstärke des Führungselementes mit Ausnehmung beträgt insbesondere 1 mm bis 3 mm. Die Ausnehmung bietet weiter die Möglichkeit, dass Verschlusselemente darin verankert werden können, wie dies weiter unten noch beschrieben ist.

Wird der Bürstenkörper gemäss der zweiten Bewegungsvariante am Bürstenkopf mit einem benachbart angeordneten, weiteren Bürstenkörper gemäss einer ersten oder dritten Bewegungsvariante kombiniert, so kann die Führungsöffnung der Schlittenführung in die Achsaufnahme bzw. die Gelenkaufnahme münden. Die Achsaufnahme bzw. die Gelenkaufnahme ist insbesondere breiter als die Führungsöffnung.

Das Führungselement ist nun über die breitere Achsaufnahme bzw. die Gelenkaufnahme seitlich in die Führungsöffnung einschiebbar. Durch Einführen des Achselementes bzw. des Gelenkkopfes in die Achsaufnahme bzw. die Gelenkaufnahme wird die Einschuböffnung blockiert und das Führungselement ist gegen ein Herausgleiten aus der Führungsöffnung gesichert.

Es kann auch vorgesehen sein, dass das Führungselement wenigstens zweiteilig ausgebildet ist. Ein erster Teil ist mit dem Bürstenkörper verbunden und wird von der Vorderseite her in die durchgängige Führungsöffnung eingeführt. Ein zweiter Teil wird von der Rückseite in die Führungsöffnung eingeführt und mit dem ersten Teil verbunden, z. B. über eine Schnapp-Klickverbindung oder über eine Stoffschlussverbindung, wie Schweissverbindung. Das zusammengesetzte Führungselement ist nun aufgrund einer besonderen geometrischen Ausbildung der beiden Teile gegen ein Herausfallen aus der Führungsöffnung gesichert.

In der Nähe der Führungsöffnung können Ausnehmungen wie Dehnungsschlitze in das Kopfteil eingebracht sein. Die Ausnehmungen sollen zur Herstellung einer Schnapp-Klickverbindung mit dem Führungselement die elastische Dehnbarkeit der Führungsöffnung erhöhen.

Die Breite der Führungsnut kann zum Nutboden hin zunehmen. Die Führungsnut kann querschnittlich insbesondere schwalbenschwanzförmig ausgebildet sein.

Das wenigstens eine Führungselement kann ein Führungszapfen bzw. Führungsnocken oder eine Führungsleiste sein, welches bzw. welche in die Führungsöffnung eingreift. Das Führungselement kann länglich oder rund, insbesondere kreisrund ausgebildet sein.

Ist das Führungselement durch einen Öffnungsschlitz am Kopfteil hindurchgeführt sein, so können am freien Ende des Führungselements, auf der Rückseite des Kopfteils Funktionselemente, wie Noppen, Prophy Cups, Lamellen oder sogar Reinigungsborsten angeordnet sein. Die Funktionselemente können zur Reinigung und/oder Massage und insbesondere als Zungenreiniger dienen.

Es kann auch vorgesehen sein, dass der Öffnungsschlitz auf der Rückseite über ein Verschlusselement verschlossen ist. Das Verschlusselement kann über eine Formschlussverbindung, wie Schnapp-Klickverbindung, als Montageteil eingefügt sein. Das Verschlusselement kann auch in einem Spritzgiessverfahren an das Kopfteil angespritzt sein. Das Verschlusselement kann aus einer Hart- oder Weichkomponente hergestellt sein.

Das Verschlusselement kann mit dem Führungselement verbunden sein, und z. B. mit einem Verbindungselement in eine Ausnehmung im Führungselement eingreifen. Das Verschlusselement kann mit dem Kopfteil auch mit der Schlitzöffnung verbunden sein.

Das Verschlusselement kann auf seiner nach aussen weisenden Oberfläche mit weiteren Funktionselementen, wie beispielsweise einem Zungenreiniger, ausgestattet sein.

Gemäss einer besonderen Weiterbildung kann sich die Führungsöffnung in eine Richtung oder lokal erweitern, derart dass das Führungselement im erweiterten Bereich der Führungsöffnung drehbar wird und so eine kombinierte Bewegung aus translorischer Bewegung und Rotation ausführen kann. So kann die Führungsöffnung insbesondere in einem Endbereich erweitert sein, damit sich beispielsweise ein translatorisch bewegter Bürstenkörper in diesem Bereich zusätzlich oder ausschliesslich rotieren lässt.

Der als Schlitten ausgebildete Borstenträger kann grundsätzlich ein- oder mehrteilig sein. Die Teile können miteinander verbunden sein, z. B. über eine Weichkomponente. Weiter ist es möglich Teile des Schlittens über ein bewegliches und/oder flexibles Element aus einer Hartkomponente, z. B. Filmscharnier, Federelement oder andere Mittel miteinander zu verbinden. Auf diese Weise kann einerseits eine Flexibilität des Schlittens erreicht werden, indem z. B. seitliche Teile des Borstenträgers flexibel befestigt sind. Eine entsprechende Geometrie des Kopfteils kann natürlich unterstützend bzw. nicht hemmend wirken.

Auf ähnliche Weise ausgebildete Borstenträger mit jeweils einem oder mehreren Führungszapfen und entsprechenden Führungsöffnungen im Kopfteil können eine weitere Bewegungsform erbringen. Weisen die Führungsöffnungen für die flexiblen Teile des Führungsschlitten im Kopfteil eine auf die restlichen oder weiteren Führungsöffnungen und Führungszapfen mit Borstenträgern abgestimmte Form auf, kann für die flexiblen Elemente durch die Translation beispielsweise auch eine seitlich wegschwenkende Bewegung erreicht werden. Die Elemente drehen sich entsprechend seitlich weg, wenn sich der Schlitten nach vorne bewegt.

Eine Ausgestaltung von Flexibilität oder alternativen Bewegungsformen kann in Längsrichtung betrachtet auch vorne und/oder hinten am Schlitten ausgebildet werden. Der flexible Abschnitt kann dabei parallel oder in einem Winkel zur Längsachse ausgebildet sein.

Weiter kann die translatorische Bewegung des Bürstenkopfes so aufgebaut sein, dass die Längsachse des Borstenträgers bzw. Schlittens nicht parallel zur Bewegungsrichtung das heisst zur Richtung des Führungsschlitzes ist.

Eine weitere Ausgestaltungvariante für den Bürstenkörper besteht darin, dass der Bürstenkörper aus einem translatorischen Schlitten miteine darauf flexibel angeordneten Borstenträger besteht. Der Bürstenkörper lässt sich so nach vorne und nach hinten bewegen und gleichzeitig flexibel auslenken.

Es können mehrere Schlittenführungen mit Bürstenkörpern hintereinander und/oder nebeneinander am Kopfteil angeordnet sein.

Der Bürstenkörper gemäss einer dritten Bewegungsvariante ist über eine Gelenkverbindung mit dem Kopfteil verbunden und um einen Drehpunkt relativ zum Kopfteil in mehrere Richtungen, insbesondere in drei Achsrichtungen schwenkbar angeordnet. Die Auslenkung ist jedoch insbesondere auf einen Schwenkwinkel von maximal 180°, insbesondere von maximal 90° beschränkt. Der Bürstenkörper kann insbesondere eine Kegel-Rotation um den Drehpunkt ausüben.

Die Gelenkverbindung kann ein Kugelgelenk sein. Das Kugelgelenk umfasst insbesondere einen Gelenkkopf und eine Gelenkaufnahme. Die Gelenkaufnahme kann als Gelenkpfanne ausgebildet sein. Der Gelenkkopf kann durch den Borstenträger und die Gelenkaufnahme durch den Kopfteil ausgebildet werden oder umgekehrt.

Die Gelenkaufnahme, auch Gelenköffnung genannt, kann als Vertiefung ausgebildet sein. Die Gelenkaufnahme kann auch als durchgängige Öffnung im Kopfteil ausgebildet sein. Die Gelenkaufnahme kann rund, insbesondere kreisrund sein.

Der Drehpunkt kann zum Kopfteil hin oder zum Borstenträger hin angeordnet sein. Der Drehpunkt kann im Borstenträger, im Kopfteil oder in einem Verbindungsabschnitt zwischen Borstenträger und Kopfteil angeordnet sein.

Es kann auch vorgesehen sein, dass sowohl am Kopfteil als auch am Borstenträger eine Gelenkverbindung der oben beschriebenen Art vorgesehen ist, welche über einen Verbindungsabschnitt bzw. Achsabschnitt miteinander verbunden sind.

Der Gelenkkopf kann über eine Schnapp-Klickverbindung in die Gelenkaufnahme gesteckt und mit dieser verbunden, d.h. gegen ein Herausspringen aus der Gelenkaufnahme gesichert sein.

Die sich berührenden Oberflächen des Gelenkkopfes und der Gelenkaufnahme können aus einer Hartkomponente sein. Eine oder beide der sich berührenden Oberflächen des Gelenkkopfes und der Gelenkaufnahme können aus einer Weichkomponente sein. Dies kann zu einer Dämpfung bzw. Hemmung der Drehbewegung führen.

Der Gelenkkopf und/oder die Gelenkaufnahme können über eine Oberflächenstruktur verfügen.

Der Bürstenkörper gemäss einer vierten Bewegungsvariante ist über eine gelenkige Verbindung mit dem Kopfteil als Wippe ausgebildet.

Gelenkige Verbindung heisst in dieser Beschreibung, dass die beiden Bauteile um eine geometrische Drehachse oder um einen geometrischen Drehpunkt schwenkbar sind. Der Bürstenkörper ist insbesondere um eine geometrische Drehachse oder um einen geometrischen Drehpunkt relativ zum Kopfteil wippend ausgebildet.

Die geometrische Drehachse ist insbesondere parallel zur geometrischen Reinigungsebene angeordnet. Die geometrische Drehachse kann parallel zur Längsachse angeordnet sein. Die geometrische Drehachse kann in einem Winkel zur Längsachse angeordnet sein. Die geometrische Drehachse kann insbesondere auch senkrecht zur Längsachse angeordnet sein. Die geometrische Drehachse ist insbesondere am oder im Kopfteil bzw. Bürstenkörper angeordnet.

Die Wippe kann durch eine Gelenkverbindung ausgebildet sein. Die Gelenkverbindung kann eine in einer Längsnut geführte Wippenachse sein. Die Längsnut kann am oder im Kopfteil und die Wippenachse am Bürstenkörper angeordnet sein oder umgekehrt.

Gemäss einer besonderen Ausführungsform einer Wippe ist die geometrische Drehachse der Wippe zwischen Kopfteil und Bürstenkörper angeordnet. Die Gelenkelemente der Gelenkverbindung, wie z. B. Wippenachse und Längsnut, sind über Verbindungselemente mit dem Kopfteil bzw. dem Bürstenkörper starr verbunden. Eines der Verbindungselemente kann mit dem Kopfteil bzw. Bürstenkörper eine Drehverbindung ausbilden. So kann dieses Verbindungselement ein Achselement ausbilden, welches drehbar in einer Achsaufnahme am Kopfteil bzw. Bürstenkörper gehaltert ist. Eine solche Drehverbindung wurde bereits weiter oben beschrieben. Die Position der Drehachse liegt insbesondere in einer Distanz sowohl zum Kopfteil wie auch zum Bürstenkörper. Gemäss einer weiteren Ausführungsform ist die Drehachse auf Höhe des Bürstenkörpers angeordnet.

Der als Wippe ausgebildete Borstenträger und der Grundkörper mit dem Kopfteil können als separate Bauteile in verschiedenen Herstellschritten, wie Spritzgiessverfahren hergestellt werden. Der Borstenträger und der Grundkörper mit dem Kopfteil können auch in einem gemeinsamen Spritzgiessverfahren hergestellt werden. Im letzteren Fall bestehen die Wippenachse und die Längsnut insbesondere aus sich nicht verbindenden Materialien.

Die Wippenachse kann über eine Schnapp-Klickverbindung in die Längsnut eingeführt oder seitlich in die Längsnut eingeschoben sein. Die Längsnut und die Wippenachse können im Querschnitt eine runde Teilkontur aufweisen. Die Sicherung der Wippenachse gegen das Wegrutschen in der Längsnut kann auf verschiedene Weise erfolgen, beispielsweise durch Überspritzen, Klemmelemente, oder Schnapp-Klickmechanismen.

Um Verletzungen vorzubeugen, können seitliche Öffnungen der Wippe abgedeckt sein. Die Wippachse bzw. der komplette wippende Teil können auch im Kopfteil versenkt sein.

Eine gelenkige Verbindung kann auch über ein Filmscharnier erfolgen. Dieses zeichnet sich durch eine dünnwandige Verbindung aus, welche eine Schwenkbewegung ermöglicht. Gemäss dieser Ausführungsform können Borstenträger und Kopfteil einteilig ausgebildet sein.

Die Auslenkung der Wippbewegung kann 2 bis 5 mm betragen. Die Auslenkung ist als Abstand zwischen der Unterseite des Wippenden Elements und der Oberseite des Kopfteils in der Ausgangslage (d.h. im Ruhezustand) definiert.

Die geometrische Drehachse kann zentrisch angeordnet sein. Die Wippbewegung ist in diesem Fall symmetrisch mit einer gleichen Auslenkung auf beiden Seiten. Die geometrische Drehachse kann auch exzentrisch angeordnet sein. Die Wippbewegung ist in diesem Fall asymmetrisch mit einer unterschiedlichen starken Auslenkung auf den jeweiligen Seiten.

Die Ausführung gemäss der vierten Bewegungsvariante kann ein Rückstellorgan umfassen, welches den als Wippe ausgebildeten Bürstenkörper in eine Ausgangsposition zurückführt. Die Ausgangsposition kann eine neutrale Position zwischen zwei Auslenkpositionen sein. Das Rückstellorgan kann mit einem ersten Abschnitt am Bürstenkörper und mit einem zweiten Abschnitt am Kopfteil befestigt sein. Das Rückstellorgan kann auch nur an einem Abschnitt mit Bürstenkörper oder Kopfteil verbunden sein und einen freien Abschnitt aufweisen, der das jeweils andere Teil lediglich berührt. Mögliche Ausführungsformen von Rückstellorganen werden nachfolgend noch beschrieben. Die Rückstelleigenschaft kann insbesondere aufgrund der Materialeigenschaften oder der geometrischen Eigenschaften erreicht werden.

Es kann zudem ein Verschlusselement ausgebildet sein, welches insbesondere gleichzeitig auch als Rückstellorgan wirkt. Das Verschlusselement ist so ausgebildet, dass es die Freiräume zwischen Bürstenkörper und Kopfteil seitlich verschliesst. Das Verschlusselement ist insbesondere aus einer Weichkomponente ausgebildet.

Der Bürstenkörper gemäss einer fünften Bewegungsvariante ist über gelenkige Verbindungen, die jeweils eine geometrische Drehachse oder einen geometrischen Drehpunkt ausbilden, mit dem Kopfteil verbunden und parallelogrammartig Richtung Kopfteil schwenkbar. Der Borstenträger des Bürstenkörpers kann insbesondere über ein oder mehrere Hebeelemente mit dem Kopfteil verbunden sein. Das oder die zwischen Kopfteil und Borstenträger angeordneten Hebeelemente sind jeweils mit einem Ende, insbesondere gelenkig, mit dem Kopfteil und mit dem anderen Ende, insbesondere gelenkig, mit der Rückseite des Borstenträgers verbunden. Die Bewegungsmöglichkeit ergibt sich aus der geometrischen Ausgestaltung. So können 2 bis 8 Hebeelemente mit entsprechenden gelenkigen Verbindungen vorgesehen sein.

Die Hebeelemente werden beim Einschwenken des Bürstenkörpers in Richtung Kopfteil abgesenkt und beim Ausschwenken des Bürstenkörpers wieder aufgerichtet. Die Ausgangsposition ist die ausgeschwenkte Lage, welche durch Druck auf den Bürstenkörper verlassen wird.

Der Borstenträger, die Hebeelemente und der Kopfteil bzw. der Grundkörper können in einem Spritzgiessverfahren, insbesondere in einem gemeinsamen Spritzgiessschritt hergestellt werden. Die Verbindungen sind insbesondere Filmscharniere. Gemäss dieser Ausführungsform können Borstenträger, Hebeelemente und Kopfteil einteilig ausgebildet sein.

So kann die parallelogrammartige Verschiebung des Bürstenkörpers gemäss einer ersten Bewegungskomponente zum Kopfteil hin 2 bis 5 mm betragen. Die Verschiebung des Bürstenkörpers gemäss einer zweiten Bewegungskomponente parallel zur Längsachse kann 2 bis 5 mm betragen.

Gemäss einer weiteren Bewegungsvariante kann auch eine kombinierte Bewegung eines Borstenträgers über Hebeelemente erreicht werden. Die Hebelemente können insbesondere Federelemente sein, welche sich dadurch auszeichnen, dass ein an einem oder mehreren Hebeelement befestigter Bürstenkörper eine kombinierte Bewegung mit einer ersten Bewegung zum Kopfteil hin bzw. von diesem weg und gleichzeitig einer zweiten Drehbewegung ausführt. Die Federelemente können so ausgebildet sein, dass diese beim Absenken oder Anheben gleichzeitig eingedreht bzw. ausgedreht werden. Die Federelemente können eine wendelförmige Struktur aufweisen und z. B. Schraubenfedern sein.

Der Borstenträger des Bürstenkörpers kann insbesondere über drei oder mehrere Hebeelemente mit dem Kopfteil verbunden sein. Das oder die zwischen Kopfteil und Borstenträger angeordneten Hebeelemente sind jeweils mit einem Ende mit dem Kopfteil und mit dem anderen Ende mit der Rückseite des Borstenträgers verbunden. Die Bewegungsmöglichkeit ergibt sich aus der geometrischen Ausgestaltung. So können 3 bis 8 Hebeelemente mit entsprechenden Verbindungen vorgesehen sein.

Die Hebeelemente werden beim Eindrehen des Bürstenkörpers in Richtung Kopfteil abgesenkt und beim Ausdrehen des Bürstenkörpers wieder aufgerichtet. Der Borstenträger macht dabei eine rotationsähnliche Bewegung, während welcher er sich gleichzeitig absenkt. Die Ausgangsposition ist die ausgedrehte Lage, welche durch Druck auf den Bürstenkörper verlassen wird.

Der Borstenträger, die Hebeelemente und der Kopfteil bzw. der Grundkörper können in einem Spritzgiessverfahren, insbesondere in einem gemeinsamen Spritzgiessschritt hergestellt werden. Die Verbindungen sind insbesondere Filmscharniere. Gemäss dieser Ausführungsform können Borstenträger, Hebeelemente und Kopfteil einteilig ausgebildet sein.

Die Hebeelemente können am Borstenträger auf der dem Borstenfeld entgegen gesetzten Seite im Zentrum und/oder am Aussenrand angeordnet sein. Die Anbringung am Aussenrand bringt mehr Stabilität und eine lineare Bewegung während die Anbringung im Zentrum je nach Belastung auch ein Schaukeln des Borstenträgers zur Folge haben kann.

So kann die Verschiebung des Bürstenkörpers gemäss dieser Bewegungsart in Richtung Kopfteil ebenfalls 2 bis 5 mm betragen.

Bei allen Bewegungsvarianten mit Hebeelementen können die Hebeelemente aus einer Hart- und/oder Weichkomponente hergestellt sein. Im Weiteren können Rückstellorgane für eine optimale Rückstellung vorgesehen sein. Die Rückstellorgane können beispielsweise aus einer Hart- und/oder Weichkomponente sein und ihre Rückstellfunktion aufgrund des Materials oder der geometrischen Gestaltung erhalten. Es können ein oder mehrere Rückstellorgane vorgesehen sein.

Gemäss einer sechsten Bewegungsvariante ist die translatorische Bewegung mit einer Rotation kombiniert. So ist der Bürstenkörper entlang einer Schlittenführung translatorisch verschiebbar. Zusätzlich wird der Bürstenkörper über eine gebogene Fläche am Kopfteil verschoben und so auch rotativ um eine geometrische Drehachse bewegt. Die geometrische Drehachse ist jedoch vom Bürstenkörper beabstandet.

Die gebogene Fläche kann konvex, z. B. in Form einer Wölbung, oder konkav, z. B. in Form einer Vertiefung, sein. Die Fläche ist im Querschnitt insbesondere kurvenförmig. Die Fläche kann alternativ oder zusätzlich auch im Längsschnitt kurvenförmig sein.

Das konstruktive Prinzip der Schlittenführung kann der Schlittenführung gemäss der zweiten Bewegungsvariante, wie weiter oben bereits beschrieben, entsprechen. Die translatorische Bewegung selbst und entsprechend die Schlittenführung kann wie bereits weiter oben beschrieben geradlinig oder kurvenförmig sein.

Gemäss einer besonderen Ausführungsform weist das Kopfteil quer zur Längsachse der Zahnbürste betrachtet eine Wölbung auf. Die dem Borstenfeld gegenüber liegende Rückseite des Borstenträgers des Bürstenkörpers ist gegengleich konkav ausgebildet.

Mittels Schlittenführung kann der Bürstenkörper gemäss einer ersten Weiterbildung eine quer zur Längsache gerichtete seitliche Schwenkbewegung über die Wölbung ausführen. Gemäss einer zweiten Weiterbildung können die Führungsmittel auch so ausgebildet sein, dass eine rein translatorische Verschiebung entlang der Längsachse stattfindet. Gemäss einer dritten Weiterbildung können die Führungsmittel auch so ausgebildet sein, dass eine kombinierte Bewegung mit einem seitlichen Ausschwenken und einer Verschiebung entlang der Längsachse stattfindet.

Die Schlittenführung kann eine in der gebogenen Fläche angeordnete Führungsöffnung, wie Führungsschlitz, umfassen. In die Führungsöffnung greift ein Führungselement, insbesondere ein Führungszapfen, des Bürstenkörpers ein und ist gleitend in dieser geführt.

Gemäss der ersten Weiterbildung verläuft die Führungsöffnung quer zur Längsachse über die Wölbung. Gemäss der zweiten Weiterbildung verläuft die Führungsöffnung entlang der Längsachse der Zahnbürste. Gemäss der dritten Weiterbildung verläuft die Führungsöffnung schräg zur Längsachse über die Wölbung.

Die Öffnungsrichtung der Führungsöffnung kann angepasst sein und muss sich nicht in einer Ebene bewegen. Die Öffnungsrichtung kann auch einer dreidimensionalen Kontur folgen. Beispielsweise kann sie sich auch in der Neigung über ihren Verlauf verändern.

Wie weiter oben bereits zu einzelnen Ausführungsformen beschrieben, können gewisse Bewegungstypen bei einem einzelnen Bürstenkörper auch kombiniert werden. Grundsätzlich können alle vorab beschriebenen Bewegungstypen miteinander kombiniert werden. Die möglichen Kombinationen bilden einen integrierten Bestandteil dieser Erfindung. Nachfolgend werden einige Beispiele aufgeführt.

So kann ein als Wippe ausgebildeter Bürstenkörper zusätzlich auch translatorisch verschiebbar ausgelegt sein. Ein als Wippe ausgebildeter Bürstenkörper kann wie bereits beschrieben zusätzlich auch um eine Drehachse rotierend ausgelegt sein. Ein translatorisch verschiebbarer Bürstenkörper kann zusätzlich auch rotierend ausgelegt sein. Ein rotierender Bürstenkörper kann über eine weitere Drehverbindung zweifach rotierend ausgelegt sein.

Bei diesen Varianten ist jeweils vorgesehen, dass die Verbindungselemente relativ zum Kopfteil beweglich gelagert sind. Beispielsweise enthält der Wippmechanismus einen Führungszapfen, mittels welchem dieser im Kopfteil fixiert ist, und über welchen auch eine Rotationsbewegung als Kombination möglich ist.

Nachfolgend wird eine Auswahl möglicher Kombinationen von beweglich am Kopfteil gelagerten Bürstenkörpern offenbart. Mehrere Bürstenkörper können entlang der Längsachse der Zahnbürste hintereinander angeordnet sein, nachfolgend vereinfacht "hintereinander angeordnet" genannt. Mehrere Bürstenkörper können quer zur Längsachse der Zahnbürste nebeneinander angeordnet sein, nachfolgend vereinfacht "nebeneinander angeordnet" genannt.

Ein Bürstenkörper kann am freien Endabschnitt des Kopfteils angeordnet sein, nachfolgend vereinfachend "vorne angeordnet" genannt. Ein Bürstenkörper kann zum Griffteil hin angeordnet sein, nachfolgend vereinfachend "hinten angeordnet" genannt. Ein Bürstenkörper kann auch zwischen einem vorne und einem hinten angeordneten Bürstenkörper angeordnet sein, nachfolgend vereinfachend "dazwischen angeordnet" genannt.

Es versteht sich, dass die vorab beschriebenen Bewegungsvarianten und Eigenschaften der Bürstenkörper auch für die nachfolgenden Kombinationsmöglichkeiten gelten.

Zur Übersicht die vielfältigen Kombinationsmöglichkeiten bei zwei angeordneten Bürstenkörpern:

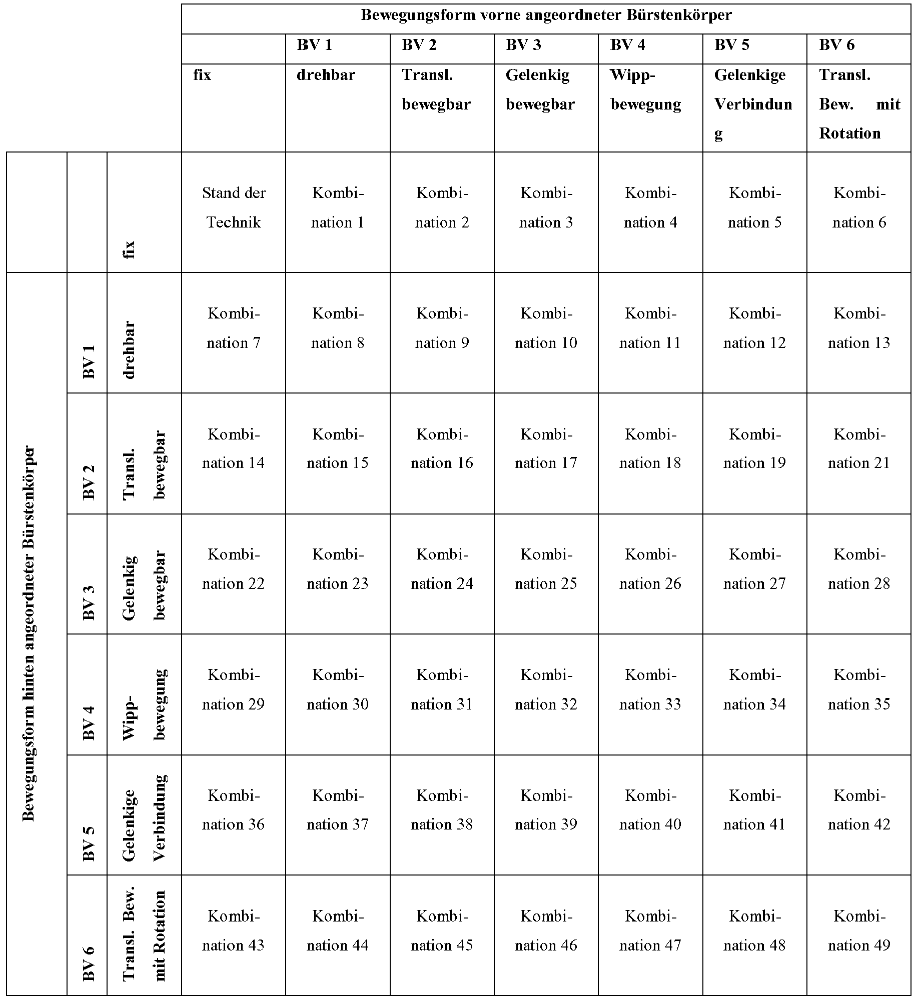

Der Begriff "BV" steht für Bewegungsvariante

Gemäss einer Kombination ist auf dem Bürstenkopf ein Bürstenkörper gemäss der ersten oder dritten Bewegungsvariante und ein Bürstenkörper der fix am Kopfteil befestigt ist hintereinander angeordnet (Kombination 1, Kombination 7).

Gemäss einer ersten Kombination sind auf dem Bürstenkopf ein Bürstenkörper gemäss der ersten oder dritten Bewegungsvariante und ein Bürstenkörper gemäss der zweiten Bewegungsvariante hintereinander angeordnet (entspricht der Kombination 15 oder der Kombination 17). Der erste Bürstenkörper ist vorne angeordnet. Der zweite Bürstenkörper ist hinten angeordnet.

So enthält die Zahnbürste z. B. einen, um eine geometrische Drehachse oder einen Drehpunkt innerhalb eines Dreh- oder Schwenkwinkels am Kopfteil dreh- oder schwenkbar gelagerten, ersten Bürstenkörper. Ein solcher Bürstenkörper wird bereits weiter oben beschrieben.

Ferner enthält die Zahnbürste einen entlang der Längsachse der Zahnbürste translatorisch bewegbaren, zweiten Bürstenkörper. Ein solcher Bürstenkörper wird bereits weiter oben beschrieben.

Ist der erste Bürstenkörper in Draufsicht rund ausgebildet, so kann der zweite Bürstenkörper zum ersten Bürstenkörper hin in Draufsicht eine U-förmige Ausnehmung enthalten. Die U-förmige Ausnehmung nimmt bei einer translatorischen Bewegung des zweiten Bürstenkörpers zum ersten Bürstenkörper hin den ersten Bürstenkörper wenigstens teilweise auf.

Die U-förmige Ausnehmung am zweiten Bürstenkörper kann mit Borsten eingefasst sein. Dadurch kann sichergestellt werden, dass bei einer translatorischen Bewegung des zweiten Bürstenkörpers vom ersten Bürstenkörper weg keine durchgängige Borstenlücke entsteht.

Gemäss einer zweiten Kombination sind die Bürstenkörper hintereinander angeordnet. So ist vorne und hinten auf dem Bürstenkopf je ein Bürstenkörper gemäss der zweiten Bewegungsvariante angeordnet. Dazwischen ist ein Bürstenkörper gemäss der ersten oder dritten Bewegungsvariante angeordnet.

Gemäss einer dritten Kombination sind die Bürstenkörper hintereinander angeordnet. So ist vorne und hinten auf dem Bürstenkopf je ein Bürstenkörper gemäss der ersten oder dritten Bewegungsvariante angeordnet. Dazwischen ist ein Bürstenkörper bewegungsfest am Kopfteil angeordnet.

Gemäss einer vierten Kombination sind auf dem Bürstenkopf zwei oder mehrere Bürstenkörper gemäss der ersten und/oder dritten Bewegungsvariante hintereinander angeordnet. Dies entspricht unter anderem der Kombination 8, Kombination 10, Kombination 23, oder Kombination 25.

Gemäss einer fünften Kombination sind auf dem Bürstenkopf zwei oder mehrere Bürstenkörper gemäss der zweiten Bewegungsvariante hintereinander angeordnet. Dies entspricht unter anderem der Kombination 16

Gemäss einer sechsten Kombination sind die Bürstenkörper hintereinander angeordnet. So ist auf dem Bürstenkopf vorne und hinten je ein Bürstenkörper gemäss der zweiten Bewegungsvariante angeordnet. Dazwischen ist ein Bürstenkörper bewegungsfest am Kopfteil angeordnet.

Gemäss einer siebten Kombination ist im Borstenfeld des Bürstenkopfes ein Bürstenkörper gemäss der vierten Bewegungsvariante angeordnet. Vor und hinter dem genannten Bürstenkörper können beweglich oder bewegungsfeste Bürstenkörper oder eine bewegungsfest mit dem Kopfteil verbundene Borstenanordnung vorgesehen sein. Die beweglichen Bürstenkörper können beispielsweise der ersten, zweiten oder dritten Bewegungsvariante entstammen.

Gemäss einer achten Kombination sind auf dem Bürstenkopf quer zur Längachse zwei Bürstenkörper gemäss der zweiten Bewegungsvariante nebeneinander angeordnet. Zwischen den beiden Bürstenkörpern ist ein Bürstenkörper der ersten und/oder dritten Bewegungsvariante angeordnet.

Gemäss einer weiteren Kombination sind auf dem Bürstenkopf quer zur Längsachse zwei Bürstenkörper gemäss der zweiten Bewegungsvariante nebeneinander angeordnet.

Gemäss einer weiteren Kombination sind auf dem Bürstenkopf quer zur Längachse zwei Bürstenkörper gemäss der zweiten Bewegungsvariante nebeneinander angeordnet. Zwischen den beiden Bürstenkörpern ist ein Borstenträger direkt am Kopfteil fixiert.

Gemäss einer neunten Kombination sind auf dem Bürstenkopf quer zur Längsachse ein Bürstenkörper gemäss der zweiten Bewegungsvariante und ein Bürstenkörper der gemäss ersten und/oder dritten Bewegungsvariante nebeneinander angeordnet.

Gemäss einer zehnten Kombination weist ein erster Bürstenkörper in Draufsicht eine Ausnehmung auf, in welcher ein zweiter Bürstenkörper angeordnet ist. Der erste Bürstenkörper umgibt den zweiten Bürstenkörper teilweise oder vollständig.

Die zehnte Kombination kann die nachfolgenden Unterkombinationen umfassen.

Gemäss einer ersten Unterkombination umgibt ein erster Bürstenkörper gemäss der vierten Bewegungsvariante einen zweiten Bürstenkörper gemäss der ersten und/oder dritten Bewegungsvariante.

Gemäss einer Gruppe von elften Unterkombinationen umgibt ein erster Bürstenkörper gemäss der zweiten Bewegungsvariante einen zweiten Bürstenkörper gemäss einer der nachfolgenden Bewegungsvarianten:
- ersten Bewegungsvariante;
- dritten Bewegungsvariante;
- vierten Bewegungsvariante;
- bewegungsfester Borstenkörper;
- zweiten Bewegungsvariante.

Die Bewegung zweier benachbarter Bürstenkörper kann zu einem Ineinandergreifen von Borstenfeldern führen. Dabei kann das Ineinandergreifen der Borstenfelder dazu führen, dass das eine Borstenfeld die Bewegung des anderen Borstenfelds blockiert, oder dass sich die Borstenfelder gegenseitig blockieren. Es kann auch vorgesehen sein, dass die Borstenfelder nicht blockiert jedoch in ihrer Bewegung eingeschränkt werden.

Dies kann beispielsweise bei einer Kombination mit einem Bürstenkörper der ersten Bewegungsvariante und einem Bürstenkörper der zweiten Bewegungsvariante geschehen. So kann das Borstenfeld des Bürstenkörpers der zweiten Bewegungsvariante in Richtung des anderen Borstenfeldes schräg gestellt sein. Wird nun dieser Bürstenkörper gegen den anderen Bürstenkörper bewegt, so fahren die Borstenfelder ineinander und hemmen sich gegenseitig.

Weiter können sich Bürstenkörper gegenseitig beispielsweise durch ihre Borstenträger blockieren. Durch die Formgebung der Borstenträger können sie ab einer gewissen Bewegungsposition in die Bewegung des anderen Bürstenkörpers eingreifen und diesen damit blockieren. Beispielsweise kann ein Bürstenkörper der ersten Bewegungsvariante von einem Bürstenkörper der zweiten Bewegungsvariante gehemmt werden, wenn diese einander berühren.

Die Bewegung zweier benachbarter Bürstenkörper kann auch zur Ausbildung einer Lücke zwischen zwei Borstenfeldern führen. Dabei kann auch über die Ausformung der Borstenträger und die Gestaltung der Borstenfelder in Bezug auf Länge und Orientierung der Reinigungsborsten und weiteren Funktionselemente erreicht werden, dass die Lücke möglichst klein gehalten oder sogar geschlossen wird.

Weitere mögliche Bewegungskombinationen sind die Überlagerung von gewissen Bewegungsvarianten auf Elementen anderer Bewegungsvarianten. Zum Beispiel:
- Ein Element der ersten Bewegungsvariante (Rotation) hat ein weiteres Element der ersten Bewegungsvariante (Rotation) im Bürstenkörper integriert.
- Ein Element der zweiten Bewegungsvariante (Translation) hat ein Element der ersten Bewegungsvariante (Rotation) direkt auf dem Bürstenkörper integriert. Dabei können auf dem integrierten Bürstenkörper der ersten Variante eines oder mehrere Reinigungselemente, wie Reinigungsborsten, oder zweite Funktionselemente integriert sein. Es können auch mehrere Bürstenkörper der zweiten Bewegungsvariante integriert sein.
- Ein Element der vierten Bewegungsvariante (Wippe) kann ein Element (oder auch mehrere Elemente) der ersten Bewegungsvariante (Rotation) integriert haben.
- Ein Element der vierten Bewegungsvariante (Wippe) kann ein Element (oder auch mehrere Elemente) der zweiten Bewegungsvariante integriert haben.

Die in der Übersicht gezeigten Kombinationsmöglichkeiten sind nicht alle im Detail beschrieben. Beschrieben sind vorgängig die einzelnen Bewegungsvarianten, jeweils einzeln. Die nicht im Detail ausgeführten Bewegungsvarianten gelten durch die Übersicht dennoch offenbart.

Gemäss einer Weiterbildung der Erfindung können die Zahnbürste und insbesondere der Bürstenkopf ein insbesondere wiederholt aufziehbares Federwerk oder einen aufziehbaren Gummimotor enthalten, welche mechanische Energie zum Antreiben der beweglichen Bürstenkörper speichern können. Insbesondere rotativ bewegte Bürstenkörper können durch ein solches Federwerk oder einen solchen Gummimotor während der Zahnreinigung angetrieben werden.

Es kann vorgesehen sein, dass Ausnehmungen im Kopfteil oder Borstenträger, in welchen sich Kopfteil und Borstenträger relativ zueinander bewegen, in allen Bewegungspositionen über Abdeckelemente abgedeckt sind, um eine Verletzung der Mundschleimhaut bzw. der Zunge während der Benutzung zu verhindern. Die Abdeckelemente können z. B. wie bereits erwähnt Verschlusselemente oder elastische Anformungen an den Ausnehmungen aus einer Weichkomponente sein, welche gegenüber dem sich in der Ausnehmung bewegenen Bauteil nachgiebig sind. Die Abdeckelemente können z. B. film- oder lamellenartig ausgestaltet sein.

Es können im Weiteren Mittel vorgesehen sein, welche bewirken, dass bei einer zu schnellen Bewegung von Bürstenkörper und Kopfteil relativ zueinander oder bei einer zu hohen Druckbeaufschlagung des Bürstenkopfes ein Warngeräusch erzeugt wird. Das Warngeräusch wird insbesondere durch eine mechanische Funktionalität hervorgerufen. Die mechanische Funktionalität besteht in der besonderen Auslegung der Teilegeometrie und der besonderen Materialwahl, so dass ein Geräusch erzeugt wird, wenn zwei Bauteile sich zu schnell relativ zueinander bewegen, oder wenn das eine Bauteil einen zu hohen Druck auf das andere Bauteil ausübt.

Das Kopfteil kann zwischen den Halterungen von zwei Bürstenkörpern einen flexiblen Abschnitt, z. B. aus einer Weichkomponente ausbilden. Der flexible Abschnitt erlaubt ein Biegen oder Tordieren des Kopfteils und entsprechend der beiden Bürstenkörper relativ zueinander. Dies kann zum Beispiel bei zuviel Druck auf den Bürstenkopf oder Teilen davon von Vorteil sein. Dabei würde beispielsweise der näher beim freien Ende des Bürstenkopfes liegende Bürstenkörper über das Kopfteil nachgiebig sein

Es können auch entsprechende Mittel vorgesehen sein, welche ein Wegkippen oder Wegknicken eines sich bewegenden Bürstenkörpers, z. B. eines rotierenden oder translatorisch bewegbaren Bürstenkörpers, bei zuviel Anpressdruck erlauben. Solche Mittel können Sollbruchstellen, Filmscharniere, insbesondere überspritzte Filmscharniere, flexible Abschnitte, z. B. aus einer Weichkomponente, im Kopfteil oder Bürstenkörper sein, welche erst bei einer Kraftüberschreitung nachgeben und ein Wegknicken oder Wegkippen des Bürstenkörpers bewirken.

Weiter ist es möglich am Kopfteil Mittel anzubringen, die eine Fixiermöglichkeit bieten und die Flexibilität so unterbinden. Diese Mittel können ähnlich ausgestaltet sein wie die Fixierelemente für die Bürstenkörper.

Der Bürstenkopf kann ein Rückstellorgan zur Rückstellung des Bürstenkörpers z. B. aus einer rotativen, translatorischen oder wippenden Auslenkung in seine Ausgangsposition, enthalten.

Das Rückstellorgan weist insbesondere elastische, wie gummielastische Eigenschaften auf. Das Rückstellorgan kann aus einer Weichkomponente bestehen. So führt insbesondere eine elastische Deformation des Rückstellorgans zu einem Rückstelleffekt. Die Rückstelleigenschaften des Rückstellorgans können sich aus der Formgebung und/oder dem Werkstoff ergeben.

Das Rückstellorgan kann aus einer Hartkomponente oder einer Kombination aus einer Hart- und Weichkomponente realisiert sein. Die Rückstelleigenschaften werden hierbei aus der Formgebung erhalten.

Das Rückstellorgan kann am Kopfteil angeordnet sein. Gemäss dieser Ausführungsform kommt der sich bewegende Bürstenkörper am Rückstellorgan in Anschlag, wodurch eine Verformungskraft auf das Rückstellorgan ausgeübt wird.

Das Rückstellorgan kann auch am Bürstenkörper angeordnet sein. Gemäss dieser Ausführungsform kommt das sich mit dem Bürstenkörper bewegende Rückstellorgan mit einem Element des Kopfteils oder einem anderen Bürstenkörper in Anschlag, wodurch eine Verformungskraft auf das Rückstellorgan ausgeübt wird.

Das Rückstellorgan kann auch als Verbindungselement ausgebildet sein, welches den Bürstenkörper mit dem Kopfteil oder mit einem weiteren Bürstenkörper verbindet. Durch die Bewegung des Bürstenkörpers wird eine Verformungskraft auf das Rückstellorgan ausgeübt.

Das Rückstellorgan verformt sich durch die Verformungskraft elastisch. Dies führt zum Aufbau einer Rückstellkraft auf den Bürstenkörper, die in einer Rückformung des Rückstellorgans und einer Rückstellung des Rückstellorgans führt.

Das Rückstellorgan kann z. B. zwischen zwei Bürstenkörpern angeordnet sein. Das Rückstellorgan kann auch in der Führungsöffnung einer Schlittenführung angeordnet sein und durch das sich in der Führungsöffnung bewegende Führungselement elastisch verformt werden.

Das Rückstellorgan kann ein Element mit Faltenstruktur sein. Die Faltenstruktur kann insbesondere zick-zack-förmig, schlangen- bzw. mäanderförmig sein. Das Rückstellorgan kann ein ringförmiges Element sein. Das Rückstellelement kann länglich sein. Das Rückstellelement kann bandförmig flach ausgebildet sein. Das Rückstellelement kann gerade ausgebildet sein oder eine Biegung aufweisen.

Das Rückstellorgan kann insbesondere als Wölbelement ausgebildet und derart angeordnet sein, dass sich dieses bei einer Stauchung unter Aufbau einer Rückstellkraft durch elastische Verformung aufwölbt. Das Aufwölben erfolgt insbesondere zur Zahnreinigungsseite hin. Auf dem gewölbten Abschnitt können Funktionselemente, wie Noppen, Lamellen, Prophy Cups, oder sogar Reinigungsborsten enthalten sein, welche durch das Wölben des Rückstellelementes vorgeschoben, insbesondere zur Zahnreinigungsseite hin vorgeschoben werden. So eignet sich ein ringförmiges Element, allgemein ein biegbares Element, insbesondere ein band- bzw. wandförmig, flaches Element als Wölbelement.

Das Wölbelement ist so ausgestaltet, dass zumindest eine Seite an einem beweglichen Bürstenkörper fixiert ist. Die weitere Seite kann an einem beweglichen oder fixen Bürstenkörper fixiert werden. Beispielhafte Ausführungen sind:
- Ein Ende des Wölbelements ist am Kopfteil fixiert das andere am translatorischen Schlitten der zweiten Bewegungsvariante. Durch die Schlittenbewegung relativ zur Befestigungsstelle am Kopfteil wird das Element gewölbt.
- Beide Enden des Wölbelements sind jeweils an einem translatorischen Schlitten der zweiten Bewegungsvariante fixiert. Bewegen sich die beiden Schlitten relativ zueinander, so wird das Element gewölbt.

Diese Ausgestaltung bringt weiter mit sich, dass das Wölbelement gleichzeitig auch ein Rückstellelement ist, welches aus der deformierten Lage wieder in die Ausgangslage bzw. Ruhelage übergehen will. Die Ausgangslage bzw. Ruhelage kann jeweils die gewölbte oder die weniger bzw. nicht gewölbte Position sein.

Das Rückstellorgan kann gemäss einer weiteren Ausführungsform wenigstens ein seitlich vom Bürstenkörper am Kopfteil angeordnetes Rückstellelement umfassen. Das Rückstellelement ist derart vom Kopfteil abstehend, dass dieses bei der Bewegung des Bürstenkörpers über einen Mitnahmekontakt mit dem Bürstenkörper komprimiert und/oder ausgelenkt wird. Durch die Komprimierung bzw. Auslenkung des Rückstellelementes wird dieses elastisch verformt. Das Rückstellelement kann länglich sein und zum Beispiel als Funktionselement, wie Lamelle oder Reinigungsborste, ausgebildet sein. Das Rückstellelement kann zusätzlich die Funktion einer Reinigungsborste aufweisen oder mit Reinigungsborsten bestückt sein. Das Rückstellelement kann insbesondere zur Vorderseite hin ausgerichtet sein. Das Rückstellorgan kann eine Mehrzahl von solchen Rückstellelementen umfassen. Die Rückstellelemente sind entlang der Längsachse insbesondere seitlich vom Bürstenkörper hintereinander angeordnet.

Das Rückstellelement ist insbesondere in einer seitlichen Einbuchtung im Bürstenkörper bzw. Borstenträger, welche durch seitliche Vorsprünge bzw. Ausbuchtungen begrenzt wird, angeordnet.

Der Bürstenkopf kann ein oder mehrere Dämpfungsorgane enthalten. Das Dämpfungsorgan weist insbesondere elastische, wie gummielastische Eigenschaften auf. Das Dämpfungsorgan ist insbesondere aus einer Weichkomponente. So führt insbesondere eine elastische Deformation des Dämpfungsorgans zu einer Dämpfung eines Bürstenkörpers. Die Dämpfeigenschaften des Dämpfungsorgans können sich aus der Formgebung und/oder dem Werkstoff ergeben. Das Dämpfungsorgan kann am Kopfteil oder am Bürstenkörper angeordnet sein.

So kann zwischen einem ersten und zweiten Bürstenkörper ein Dämpfungsorgan angeordnet sein. Das Dämpfungsorgan dient dazu, die Bewegung des Bürstenkörpers zu dämpfen.

Im Weiteren kann in der Führungsöffnung einer Schlittenführung in Bewegungsrichtung betrachtet an einem oder beiden der Endabschnitte ein Dämpfungselement angeordnet sein. Das in der Führungsöffnung bewegte Führungselement schlägt vor einem Richtungswechsel jeweils am Dämpfungselement an, so dass die Bewegung des Bürstenkörpers über das Dämpfungselement gedämpft wird. Es kann auch vorgesehen sein, dass die Innenwände der Führungsöffnung mindestens teilweise mit einer Weichkomponente mit Dämpfungseigenschaften ausgestaltet sind. Dabei ist es auch möglich dämpfende und nicht dämpfende Stellen abwechselnd anzuordnen.

Generell können Dämpfungselemente im Endbereich von Führungen angeordnet werden.

Weiter ist auch die umgekehrte Realisierung denkbar, nämlich, dass die Dämpfungselemente am Führungselement angeordnet sind. Die Dämpfungselemente liegen so beispielsweise permanent oder durch die Bewegung temporär einer Oberfläche des Kopfteils, insbesondere im Führungsschlitz, an, wodurch eine Dämpfung erzielt wird.

Ist die Bewegung des Bürstenkörpers rotativ, so kann das Dämpfungselement als Anschlag ausgestaltet sein, an welchem der rotierende Bürstenkörper anschlägt. Der Bürstenkörper kann hierzu einen Kontaktabschnitt ausbilden, welcher mit dem Dämpfungselement in Anschlag kommt. Dabei ist es möglich, dass das Dämpfungselement am Endprodukt sichtbar oder unsichtbar ist. Bei der Realisierung eines sichtbaren Dämpfungselements wird dieses auf der Aussenseite des Bürstenkörpers/Kopfteils angeordnet. Bei der Realisierung eines von aussen nicht sichtbaren Dämpfungselements wird dieses beispielsweise im Führungsschlitz oder in der Aufnahmeöffnung angeordnet.

Es kann auch vorgesehen sein, dass ein oben beschriebenes Rückstellorgan die Funktion eines Dämpfungsorgans ausübt.

Am Dämpfungsorgan können Funktionselemente der bereits weiter oben ausführlich beschriebenen Art angeformt sein, wie beispielsweise Reinigungsborsten oder Zungenreiniger aus einer Weichkomponente. Das Dämpfungsorgan erhält dadurch eine Doppelfunktion.

Der Bürstenkopf kann ein von Hand betätigbares Fixierorgan enthalten, welches zwischen wenigstens einer ersten und einer zweiten Position verschiebbar ist. Das Fixierorgan kann in einer ersten Position eine Fixierstellung einnehmen, welches die Bewegung des Bürstenkörpers blockiert oder einschränkt, so dass dieser unbewegbar oder nur noch beschränkt bewegbar ist. Die eingeschränkte Bewegung kann insbesondere eine Beschränkung des Bewegungsweges des Bürstenkörpers sein, so dass nur Teilbewegungen ausgeführt werden können. So kann über das Fixierelement z. B. der Drehwinkel reduziert oder der Translationsweg verkürzt oder vollständig aufgehoben werden oder die Wippbewegung eingeschränkt oder vollständig verhindert werden.

Das Fixierorgan kann in einer zweiten Position eine Offenstellung einnehmen, welche die (vollständige) Bewegung des Bürstenkörpers ermöglicht.

Durch die Blockierung oder Einschränkung der Bewegung kann zum Beispiel zwischen einer normalen und einer sensitiven Zahnreinigung, wie sie bei Benutzern mit empfindlichem Zahnfleisch oder empfindlichen Zahnhälsen notwendig ist, gewechselt werden.

Das Fixierorgan greift in der Fixierstellung insbesondere in den Bewegungsraum des Bürstenkörpers ein. Das Fixierorgan kann am Kopfteil angeordnet sein. Das Fixierorgan kann insbesondere ein Schieberelement sein, welches entlang einer Führung aus der Offen- in eine Fixierstellung und umgekehrt verschiebbar ist.

So kann das Fixierorgan in einer Durchgangsöffnung im Kopfteil verschiebbar geführt sein. In der Fixierstellung ragt das Fixierorgan auf der Zahnreinigungsseite aus dem Kopfteil heraus. In der Offenstellung ist das Fixierorgan in Richtung Kopfteil zurückversetzt.

Gemäss einer Weiterbildung des Fixierorgans kann dieses so ausgelegt sein, dass dieses mehrstufig funktioniert und beispielsweise drei Stufen von Einschränkungen der Bewegung einnehmen kann: keine Einschränkung der Bewegung, teilweise Einschränkung der Bewegung und komplette Einschränkung der Bewegung/Fixierung des Bürstenkörpers. In der gleichen Art und Weise kann das Fixierorgan auch so ausgestaltet sein, dass dieses, wenn mehrere Bürstenkörper vorhanden sind jeweils nur den einen oder beide Bürstenkörper in ihrer Bewegung einschränkt.

Das Fixierelement kann als reversibel verwendbares Element oder als irreversibel verwendbares Element gestaltet sein. Im reversiblen Fall kann das Element immer wieder zwischen den verschiedenen Positionen hin und her gewechselt werden. Im irreversiblen Fall wird einmalig eine Einstellung, z. B. die Fixierung oder die Bewegbarkeit, gewählt. Die gewählte Einstellung kann dann nicht mehr rückgängig gemacht werden. Dies kann beispielsweise für die einmalige kundenspezifische Konfiguration der Zahnbürste Einsatz finden. Der Kunde definiert nach dem Kauf die Bewegungsmöglichkeit.

Bezüglich die Ausgestaltung des Fixierelements sind verschiedene Möglichkeiten denkbar. Das Fixierelement kann beispielsweise unter einer Schicht aus Weichmaterial verborgen angeordnet sein. Auf diese Weise sind keine offenen Geometrien des Fixierelementes sichtbar. Das Fixierelement kann ein Montageteil sein, welches direkt mit dem Grundkörper, insbesondere dem Kopfteil verbunden ist. Das Fixierelement kann auch ausgelegt sein, für jede Verwendung neu montiert zu werden. Das Fixierelement kann z.B. eine Klammer oder ein Füllelement sein. Das Fixierelement kann auch direkt an den Grundkörper angespritzt sein. Das Fixierelement kann insbesondere über ein Filmscharnier mehrere Positionen einnehmen. Dabei ist es möglich, dass jede Position mit einem Nocken versehen ist, wobei das Fixierelement eine Ausnehmung enthält und die Fixierung über das Zusammenbringen von Nocke und Ausnehmung geschieht. Eine umgekehrte Anordnung ist ebenfalls denkbar.

Gemäss einer Weiterbildung der Erfindung kann am Bürstenkörper wenigstens ein Funktionselement, z. B. zur Reinigung oder zur Massage, angeordnet sein, welches durch ein sich bewegender Bürstenkörper von einer Passivposition in eine Funktionsposition bewegt wird. So kann das wenigstens eine Funktionselement z. B. durch die Bewegung des Bürstenkörpers herausgefahren oder herausgedrückt werden.

Das wenigstens eine Funktionselement kann insbesondere zur Seite ein- oder ausfahrbar sein. Das wenigstens eine Funktionselement kann eine Noppe, ein Prophy Cup, eine Lamelle oder eine Borste sein.

Die bereits weiter oben erwähnten Verschlusselemente sind bei den verschiedenen Bewegungsvarianten direkt angeführt als Element für das rückseitige oder seitliche Verschliessen von Öffnungen. Verschlusselemente können auch auf der Vorderseite des Kopfteils angeordnet sein, um allfällige Öffnungen zu verschliessen. Es besteht wiederum die Möglichkeit das Verschlusselement über eine Formschlussverbindung, wie Schnapp-Klickverbindung, als Montageteil einzufügen. Das Verschlusselement kann auch im Spritzgiessverfahren angespritzt sein. Das Verschlusselement kann aus einer Hart- oder Weichkomponente geformt sein.

Das Verschlusselement kann mit dem Bürstenkörper verbunden sein. Das Verschlusselement kann mit dem Kopfteil verbunden sein.

Das Verschlusselement kann auf seiner nach aussen weisenden Oberfläche mit Funktionselementen wie beispielsweise einer oder mehreren Reinigungsborsten ausgestattet sein.

Die im Rahmen dieser Erfindung erwähnte Hartkomponente ist ein Kunststoff, insbesondere ein thermoplastischer Kunststoff. Die Hartkomponente zeichnet sich durch eine vergleichsweise hohe Biegesteifigkeit aus. Sie gibt dem Körper Stabilität.

Als Hartkomponenten lassen sich verschiedene thermoplastische Kunststoff einsetzen. So eignen sich insbesondere folgende thermoplastische Kunststoff als Hartkomponenten:
- Styrolpolymerisate wie Styrolacrylnitril (SAN), Polystyrol (PS), Acrylnitrylbutadienstyrol (ABS), Styrolmethylmethacrylate (SMMA) oder Styrolbutadien (SB);
- Polyolefine wie Polypropylen (PP) oder Polyethylen (PE), beispielsweise auch in den Formen high density Polyethylen (HDPE) oder low density Polyethylen (LDPE);
- Polyester wie Polyethylenterephtalat (PET) in Form von säuremodifiziertem Polyethylenterephtalat (PETA) oder glykolmodifiziertem Polyethylenterephtalat (PETG), Polybutylenterephthalat (PBT), säuremodifiziertes Polycyclohexylenedimethyleneterephthalate (PCT-A) oder glykolmodifiziertes Polycyclohexylenedimethyleneterephthalate (PCT-G);
- Cellulosederivate wie Celluloseacetat (CA), Celluloseacetobutyrat (CAB), Cellulosepropionat (CP), Celluloseacetatphtalat (CAP) oder Cellulosebutyrat (CB);
- Polyamide (PA) wie PA 6.6, PA 6.10 oder PA 6.12;
- Polymethylmethacrylat (PMMA);
- Polycarbonat (PC);
- Polyoxymethylen (POM);
- Polyvinylchlorid (PVC);
- Polyurethan (PUR)

Besonders bevorzugt wird jedoch ein Polypropylen (PP) oder ein säuremodifiziertes Polycyclohexylenedimethyleneterephthalate (PCT-A), als Hartkomponente eingesetzt. PCT-A eignet sich insbesondere aufgrund seiner exzellenten transparenten Eigenschaften besonders gut als erste Materialkomponente, welche bekanntlich den Mantelkörper ausbildet. Die Hartkomponente aus PP weist bevorzugt ein E-Modul von 1000 - 2400 N/mm², vorzugsweise vom 1300 bis 1800 N/mm² auf.

Die im Rahmen dieser Erfindung erwähnte Weichkomponente ist ein Kunststoff, insbesondere ein thermoplastischer Kunststoff. Die Weichkomponente kann insbesondere ein thermoplastisches Elastomer sein. Die Weichkomponente zeichnet sich durch seine weichelastischen Eigenschaften aus.

Als Weichkomponenten lassen sich verschiedene thermoplastische Elastomere (TPE's) einsetzen. So eignen sich insbesondere folgende thermoplastische Elastomere als Weichkomponenten:
- Thermoplastische Polyurethan-Elastomere (TPE-U)
- Thermoplastische Styrol-Elastomere (TPE-S) wie beispielsweise ein Styrol-Ethylen-Butylen-Styrol-Copolymer (SEBS) oder Styrol-Butadien-Styrol-Copolymer (SBS)
- Thermoplastische Polyamid-Elastomere (TPE-A)
- Thermoplastische Polyolefin-Elastomere (TPE-O)
- Thermoplastische Polyester-Elastomere (TPE-E)

Als Weichkomponente wird bevorzugt ein TPE-S eingesetzt. Im Weiteren können die Thermoplaste Polyethylen (PE) und Polyurethan (PU) sowohl als Hartkomponente als auch als Weichkomponente eingesetzt werden. Die Shore A Härten der Weichkomponente liegen vorzugsweise unter 90 Shore A.

Die erste und zweite Materialkomponente und insbesondere die Weichkomponenten und die Hartkomponente bilden im Spritzgussverfahren vorzugsweise einen Materialschluss aus. Je nach Wahl der Materialkomponenten und Verfahrensparametern ist es aber auch denkbar, dass es zu keinem Materialschluss, sondern zu einem Formschluss kommt. Bereiche mit Material- und Formschluss können sich abwechseln.

Die Erfindung betrifft auch ein Verfahren zur Herstellung einer oben beschriebenen Zahnbürste. Erfindungsgemäss wird der Grundkörper in einem Spritzgiessverfahren. hergestellt. Der Borstenträger des Bürstenkörpers kann ebenfalls in einem Spritzgiessverfahren hergestellt werden. Borstenträger, gegebenenfalls der ganze Bürstenkörper zusammen mit den Reinigungsborsten, und Grundkörper können in einem gemeinsamen Spritzgiessverfahren hergestellt werden.

Bei der Herstellung der Zahnbürste können zwischen Kopfteil und Bürstenkörper, insbesondere Borstenträger, Verbindungsabschnitte mit Sollbruchstellen vorgesehen sein, welche bezwecken, dass die Bewegbarkeit des Bürstenkörpers relativ zum Kopfteil erst beim Brechen des Verbindungsabschnittes entlang der Sollbruchstelle erreicht wird.

Selbstverständlich können gewisse Bauteile wie Grundkörper, Borstenträger bzw. Bürstenkörper in separaten Verfahrensschritten herstellt und in einem nachfolgenden Schritt montiert werden.

Bürstenkörper, welche beispielsweise über Verbindungsabschnitte aus Weichmaterial miteinander verbunden sind, werden insbesondere im selben Spritzgiessvorgang hergestellt und im Anschluss gemeinsam auf das Kopfteil montiert.

Im Spritzgiessverfahren ist es möglich, dass beispielsweise an mehreren Bereichen auf dem gespritzten Bürstenkörper aus einer Hartkomponente Abschnitte aus einer Weichkomponente gespritzt werden. Dabei können diese Bereiche materiell miteinander verbunden sein und so durch einen gemeinsamen Anspritzpunkt gespritzt werden. Andererseits können diese Bereiche auch isoliert angeordnet sein und jeweils über einen separaten Anspritzpunkt gespritzt werden.

Das Spritzgiessverfahren erlaubt insbesondere auch Übergangsstellen an den spritzgegossenen Bürstenkörpern mit Weichmaterial zu überdecken.

Die Montage der Bürstenkörper am Kopfteil kann vor oder nach dem Beborstungsprozess passieren. Die Montage erfolgt insbesondere vor dem Verpacken der Zahnbürste. Die Montage der Bürstenkörper kann auch direkt im Rahmen des Verpackungsprozesses jedoch vor dem eigentlichen Verpacken geschehen.

Die Beborstung der Bürstenkörper bzw. Borstenträger geschieht im so genannten Beborstungsprozess. Der Bürstenkörper kann zu diesem Zeitpunkt bereits auf dem Kopfteil montiert oder noch nicht montiert sein. In beiden Fällen muss sichergestellt werden, dass der Bürstenkörper in einer klar definierten Position ist und dass der Bürstenkörper korrekt gestützt ist, damit dieser während des Beborstungsprozesses nicht beschädigt wird.

Wird der Bürstenkörper vor der Montage beborstet, so müssen die verschiedenen Schnittstellenstrukturen ausreichend gestützt sein. Eine Schädigung dieser Schnittstellenstrukturen ist zu vermeiden, da ansonsten die Verbindung nicht mehr optimal wäre.

Die Montage von bereits mit einer Beborstung versehenen Bürstenkörpern muss ebenfalls sorgfältig passieren, damit die Beborstung nicht beschädigt wird. Der Borstenträger muss in diesem Fall so ausgelegt sein, dass die allfällige mechanische Belastung durch die Montage keine Schädigung der Beborstungsschnittstelle zur Folge hat. Dies könnte allenfalls ein Ausfallen von Borsten zur Folge haben.

Der bewegliche Bürstenkörper kann als Austauschkomponente ausgelegt sein. Das heisst, der Bürstenkörper kann bei Verschleiss oder für unterschiedliche Pflegeschritte ausgetauscht werden. Beispielsweise können unterschiedliche Konfigurationen von Reinigungsborsten auf verschiedenen Bürstenkörpern realisiert sein. Der Benutzer entscheidet dann selbst durch die entsprechende Wahl des Bürstenkörpers, welche Konfiguration er benutzen möchte.

Ist der Bürstenkörper nicht für den Austausch vorgesehen, so ist die Verbindung zwischen Kopfteil und dem jeweiligen Bürstenkörper so ausgelegt, dass das Abzugsgewicht für das Abreissen des Bürstenkörpers vom Kopfteil beispielsweise mindestens 12 kg, insbesondere mindestens 15 kg beträgt.

Der Bürstenkopf mit den mindestens zwei beweglichen Bürstenkörpern führt zu einer optimierten Reinigungswirkung. So führt eine kombinierte Bewegung von Bürstenkörper und Bürstenkopf zu einer höheren Reinigungsleistung, da die Reinigungsborsten durch die kombinierte Bewegung Zahnzwischenräume und andere schwer zugängliche Stellen besser erreichen.

Ferner erlaubt ein solcher Bürstenkopf auch eine schonende Zahnreinigung. So entsteht jeweils insbesondere beim Aufsetzen des Bürstenkopfes zu Beginn der Zahnreinigung ein grosser Anpressdruck, welcher Zähne und Zahnfleisch beanspruchen. Kann nun der Bürstenkörper beim Aufsetzen des Bürstenkopfes auf die Zähne durch eine translatorische oder rotative Bewegung oder einer Kombination davon nachgeben bzw. ausweichen, so ist der Aufsetzdruck verringert und die Belastung der Zähne und des Zahnfleisches dadurch reduziert.

Im Folgenden wird der Erfindungsgegenstand anhand von bevorzugten Ausführungsformen, welche in den beiliegenden Zeichnungen dargestellt sind, näher erläutert. Es zeigen jeweils schematisch:
- Figur 1a:: eine Seitenansicht des Bürstenkopfes einer erfindungsgemässen Zahnbürste gemäss einer ersten Ausführungsvariante;
- Figur 1b:: eine Draufsicht des Bürstenkopfes gemäss Figur 1a;
- Figur 1c:: eine Rückseitenansicht des Bürstenkopfes gemäss Figur 1a und 1b;
- Figur 1d:: einen Längsschnitt durch den Bürstenkopf gemäss Figur 1c entlang der Linie A-A;
- Figur 2a:: eine Seitenansicht des Bürstenkopfes einer erfindungsgemässen Zahnbürste gemäss einer zweiten Ausführungsvariante;
- Figur 2b:: eine Draufsicht des Bürstenkopfes gemäss Figur 2a;
- Figur 2c:: eine Rückseitenansicht des Bürstenkopfes gemäss Figur 2a und 2b;
- Figur 2d:: einen Längsschnitt durch den Bürstenkopf gemäss Figur 2c entlang der Linie A-A;
- Figur 3a:: eine Seitenansicht des Bürstenkopfes einer erfindungsgemässen Zahnbürste gemäss einer dritten Ausführungsvariante;
- Figur 3b:: eine Draufsicht des Bürstenkopfes gemäss Figur 3a;
- Figur 3c:: eine Rückseitenansicht des Bürstenkopfes gemäss Figur 3a und 3b;
- Figur 3d:: einen Längsschnitt durch den Bürstenkopf gemäss Figur 3c entlang der Linie A-A;
- Figur 3e:: einen Querschnitt durch den Bürstenkopf gemäss Figur 3c entlang der Linie B-B;
- Figur 3f:: einen Querschnitt durch den Bürstenkopf gemäss Figur 3c entlang der Linie C-C;
- Figur 4a:: eine Seitenansicht des Bürstenkopfes einer erfindungsgemässen Zahnbürste gemäss einer vierten Ausführungsvariante;
- Figur 4b:: eine Draufsicht des Bürstenkopfes gemäss Figur 4a;
- Figur 4c:: eine Rückseitenansicht des Bürstenkopfes gemäss Figur 4a und 4b;
- Figur 4d:: einen Längsschnitt durch den Bürstenkopf gemäss Figur 4c entlang der Linie A-A;
- Figur 4e:: einen Querschnitt durch den Bürstenkopf gemäss Figur 4c entlang der Linie B-B;
- Figur 4f:: einen Querschnitt durch den Bürstenkopf gemäss Figur 4c entlang der Linie C - C;
- Figur 5a:: eine Rückseitenansicht des Bürstenkopfes einer erfindungsgemässen Zahnbürste gemäss einer fünften Ausführungsvariante;
- Figur 5b:: einen Längsschnitt durch den Bürstenkopf gemäss Figur 5a entlang der Linie A-A;
- Figur 5c:: eine Rückseitenansicht gemäss Figur 5a mit seitlich links ausgelenktem Bürstenkörper;
- Figur 5d:: eine Rückseitenansicht gemäss Figur 5a mit seitlich rechts ausgelenktem Bürstenkörper;
- Figur 5e:: eine Draufsicht des Bürstenkopfes gemäss den Figuren 5a - 5d ohne Bürstenkörper;
- Figur 5f:: einen Querschnitt durch den Bürstenkopf gemäss Figur 4c entlang der Linie B-B;
- Figur 5g:: einen Querschnitt durch den Bürstenkopf gemäss Figur 4c entlang der Linie C-C;
- Figur 5h:: einen Querschnitt durch den Bürstenkopf gemäss Figur 4c entlang der Linie D-D;
- Figur 6a:: eine Seitenansicht des Bürstenkopfes einer erfindungsgemässen Zahnbürste gemäss einer sechsten Ausführungsvariante;
- Figur 6b:: eine Draufsicht des Bürstenkopfes gemäss Figur 6a;
- Figur 6c:: einen Längsschnitt durch den Bürstenkopf gemäss Figur 6d entlang der Linie A-A mit dem Bürstenkörper in einer alternativen Bewegungsposition;
- Figur 6d:: einen Längsschnitt durch den Bürstenkopf gemäss Figur 6b entlang der Linie A-A;
- Figur 7a:: eine Seitenansicht des Bürstenkopfes einer erfindungsgemässen Zahnbürste gemäss einer siebten Ausführungsvariante;
- Figur 7b:: eine Draufsicht des Bürstenkopfes gemäss Figur 7a;
- Figur 7c:: eine Rückseitenansicht des Bürstenkopfes gemäss Figur 7a und 7b;
- Figur 7d:: einen Querschnitt durch den Bürstenkopfes gemäss Figur 7c entlang der Linie A-A;
- Figur 8a:: eine Seitenansicht des Bürstenkopfes einer erfindungsgemässen Zahnbürste gemäss einer achten Ausführungsvariante;
- Figur 8b:: eine Draufsicht des Bürstenkopfes gemäss Figur 8a;
- Figur 8c:: eine Rückseitenansicht des Bürstenkopfes gemäss Figur 8a und 8b;
- Figur 8d:: einen Querschnitt durch den Bürstenkopf gemäss Figur 8c entlang der Linie A-A;
- Figur 9:: eine Draufsicht eines in einem Führungsschlitz geführten Führungselementes des Bürstenkörpers gemäss einer ersten Art;
- Figur 10:: eine Draufsicht eines in einem Führungsschlitz geführten Führungselementes des Bürstenkörpers gemäss einer zweiten Art;
- Figur 11a:: eine Draufsicht des Bürstenkopfes einer erfindungsgemässen Zahnbürste gemäss einer neunten Ausführungsvariante mit einem Bürstenkörper in einer ersten Bewegungsposition;
- Figur 11b:: eine Draufsicht des Bürstenkopfes gemäss Figur 11a mit dem Bürstenkörper in einer zweiten Bewegungsposition;
- Figur 12a:: eine Draufsicht des Bürstenkopfes einer erfindungsgemässen Zahnbürste gemäss einer zehnten Ausführungsvariante mit einem Bürstenkörper in einer ersten Bewegungsposition;
- Figur 12b:: eine Draufsicht des Bürstenkopfes gemäss Figur 11a mit dem Bürstenkörper in einer zweiten Bewegungsposition;
- Figur 12c:: eine Draufsicht des Bürstenkopfes gemäss Figur 11a mit dem Bürstenkörper in einer dritten Bewegungsposition;
- Figur 13a:: eine Draufsicht des Bürstenkopfes einer erfindungsgemässen Zahnbürste gemäss einer elften Ausführungsvariante mit einem Bürstenkörper in einer ersten Bewegungsposition;
- Figur 13b:: einen Querschnitt durch den Bürstenkopf gemäss Figur 13a entlang der Linie A-A;
- Figur 13c:: eine Draufsicht des Bürstenkopfes einer erfindungsgemässen Zahnbürste gemäss den Figuren 13a, und 13b mit dem Bürstenkörper in einer zweiten Bewegungsposition;
- Figur 13d:: einen Querschnitt durch den Bürstenkopf gemäss Figur 13c entlang der Linie A-A;
- Figur 14a:: eine Draufsicht des Bürstenkopfes einer erfindungsgemässen Zahnbürste gemäss einer zwölften Ausführungsvariante mit einem Bürstenkörper in einer ersten Bewegungsposition;
- Figur 14b:: einen Querschnitt durch den Bürstenkopf gemäss Figur 14a entlang der Linie A-A;
- Figur 14c:: einen Querschnitt durch den Bürstenkopf gemäss Figur 14b mit dem Bürstenkörper in einer zweiten Bewegungsposition;
- Figur 15a:: eine Seitenansicht des Bürstenkopfes einer erfindungsgemässen Zahnbürste gemäss einer dreizehnten Ausführungsvariante;
- Figur 15b:: einen Längsschnitt durch den Bürstenkopf gemäss Figur 15c entlang der Linie A-A;
- Figur 15c:: eine Draufsicht des Bürstenkopfes gemäss Figur 15a und 15b mit den Bürstenkörpern in einer ersten Bewegungsposition;
- Figur 15d:: eine Draufsicht des Bürstenkopfes gemäss Figur 15a und 15b mit den Bürstenkörpern in einer zweiten Bewegungsposition;
- Figur 15e:: eine Draufsicht des Bürstenkopfes gemäss Figur 15a und 15b mit den Bürstenkörpern in einer dritten Bewegungsposition;
- Figur 16a:: eine Draufsicht des Bürstenkopfes einer erfindungsgemässen Zahnbürste gemäss einer vierzehnten Ausführungsvariante mit dem Bürstenkörper in einer ersten Bewegungsposition;
- Figur 16b:: eine Seitenansicht des Bürstenkopfes gemäss Figur 16a;
- Figur 16c:: eine Draufsicht des Bürstenkopfes gemäss Figur 16a mit dem Bürstenkörper in einer zweiten Bewegungsposition;
- Figur 16d:: eine Seitenansicht des Bürstenkopfes gemäss Figur 16c;
- Figur 16e:: eine Draufsicht des Bürstenkopfes gemäss Figur 16a mit dem Bürstenkörper in einer dritten Bewegungsposition;
- Figur 16f:: eine Seitenansicht des Bürstenkopfes gemäss Figur 16e
- Figur 16g:: eine Draufsicht der Zahnbürste mit dem Bürstenkopf gemäss Figur 16e mit dem Bürstenkörper in der dritten Bewegungsposition;
- Figur 16h:: eine Seitenansicht der Zahnbürste gemäss Figur 16g
- Figur 17a: eine Seitenansicht des Bürstenkopfes einer erfindungsgemässen Zahnbürste gemäss einer weiteren Ausführungsvariante;
- Figur 17b: eine Draufsicht des Bürstenkopfes gemäss Figur 17a;
- Figur 17c: eine Rückseitenansicht des Bürstenkopfes gemäss Figur 17a und 17b;
- Figur 17d: einen Längsschnitt durch den Bürstenkopf gemäss Figur 17c entlang der Linie A-A;
- Figur 18: ein Querschnitt einer Ausgestaltungsvariante zur Anbringung des Borstenfeldes für einen Bürstenkörper gemäss Fig. 1d.

Grundsätzlich sind in den Figuren gleiche Teile mit gleichen Bezugszeichen versehen. Für das Verständnis der Erfindung sind gewisse Merkmale in den Figuren nicht dargestellt. Die beschriebenen Ausführungsbeispiele stehen beispielhaft für den Erfindungsgegenstand oder dienen seiner Erläuterung und haben keine beschränkende Wirkung.

In den nachfolgenden Figuren werden unter anderem jeweils Paarungen von bewegbaren Bürstenkörpern auf einem gemeinsamen Kopfteil gezeigt. Die einzelnen Bürstenkörper und die dazugehörigen Bewegungsmechanismen im Zusammenwirken mit dem Kopfteil sollen jedoch auch als unabhängige Offenbarungen betrachtet werden, insbesondere wenn die Paarungen von Bürstenkörpern keine gekoppelten Bewegungen umfassen. Gleichermassen sollen gezeigte Rückstellorgane und Dämpfungselemente als unabhängige Offenbarungen betrachtet werden.

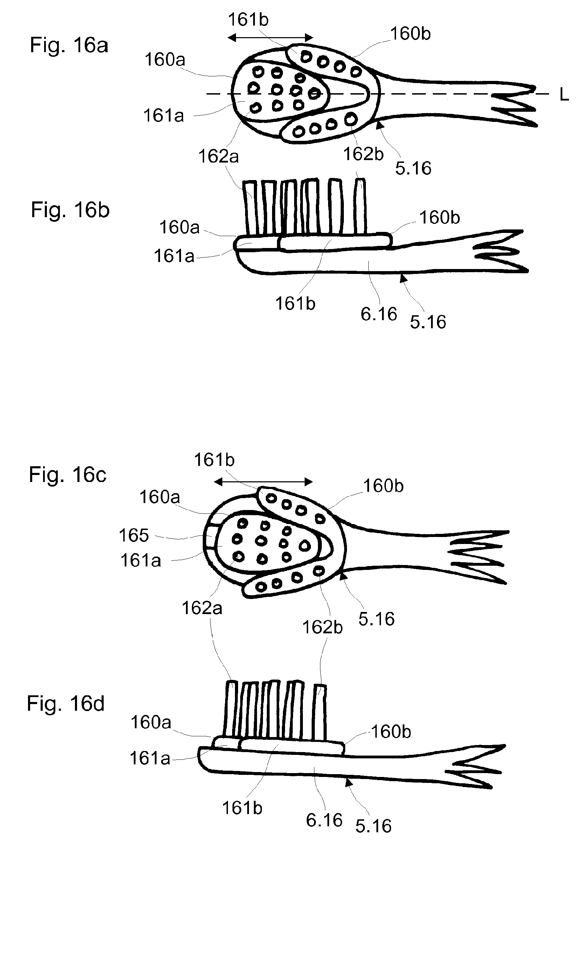

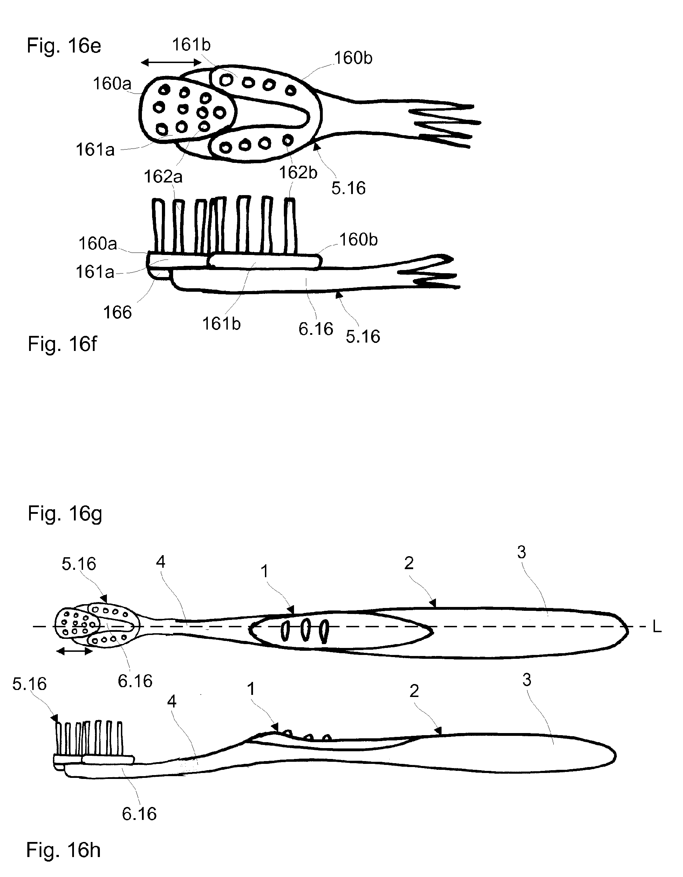

Die Zahnbürste 1, wie sie in ihrem Grundaufbau in Figur 16g und 16h im Zusammenhang mit einer Ausführungsvariante des Bürstenkopfes dargestellt ist, enthält einen Grundkörper 2 mit einem Griffteil 3 zum Halten der Zahnbürste 1 mit der Hand. Ferner enthält der Grundkörper 2 einen Kopfteil 6.1-6.18 (entspricht: 6.1, 6.2, 6.3, 6.4, 6.5, 6.6, 6.7, 6.8, 6.9, 6.10, 6.11, 6.12, 6.13, 6.14, 6.15, 6.16, 6.17, 6.18) sowie einen Halsteil 4, welcher den Kopfteil 6.1-6.18 mit dem Griffteil 3 verbindet.

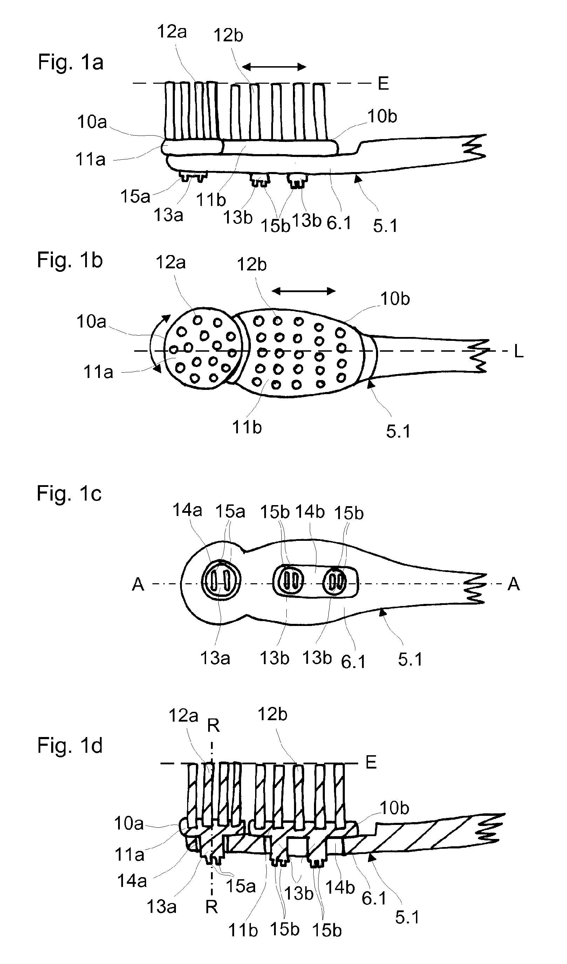

Der Kopfteil 6.1-6.18 kann gemäss einem der Ausführungsbeispiele nach Figur 1 bis 18 ausgestaltet sein. Der Kopfteil 6.1-6.18 bildet zusammen mit dem oder den nachfolgend beschriebenen Bürstenkörpern 10a-180a; 10b-160b (entspricht: 10a, 10b; 20a, 20b; 30a, 30b; 40a, 40b; 50a, 50b; 60a, 60b; 70a, 70b; 80a, 80b; 90a, 90b; 100a, 100b; 110a, 110b; 120a, 120b; 150a, 150b; 160a, 160b, 170a, 180a) den Bürstenkopf 5.1-5.18 (entspricht: 5.1, 5.2, 5.3, 5.4, 5.5, 5.6, 5.7, 5.8, 5.9, 5.10, 5.11, 5.12, 5.15, 5.16, 5.17, 5.18) oder einen Teil davon aus. Der Kopfteil 6.1-6.18 dient als Träger für den oder die an diesem angeordneten Bürstenkörper 10a-180a; 10b-160b.

Die Ausführungsformen von Bürstenköpfen 5.1-5.16 gemäss den Figuren 1 bis 16 enthalten wie erwähnt jeweils ein Kopfteil 6.1-6.16. Am Kopfteil 6.1-6.16 ist jeweils ein erster Bürstenkörper 10a-160a sowie ein zweiter Bürstenkörper 10b-160b angeordnet. Die beiden Bürstenkörper 10a-160a; 10b-160b sind entlang der Längsachse L der Zahnbürste 1 hintereinander angeordnet. Der erste Bürstenkörper 10a-160a ist jeweils vorne am freien Endabschnitt des Kopfteils 6.1-6.16 angeordnet. Der zweite Bürstenkörper 10b-160b ist jeweils hinten zum Griffteil 3 hin am Kopfteil 6.1-6.16 angeordnet.

Der erste Bürstenkörper 10a-160a enthält einen ersten Borstenträger 11a-161a. Der erste Bürstenkörper 10a-160a enthält im Weiteren erste Reinigungsborsten 12a-162a, welche am ersten Borstenträger 11a-161a angeordnet sind. Die Reinigungsborsten 12a-162a bilden ein erstes Borstenfeld aus.

Der zweite Bürstenkörper 10b-160b enthält einen zweiten Borstenträger 11b-161b. Der zweite Bürstenkörper 10b-160b enthält im Weiteren zweite Reinigungsborsten 12b-162b, welche am zweiten Borstenträger 11b-161b angeordnet sind. Die Reinigungsborsten 12b-162b bilden ein zweites Borstenfeld aus.

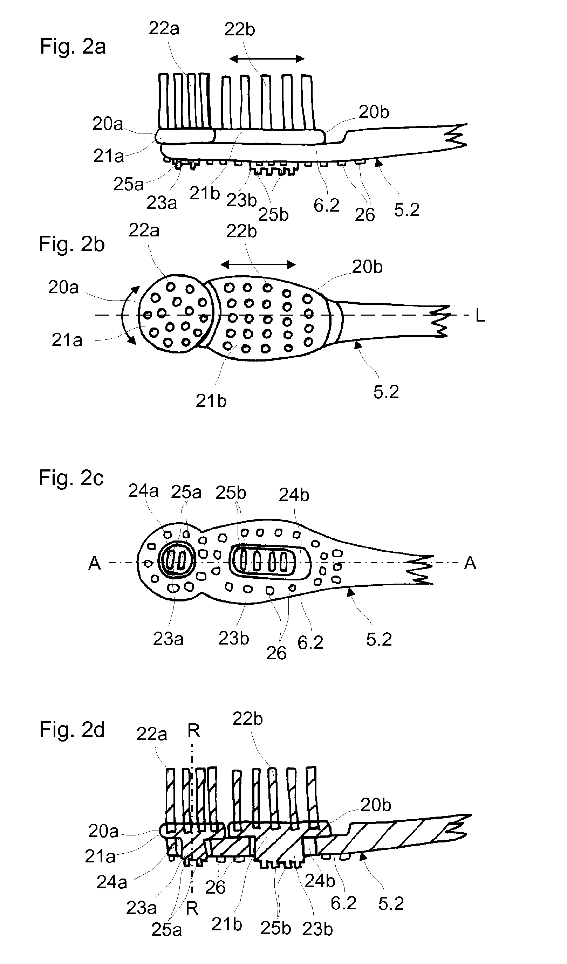

Gemäss der ersten und zweiten Ausführungsvariante nach Figur 1a-1d sowie 2a-2d ist der erste Bürstenkörper 10a, 20a in Draufsicht rund, insbesondere kreisrund, ausgebildet. Der erste Bürstenkörper 10a enthält als Achselement einen Achszapfen 13a, 23a, welcher auf der dem ersten Borstenfeld gegenüber liegenden Seite am ersten Borstenträger 11 a, 21 a angeordnet ist.

Der Achszapfen 13a, 23a und über diesen der erste Bürstenkörper 10a, 20a sind drehbar in einer Achsaufnahme bzw. Achsöffnung oder wie hier genannt einer Aufnahmeöffnung 14a, 24a am Kopfteil 6.1, 6.2 gelagert. Die Aufnahmeöffnung 14a, 24a ist als durchgehende Rundöffnung im Kopfteil 6.1, 6.2 ausgebildet. Die Rundöffnung braucht jedoch nicht durchgängig zu sein, sondern kann auch lediglich als Vertiefung ausgebildet sein. Der Achszapfen 13a, 23a als Teil des ersten Bürstenkörpers 10a, 20a ist über eine Schnapp-Klickverbindung mit dem Kopfteil 6.1, 6.2 verbunden und dadurch axial gesichert. Der Achszapfen 13a, 23a und somit die geometrische Drehachse R sind zentrisch angeordnet.

Das dem ersten Borstenfeld gegenüber liegende, freie Ende des Achszapfens 13a, 23a erstreckt sich auf der anderen Seite der durchgängigen Aufnahmeöffnung 14a, 24a über das Kopfteil 6.1, 6.2 hinaus. An diesem freien Ende sind erste Funktionselemente 15a, 25a, wie Noppen oder Lamellen, angeordnet, welche als Zungenreiniger dienen. Der Zungenreiniger ist relativ zum Kopfteil 6.1, 6.2 entsprechend beweglich.

Der zweite Bürstenkörper 10b, 20b ist länglich ausgebildet. Gemäss der ersten Ausführungsvariante nach Figur 1a-1d enthält der zweite Bürstenkörper 10b zwei entlang der Längsachse L voneinander beabstandet am zweiten Borstenträger 11b angeordnete Führungselemente, hier Führungszapfen 13b genannt.

Gemäss der zweiten Ausführungsvariante nach Figur 2a-2d enthält der zweite Bürstenkörper 20b lediglich ein am zweiten Borstenträger 21b angeordneter Führungszapfen 23b, analog der vorher beschriebenen Führungselemente.

Der oder die Führungszapfen 13b, 23b sind auf der dem zweiten Borstenfeld gegenüber liegenden Seite am zweiten Borstenträger 11b, 21b angeordnet.

Der oder die Führungszapfen 13b, 23b und über diese der zweite Bürstenkörper 10b, 20b sind in einer Führungsöffnung, hier Schlitzöffnung 14b, 24b am Kopfteil 6.1, 6.2 entlang der Längsachse L translatorisch verschiebbar gelagert. Die Schlitzöffnung 14b, 24b und der zweite Bürstenkörper 10b, 20b mit dem oder den Führungszapfen 13b, 23b bilden also eine Schlittenführung, d.h. eine Gleitführung aus, wobei der zweite Bürstenkörper 10b, 20b dem Schlitten entspricht.

Die Schlitzöffnung 14b, 24b ist als durchgehende Öffnung im Kopfteil 6.1, 6.2 ausgebildet. Die Öffnung braucht jedoch nicht durchgängig zu sein, sondern kann auch lediglich als Längsnut ausgebildet sein. Der oder die Führungszapfen 13b, 23b als Teil des zweiten Bürstenkörpers 10b, 20b sind über eine Schnapp-Klickverbindung mit dem Kopfteil 6.1, 6.2 verbunden und dadurch gegen ein Herausgleiten aus der Schlitzöffnung 14b, 24b gesichert.

Das dem zweiten Borstenfeld gegenüber liegende, freie Ende des oder der Führungszapfen 13b, 23b erstreckt sich auf der anderen Seite der durchgängigen Schlitzöffnung 14b, 24b jeweils über das Kopfteil 6.1, 6.2 hinaus. An diesen freien Enden sind zweite Funktionselemente 15b, 25b, wie Noppen oder Lamellen, angeordnet, welche als Zungenreiniger dienen.

Durch die manuell mit der Zahnbürste ausgeführte Reinigungsbewegung mittels Hin-und Herbewegen und durch Ausüben eines Anpressdruckes des Bürstenkopfes 5.1, 5.2 an die Zähne, wird nun der erste Bürstenkörper 10a, 20a um eine Drehachse R in eine Drehbewegung versetzt.

Durch die manuell mit der Zahnbürste ausgeführte Reinigungsbewegung mittels Hin-und Herbewegen und durch Ausüben eines Anpressdruckes des Bürstenkopfes 5.1, 5.2 an die Zähne, wird ferner der zweite Bürstenkörper 10b, 20b entlang der Schlitzöffnung 14b, 24b in eine translatorische Hin- und Herbewegung versetzt. Bei dieser Bewegung bewegt sich der zweite Bürstenkörper 10b, 20b zum ersten Bürstenkörper 10a, 20a hin und wieder von diesem weg.

Der zweite Borstenträger 11b, 21b bildet in Draufsicht zum ersten Borstenträger 11a, 21 a hin im Weiteren eine konkave Ausnehmung auf, welche dafür ausgelegt ist eine Teilkontur des ersten Bürstenkörpers 10a, 20a aufzunehmen. Dadurch wird sichergestellt, dass der Bürstenkopf 5.1, 5.2 während der Reinigungsbewegung in jeder Stellung des zweiten Bürstenkörpers 10b, 20b entlang seiner translatorischen Bewegungsbahn ein möglichst durchgängiges Borstenfeld ausbildet, beziehungsweise dass die entstehende Lücke im Borstenfeld möglichst klein gehalten wird.

Die zweite Ausführungsvariante nach Figur 2a-2d unterscheidet sich von der ersten Ausführungsvariante im Weiteren im Weiteren dadurch, dass das Kopfteil 6.2 auf seiner Rückseite dritte Funktionselemente 26, wie Noppen oder Lamellen, ausweist, welche z. B. als Zungenreiniger dienen.

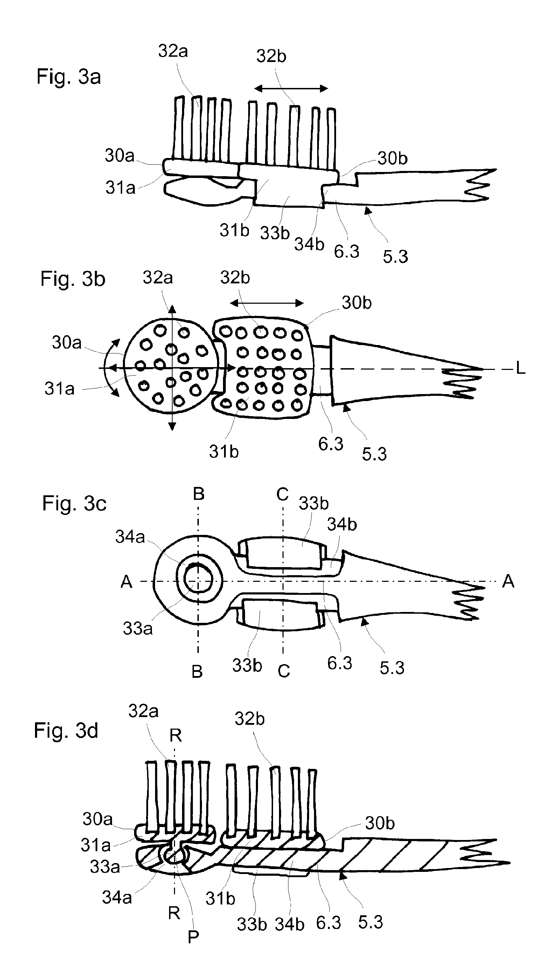

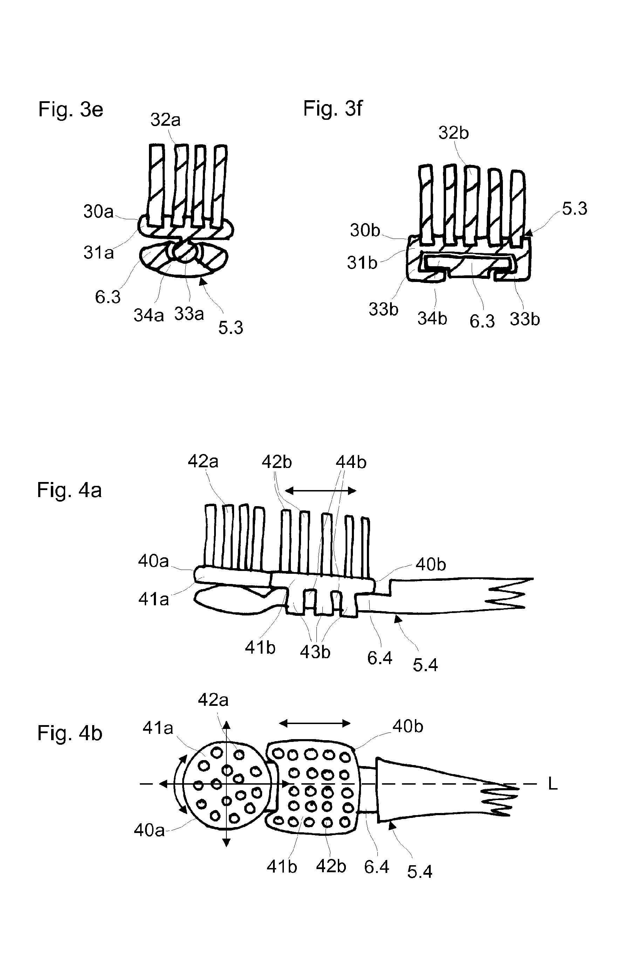

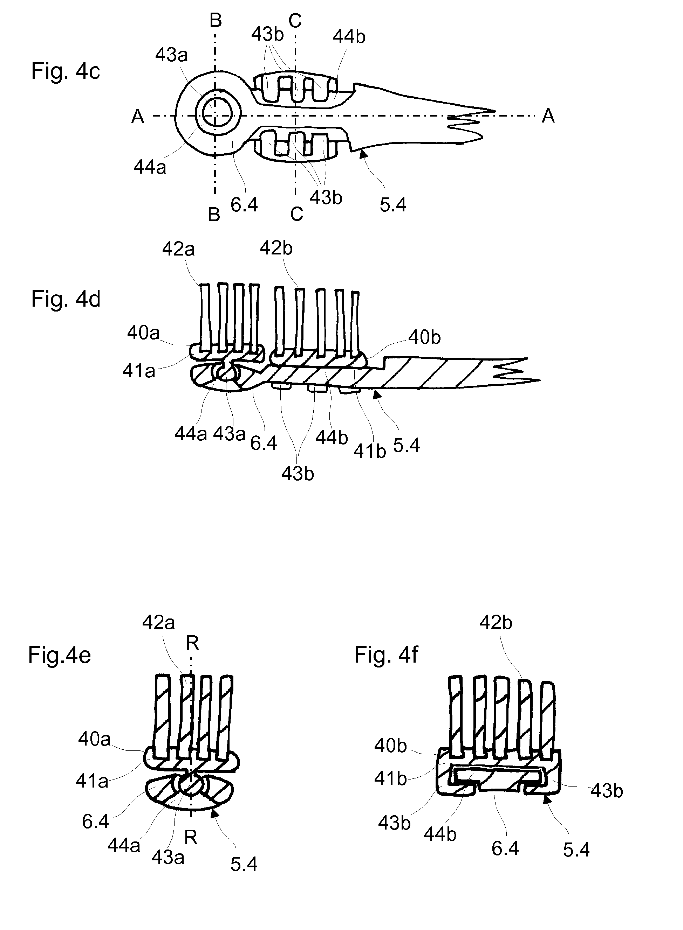

Gemäss der dritten und vierten Ausführungsvariante nach Figur 3a-3f sowie 4a-4f ist der erste Bürstenkörper 30a, 40a in Draufsicht ebenfalls rund, insbesondere kreisrund, ausgebildet. Der erste Bürstenkörper 30a, 40a enthält einen Gelenkkopf 33a, 43a, welcher auf der dem ersten Borstenfeld gegenüber liegenden Seite am ersten Borstenträger 31 a, 41 a angeordnet ist.

Der erste Bürstenkörper 30a, 40a ist über den Gelenkkopf 33a, 43a gelenkig in einer Gelenköffnung 34a, 44a am Kopfteil 6.3, 6.4 gelagert. Die Gelenköffnung 34a, 44a ist als durchgehende Rundöffnung im Kopfteil 6.3, 6.4 ausgebildet. Die Rundöffnung braucht jedoch nicht durchgängig zu sein, sondern kann auch lediglich als Vertiefung, z. B. als eine Art Gelenkpfanne, ausgebildet sein. Der Gelenkkopf 33a, 43a als Teil des ersten Bürstenkörpers 30a, 40a ist über eine Schnapp-Klickverbindung in die Gelenköffnung 34a, 44a gesteckt und mit dem Kopfteil 6.3, 6.4 verbunden und so gegen ein Herausspringen aus der Gelenköffnung 34a, 44a gesichert.

Die Gelenkverbindung erlaubt eine Auslenkung des ersten Bürstenkörpers 30a, 40a in drei Richtungen. Die Auslenkung ist jedoch nur über einen Teilumfang eines Schwenkkreises möglich.

Der zweite Bürstenkörper 30b, 40b ist länglich ausgebildet. Gemäss der dritten Ausführungsvariante nach Figur 3a-3f sind am zweiten Borstenträger 31b zwei gegeneinander gerichtete Umfassungselemente 33b angeformt. Gemäss der vierten Ausführungsvariante nach Figur 4a-4f sind am zweiten Borstenträger 41b pro Seite jeweils drei fingerförmige Umfassungselemente 43b angeformt. Die Umfassungselemente 43b an den beiden Seiten sind gegeneinander gerichtet.

Die Umfassungselemente 33b, 43b sind zur Rückseite des Kopfteils 6.3, 6.4 hin gerichtet. Die Umfassungselemente 33b, 43b umgreifen einen aus dem Kopfteil 6.3, 6.4 geformten Längsführungskörper 34b, 44b aussenseitig. Der Längsführungskörper 34b, 44b hat die Funktion einer Führungsschiene und ist im Querschnitt betrachtet T-förmig ausgebildet. Eine andere Querschnittsgeometrie ist jedoch auch möglich. Der T-förmige Längsführungskörper 34b, 44b weist eine Mittelrippe auf, welche zwischen den gegeneinander gerichteten Umfassungselementen 33b, 43b hindurch führt. Die Umfassungselemente 33b, 43b bilden mit dem zweiten Borstenträger 31b, 41b einen schlitzförmigen Aufnahmeraum aus, welcher die Flanken des T-förmigen Längsführungskörpers 34b, 44b aufnimmt.

Die Umfassungselemente 33b, 43b und der Längsführungskörper 34b, 44b bilden so zusammen eine Gleitführung aus, welche erlaubt den zweiten Bürstenkörper 30b, 40b entlang der Längsachse L am Kopfteil 6.3, 6.4 translatorisch zu verschieben. Die Gleitführung ist eine Schlittenführung, wobei der zweite Bürstenkörper 30b, 40b dem Schlitten entspricht.

Die Umfassungselemente 33b, 43b sorgen dafür, dass sich der Bürstenkörper 30b, 40b nicht quer zur Bewegungsrichtung vom Kopfteil 6.3, 6.4 ablösen kann. Der zweite Bürstenkörper 30b, 40b kann z. B. über eine Schnapp-Klickverbindung über den Längsführungskörper 34b, 44b geschoben sein. Die Umfassungselemente 33b, 43b weisen hierzu elastische Eigenschaften auf

Durch die manuell mit der Zahnbürste ausgeführte Reinigungsbewegung mittels Hin-und Herbewegen und durch Ausüben eines Anpressdruckes des Bürstenkopfes 5.3, 5.4 an die Zähne, wird nun der erste Bürstenkörper 30a, 40a um den Drehpunkt des Gelenkkopfes 33a, 43a ausgelenkt.

Durch die manuell mit der Zahnbürste ausgeführte Reinigungsbewegung mittels Hin-und Herbewegen und durch Ausüben eines Anpressdruckes des Bürstenkopfes 5.3, 5.4 an die Zähne, wird ferner der zweite Bürstenkörper 30b, 40b entlang des Längsführungskörpers 34b, 44b in eine translatorische Hin- und Herbewegung versetzt. Bei dieser Bewegung bewegt sich der zweite Bürstenkörper 30b, 40b zum ersten Bürstenkörper 30a, 40a hin und wieder von diesem weg.

Der zweite Borstenträger 31b, 41b bildet im Weiteren in Draufsicht zum ersten Borstenträger 31 a, 41 a hin eine Ausnehmung auf, welche dafür ausgelegt ist eine Teilkontur des ersten Bürstenkörpers 30a, 40a aufzunehmen. Dadurch wird sichergestellt, dass der Bürstenkopf 5.3, 5.4 während der Reinigungsbewegung in jeder Stellung des zweiten Bürstenkörpers 30b, 40b entlang seiner translatorischen Bewegungsbahn ein möglichst durchgängiges Borstenfeld ausbildet, beziehungsweise dass die entstehende Lücke im Borstenfeld möglichst klein gehalten wird.

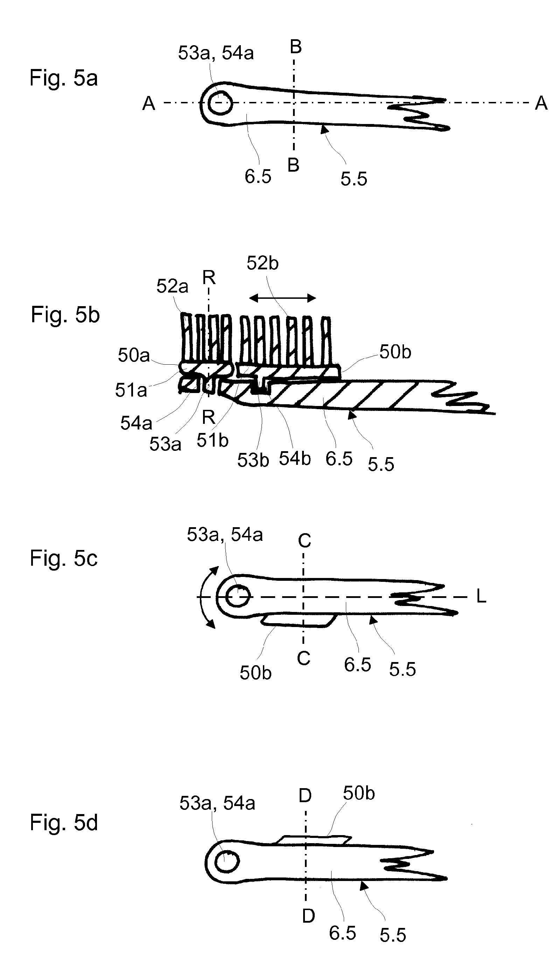

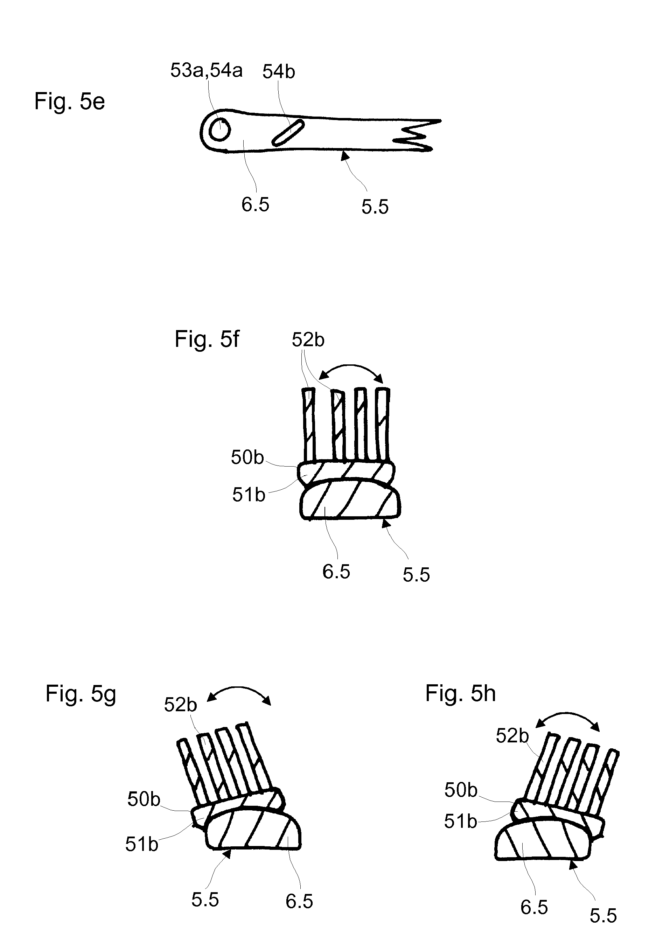

Gemäss der fünften Ausführungsvariante nach Figur 5a-5h ist der erste Bürstenkörper 50a in Draufsicht rund, insbesondere kreisrund, ausgebildet. Der erste Bürstenkörper 50a enthält einen Achszapfen 53a als Achselement, welcher auf der dem ersten Borstenfeld gegenüber liegenden Seite am ersten Borstenträger 51 a angeordnet ist.

Der Achszapfen 53a und über diesen der erste Bürstenkörper 50a sind drehbar in einer Achsöffnung, der Aufnahmeöffnung 54a am Kopfteil 6.5 gelagert. Die Aufnahmeöffnung 54a ist als durchgehende Rundöffnung im Kopfteil 6.5 ausgebildet. Die Rundöffnung braucht jedoch nicht durchgängig zu sein, sondern kann auch lediglich als Vertiefung ausgebildet sein. Der Achszapfen 53a als Teil des ersten Bürstenkörpers 50a ist über eine Schnapp-Klickverbindung mit dem Kopfteil 6.5 verbunden und dadurch axial gesichert. Der Achszapfen 53a und somit die geometrische Drehachse R sind zentrisch angeordnet.

Der zweite Bürstenkörper 50b ist länglich ausgebildet und enthält einen am zweiten Borstenträger 51b angeordneten Führungszapfen 53b als Führungselement. Der Führungszapfen 53b ist auf der dem zweiten Borstenfeld gegenüber liegenden Seite am zweiten Borstenträger 51b angeordnet. Der Führungszapfen 53b und über diesen der zweite Bürstenkörper 50b sind in einer Führungsöffnung, der Schlitzöffnung 54b am Kopfteil 6.5 verschiebbar gelagert.

Die Schlitzöffnung 54b und der zweite Bürstenkörper 50b mit dem oder den Führungszapfen 53b bilden also eine Schlittenführung, d.h. eine Gleitführung aus, wobei der zweite Bürstenkörper 50b dem Schlitten entspricht.

Die Schlitzöffnung 54b ist als Führungsnut im Kopfteil 6.5 ausgebildet. Die Öffnung kann jedoch auch durchgängig ausgebildet sein. Der Führungszapfen 53b als Teil des zweiten Borstenträgers 51b ist über eine Schnapp-Klickverbindung mit dem Kopfteil 6.5 verbunden und dadurch gegen ein Herausgleiten aus der Schlitzöffnung 54b gesichert.

Im Gegensatz zur ersten und zweiten Ausführungsvariante nach Figur 1a-1d und 2a-2d verläuft die die Schlitzöffnung 54b schräg zur Längsachse L, so dass der zweite Bürstenkörper 50b eine Bewegungskomponente entlang der Längsachse L sowie auch quer zur Längsachse L aufweist. Überdies ist der zweite Bürstenkörper 50b quer zur Längsachse L betrachtet über eine Wölbung geführt. Die dem zweiten Borstenfeld gegenüber liegende Unterseite des zweiten Borstenträgers 51b ist gegengleich konkav vertieft ausgebildet. Dadurch wird die Bewegung quer zur Längsachse L zu einer Schwenkbewegung, in welcher das zweite Borstenfeld, das heisst das Borstenfeld des zweiten Bürstenkörpers 50b um eine geometrische Drehachse zur Seite geschwenkt wird.

Durch die manuell mit der Zahnbürste ausgeführte Reinigungsbewegung mittels Hin-und Herbewegen und durch Ausüben eines Anpressdruckes des Bürstenkopfes 5.5 an die Zähne, wird nun der erste Bürstenkörper 50a um eine Drehachse R in eine Drehbewegung versetzt.

Durch die manuell mit der Zahnbürste ausgeführte Reinigungsbewegung mittels Hin-und Herbewegen und durch Ausüben eines Anpressdruckes des Bürstenkopfes 5.5 an die Zähne, wird ferner der zweite Bürstenkörper 50b entlang der Schlitzöffnung 54b hin- und hergeschoben. Dabei führt der zweite Bürstenkörper 50b eine kombinierte Bewegung aus, welche eine Bewegungskomponente entlang der Längsachse L zum ersten Bürstenkörper 50a hin und wieder von diesem weg sowie ein seitliches Ausschwenken (siehe Figuren 5f, 5g und 5h) umfasst.

In den Figuren 5f, 5g und 5h ist jeweils eine Position gezeigt. Dabei zeigt Figur 5f die mittlere Position, wenn sich der zweite Bürstenkörper 50b direkt in der Achse mit dem Kopfteil 6.5 befindet. Figur 5g zeigt die Position des zweiten Bürstenkörpers 50b mit einer maximalen Auslenkung nach links. Figur 5h zeigt die Position des zweiten Bürstenkörpers 50b mit einer maximalen Auslenkung nach rechts.

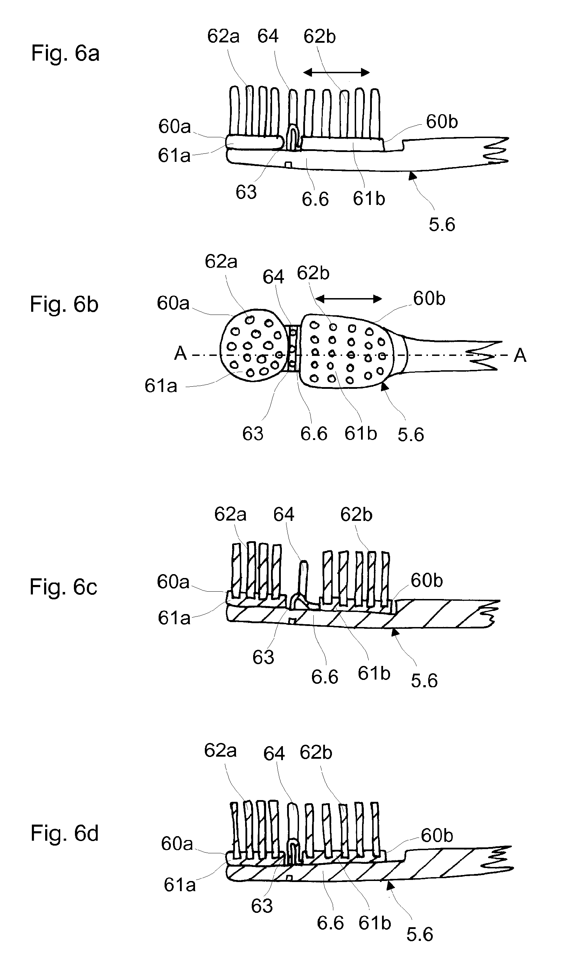

Gemäss der sechsten Ausführungsvariante nach Figur 6a-6d ist der erste Bürstenkörper 60a in Draufsicht rund, insbesondere kreisrund, ausgebildet und ortsfest oder drehbar am Kopfteil 6.6 befestigt.

Der zweite Bürstenkörper 60b ist länglich ausgebildet und über eine, an dieser Stelle nicht näher erläuterten Gleitführung entlang der Längsachse L zum ersten Bürstenkörper 60a hin und wieder von diesem weg translatorisch verschiebbar.

Auf der Seite des Borstenfeldes ist zwischen dem ersten und zweiten Bürstenkörper 60a, 60b ein gummielastisches Rückstellorgan 63 angeordnet. Das Rückstellorgan 63 ist insbesondere aus einer Weichkomponente und als Wölbelement ausgestaltet.

Das Rückstellorgan 63 ist mit einem ersten Ende am Kopfteil 6.6 und mit einem anderen Ende am zweiten Bürstenkörper 60b befestigt. Die Ausbildung und Befestigung des Rückstellorgan 63 ist derart, dass dieses bei einer Verschiebung des zweiten Bürstenkörpers 60b aus einer Ausgangsposition zum ersten Bürstenkörper 60a hin durch die Verkleinerung des Zwischenraumes zwischen dem ersten und zweiten Bürstenkörper 60a, 60b aufgewölbt und auf diese Weise unter Spannung gesetzt wird. Das Rückstellorgan ist im vorliegenden Beispiel als Flachelement ausgebildet. Das Rückstellorgan kann in Weiterbildung der Erfindung auch als ringartiges Element ausgebildet sein (nicht gezeigt).

Durch die manuell mit der Zahnbürste ausgeführte Reinigungsbewegung mittels Hin-und Herbewegen und durch Ausüben eines Anpressdruckes des Bürstenkopfes 5.6 an die Zähne, wird der zweite Bürstenkörper 60b in eine translatorische Hin- und Herbewegung versetzt. Bei dieser Bewegung bewegt sich der zweite Bürstenkörper 60b zum ersten Bürstenkörper 60a hin und wieder von diesem weg.

Bei der Rückbewegung wird der zweite Bürstenkörper 60b bei einer Abnahme der Verschiebekraft durch die Rückstellkraft des unter Spannung stehenden Rückstellorgans 63 wieder in seine Ausgangsposition zurückgeschoben.

Auf dem Rückstellorgan 63 sind überdies Funktionselemente 64 in Form von Reinigungsborsten oder Lamellen angeordnet. Die Funktionselemente 64 sind auf dem sich aufwölbenden Abschnitt des Rückstellorgans 64 angeordnet, so dass diese sich bei der Hin- und Herbewegung des zweiten Bürstenkörpers 60b auf und ab bewegen.

Im Vergleich zwischen den beiden Figuren 6c und 6d sind die verschiedenen Extrempositionen erkennbar. Die Figur 6c zeigt die Ausgangslage mit tiefer liegendem Funktionselement 64 und beinahe flachem gummielastischem Rückstellorgan 63. Die Distanz zwischen dem ersten Bürstenkörper 60a und dem zweiten Bürstenkörper 60b ist maximal. Die Figur 6d zeigt die Position des Funktionselements 64 und des gummielastischen Rückstellorgans 63, in welcher die Distanz zwischen dem ersten Bürstenkörper 60a und dem zweiten Bürstenkörper 60b am geringsten ist.

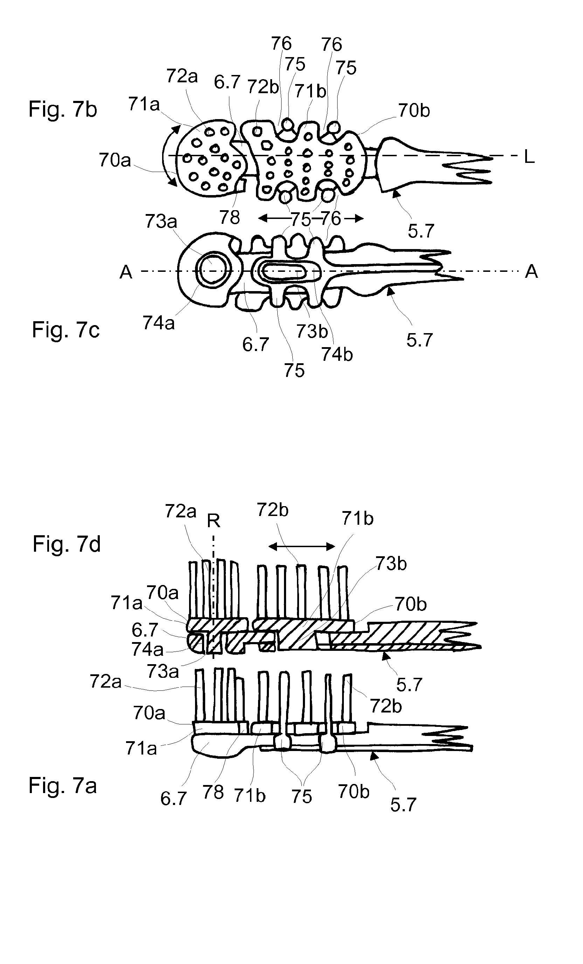

Gemäss der siebten Ausführungsvariante nach Figur 7a-7d ist der erste Bürstenkörper 70a in Draufsicht in einer nicht ganz runden Form ausgebildet. Der erste Bürstenkörper 70a enthält als Achselement einen Achszapfen 73a, welcher auf der dem ersten Borstenfeld gegenüber liegenden Seite am ersten Borstenträger 71a angeordnet ist und eine Rotation ermöglicht.

Der Achszapfen 73a und über diesen der erste Bürstenkörper 70a sind drehbar in einer Achsaufnahme, der Aufnahmeöffnung 74a, am Kopfteil 6.7 gelagert. Die Aufnahmeöffnung 74a ist als durchgehende Rundöffnung im Kopfteil 6.7 ausgebildet. Die Rundöffnung braucht jedoch nicht durchgängig zu sein, sondern kann auch lediglich als Vertiefung ausgebildet sein. Der Achszapfen 73a als Teil des ersten Bürstenkörpers 70a ist über eine Schnapp-Klickverbindung mit dem Kopfteil 6.7 verbunden und dadurch axial gesichert. Der Achszapfen 73a und somit die geometrische Drehachse R sind zentrisch angeordnet.

Der zweite Bürstenkörper 70b ist länglich ausgebildet und enthält einen am zweiten Borstenträger 71b angeordneten Führungszapfen 73b als Führungselement. Der Führungszapfen 73b ist auf der dem zweiten Borstenfeld gegenüber liegenden Seite am zweiten Borstenträger 71b angeordnet.

Der Führungszapfen 73b und über diesen der zweite Bürstenkörper 70b sind in einer Führungsöffnung, der Schlitzöffnung 74b, am Kopfteil 6.7 entlang der Längsachse L translatorisch verschiebbar gelagert. Die Schlitzöffnung 74b und der zweite Bürstenkörper 70b mit dem Führungszapfen 73b bilden also eine Schlittenführung, d.h. eine Gleitführung aus, wobei der zweite Bürstenkörper 70b dem Schlitten entspricht.

Die Schlitzöffnung 74b ist als durchgehende Öffnung im Kopfteil 6.7 ausgebildet. Die Öffnung braucht jedoch nicht durchgängig zu sein, sondern kann auch lediglich als Längsnut ausgebildet sein.

Der Führungszapfen 73b als Teil des zweiten Bürstenkörpers 70b ist über eine Schnapp-Klickverbindung mit dem Kopfteil 6.7 verbunden und dadurch gegen ein Herausgleiten aus der Schlitzöffnung 74b gesichert.

Der zweite Borstenträger 71b enthält seitlich angeordnete Einbuchtungen 76. Ferner sind im Bereich der Schlittenführung seitlich vom Kopfteil 6.7 abstehende Rückstellelemente 75 aus einer Weichkomponente angeordnet. Die Rückstellelemente 75 sind in der Ausgangsposition des zweiten Bürstenkörpers 70b in den Einbuchtungen 76 des zweiten Bürstenkörpers 70b positioniert. Die Rückstellelemente 75 umfassen jeweils eine Reinigungsborste 77, welche sich in das Borstenfeld des Bürstenkopfes 5.7 einfügt.

Durch die manuell mit der Zahnbürste ausgeführte Reinigungsbewegung mittels Hin-und Herbewegen und durch Ausüben eines Anpressdruckes des Bürstenkopfes 5.7 an die Zähne, wird der zweite Bürstenkörper 70b entlang der Schlitzöffnung 74b in eine translatorische Hin- und Herbewegung versetzt. Der zweite Bürstenkörper 70b bewegt sich dabei zum ersten Bürstenkörper 70a hin und wieder von diesem weg.

Bei diesem Bewegungsvorgang kommen die Rückstellelemente 75 in den Einbuchtungen 76 jeweils mit dem Bürstenkörper 70b bzw. dem Borstenträger alternierend seitlich in Anschlag. Da die elastischen Rückstellelemente 75 nicht aus der Einbuchtung 76 herausgleiten können, werden diese durch die Verschiebkraft deformiert und/oder seitlich ausgelenkt. Auf diese Weise wird einerseits eine dämpfende Wirkung auf den sich bewegenden zweiten Bürstenkörper 70b ausgeübt. Andererseits übt das einzelne Rückstellelement 75 auch eine Rückstellkraft auf den sich bewegenden zweiten Bürstenkörper 70b aus, welche diesen zurück in seine Ausgangsposition führt. Die Rückstellelemente 75 bilden so ein Rückstellorgan aus.

Durch die manuell mit der Zahnbürste ausgeführte Reinigungsbewegung mittels Hin-und Herbewegen und durch Ausüben eines Anpressdruckes des Bürstenkopfes 5.7 an die Zähne, wird ferner der erste Bürstenkörper 70a um eine Drehachse R in eine Drehbewegung versetzt.

Der erste Bürstenkörper 70a besitzt ebenfalls ein Rückstellelement 78. Dieses wird wie die Elemente am zweiten Bürstenkörper 70b durch die Auslenkung elastisch verformt und führt so zu einer Rückstellung des ersten Bürstenkörpers 70a in die Ausgangsposition. Das Rückstellelement 78 ist direkt am Kopfteil 6.7 befestigt. Das Rückstellelement 78 ist zusätzlich auch als Reinigungselement/Funktionselement ausgelegt.

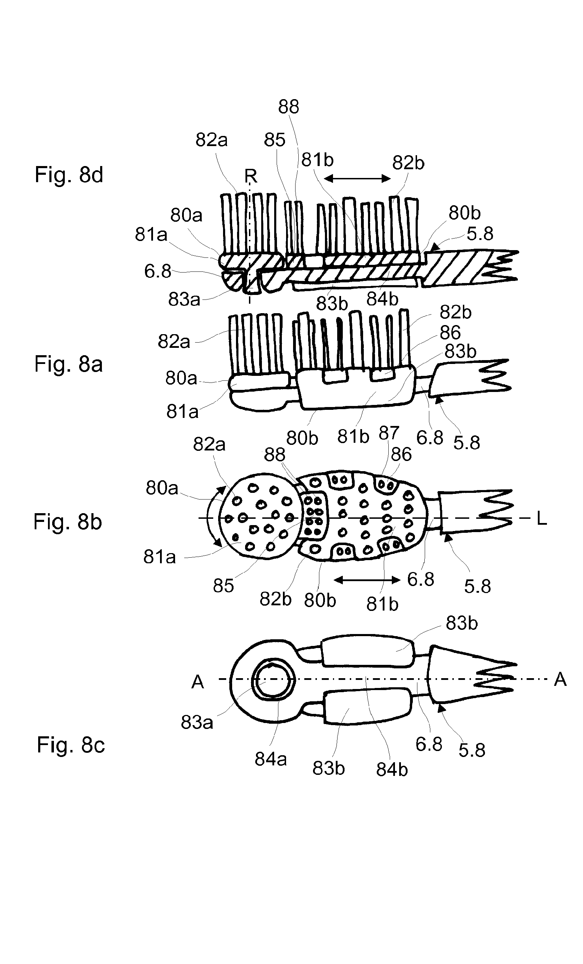

Gemäss der achten Ausführungsvariante nach Figur 8a-8d ist der erste Bürstenkörper 80a in Draufsicht rund, insbesondere kreisrund, ausgebildet. Der erste Bürstenkörper 80a enthält einen Achszapfen 83a als Achselement, welcher auf der dem ersten Borstenfeld gegenüber liegenden Seite am ersten Borstenträger 81 a angeordnet ist.

Der Achszapfen 83a und über diesen der erste Bürstenkörper 80a sind drehbar in einer Achsaufnahme, der Aufnahmeöffnung 84a, am Kopfteil 6.8 gelagert. Die Aufnahmeöffnung 84a ist als durchgehende Rundöffnung im Kopfteil 6.8 ausgebildet. Die Rundöffnung braucht jedoch nicht durchgängig zu sein, sondern kann auch lediglich als Vertiefung ausgebildet sein. Der Achszapfen 83a als Teil des ersten Borstenträgers 81a ist über eine Schnapp-Klickverbindung mit dem Kopfteil 6.8 verbunden und dadurch axial gesichert. Der Achszapfen 83a und somit die geometrische Drehachse R sind zentrisch angeordnet.

Der zweite Bürstenkörper 80b ist länglich ausgebildet. Am zweiten Borstenträger 81b sind zwei gegeneinander gerichtete Umfassungselemente 83b angeformt. Die Umfassungselemente 83b sind zur Rückseite des Kopfteils 6.8 gerichtet. Die Umfassungselemente 83b umfassen bzw. umgreifen einen am Kopfteil 6.8 geformten Längsführungskörper 84b aussenseitig. Der Längsführungskörper 84b hat die Funktion einer Art Führungsschiene und ist im Querschnitt betrachtet T-förmig ausgebildet. Eine andere Querschnittsgeometrie ist jedoch auch möglich. Der T-förmige Längsführungskörper 84b weist eine Mittelrippe auf, welche zwischen den gegeneinander gerichteten Umfassungselementen 83b hindurch führt. Die Umfassungselemente 83b bilden mit dem Borstenträger 81b einen schlitzförmigen Aufnahmeraum aus, welcher die Flanken des T-förmigen Längsführungskörpers 84b aufnimmt.

Die Umfassungselemente 83b und somit der zweite Borstenträger 81b und der Längsführungskörper 84b bilden zusammen eine Schlittenführung, d.h. Gleitführung aus. Diese erlaubt, den zweiten Bürstenkörper 80b entlang der Längsachse L am Kopfteil 6.8 translatorisch zu verschieben. Der zweite Bürstenkörper 80b entspricht dabei dem Schlitten.

Die Umfassungselemente 83b sorgen dafür, dass sich der Bürstenkörper 80b nicht quer zur Bewegungsrichtung vom Kopfteil 6.8 ablösen kann. Der zweite Bürstenkörper 80b kann über eine Schnapp-Klickverbindung quer über den Längsführungskörper 84b geschoben sein. Die Umfassungselemente 83b weisen hierzu elastische Eigenschaften auf.

Der zweite Borstenträger 81b enthält beidseitig am Ansatz des Umfassungselementes 83b angeordnete Trägerabschnitte 86 aus einer Weichkomponente. Auf den Trägerabschnitten 86 ist jeweils ein Reinigungselement 87, wie Reinigungsborste oder Lamelle, aus z. B. einer Weichkomponente angeordnet.

Zwischen dem ersten und zweiten Borstenträger 81a, 81b ist ferner ein Dämpfungselement 85 aus einer Weichkomponente fest am Kopfteil 6.8 angeordnet. Das Dämpfungselement 85 weist elastische Eigenschaften auf und übt gegenüber dem zweiten Bürstenkörper 80b eine Dämpfungs- bzw. Pufferfunktion aus. Das Dämpfungselement 85 ist zudem Träger von Reinigungselementen 88, wie Reinigungsborsten oder Lamellen, aus z. B. einer Weichkomponente.

Die oben genannten Reinigungselement 87, 88 fügen sich in das bestehende Borstenfeld ein.

Durch die manuell mit der Zahnbürste ausgeführte Reinigungsbewegung mittels Hin-und Herbewegen und durch Ausüben eines Anpressdruckes des Bürstenkopfes 5.8 an die Zähne, wird der zweite Bürstenkörper 80b entlang des Längsführungskörpers 84b in eine translatorische Hin- und Herbewegung versetzt. Der zweite Bürstenkörper 80b bewegt sich dabei zum ersten Bürstenkörper 80a hin und wieder von diesem weg.

Bei diesem Bewegungsvorgang schlägt der zweite Borstenträger 81b zum ersten Bürstenkörper 80a hin jeweils am Dämpfungselement 85 an. Aufgrund der elastischen Eigenschaften des Dämpfungselementes 85 wird das Anschlagen des zweiten Bürstenkörpers 80b am Dämpfungselement 85 gedämpft. Das Dämpfungselement 85 kann bei diesem Vorgang aufgrund einer elastischen Deformation sogar eine Rückstellkraft auf den zweiten Bürstenkörper 80b ausüben.

Durch die manuell mit der Zahnbürste ausgeführte Reinigungsbewegung mittels Hin-und Herbewegen und durch Ausüben eines Anpressdruckes des Bürstenkopfes 5.8 an die Zähne, wird ferner der erste Bürstenkörper 80a um eine Drehachse R in eine Drehbewegung versetzt.

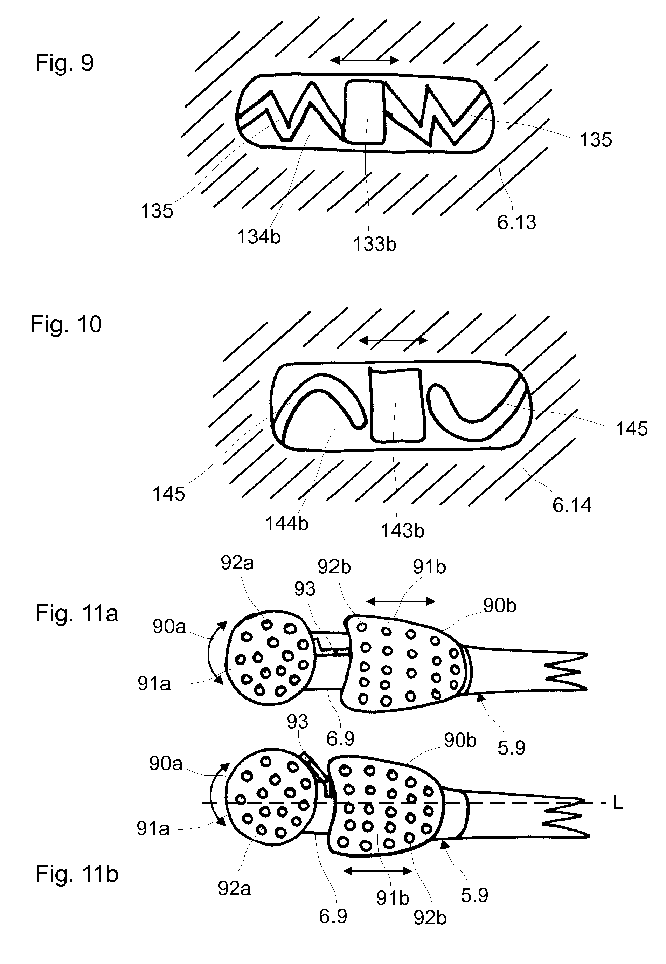

Die Figur 9 und 10 zeigt eine erste und zweite Art einer Schlittenführung für den zweiten Bürstenkörper in Kombination mit Rückstellorganen. Die Schlittenführung ist unter anderem in den Ausführungsvarianten gemäss Figur 2a-2d und 7a-7d ausführlich beschrieben. Die Rückstellorgane weisen elastische Eigenschaften, insbesondere aufgrund ihrer Formgebung auf.

Die Figur 9 zeigt eine Schlitzöffnung 134b im Kopfteil 6.13. In der Führungsöffnung, der Schlitzöffnung 134b, ist als Führungselement der Führungszapfen 133b des zweiten Bürstenkörpers entlang der Schlitzöffnung 134b gleitend geführt. Beidseitig vom Führungszapfen 133b ist in der Schlitzöffnung 134b jeweils ein Rückstellorgan 135 aus einer Weich- oder Hartkomponente angeordnet. Die beiden Rückstellorgane 135 weisen jeweils eine Faltenstruktur mit Zick-Zack-Muster auf. Die beiden Rückstellorgane 135 sind jeweils mit einem ersten Endabschnitt mit dem Führungszapfen 133b und mit einem zweiten Endabschnitt in der Schlitzöffnung 134b mit dem Kopfteil 6.13 verbunden.

Befindet sich der Führungszapfen 133b in der Mitte der Schlitzöffnung 134b, so befinden sich die Rückstellorgane 135 in einer neutralen Stellung, d.h. sie sind entspannt. Durch Verschieben des Führungszapfens 133b entlang der Schlitzöffnung 134b wird die Faltenstruktur der Rückstellorgane 135 auf der einen Seite auseinandergezogen und auf der anderen Seite zusammengedrückt. Das zusammengedrückte Rückstellorgan 135 übt nun auf den Führungszapfens 133b eine Rückstellkraft aus einer Druckspannung in Richtung der neutralen Stellung in der Mitte der Schlitzöffnung 134b aus. Das auseinandergezogene Rückstellorgan 135 übt auf den Führungszapfen 133b ebenfalls eine Rückstellkraft aus einer Zugspannung in Richtung der neutralen Stellung aus. Auf diese Weise wird der Führungszapfen 133b und mit diesem der zweite Bürstenkörper im Anschluss an eine Auslenkung durch die Rückstellkräfte der Rückstellorgane 135 in die Mitte der Schlitzöffnung 134b zurückgeführt.

Die Figur 10 zeigt als Führungsöffnung eine Schlitzöffnung 144b in einem Kopfteil 6.14. In der Schlitzöffnung 144b ist als Führungselement der Führungszapfen 143b des zweiten Bürstenkörpers entlang der Schlitzöffnung 144b gleitend geführt. Beidseitig vom Führungszapfen 143b ist in der Schlitzöffnung 144b jeweils ein Rückstellorgan 145 aus einer Weich- oder Hartkomponente angeordnet. Die beiden Rückstellorgane 145 weisen eine bogenförmige Struktur auf. Die beiden Rückstellorgane 145 bilden jeweils mit einem ersten Endabschnitt einen Kontaktabschnitt zum Führungszapfen 143b hin aus. Die beiden Rückstellorgane 145 sind ferner jeweils und mit einem zweiten Endabschnitt in der Schlitzöffnung 144b mit dem Kopfteil 6.14 verbunden.

Befindet sich der Führungszapfen 143b in der Mitte der Schlitzöffnung 144b, so befinden sich die Rückstellorgane 145 in einer neutralen Stellung, d.h. sie sind entspannt. Durch Verschieben des Führungszapfens 143b entlang der Schlitzöffnung 144b wird die bogenförmige Struktur des Rückstellorgans 145 auf der einen Seite zusammengedrückt. Das zusammengedrückte Rückstellorgan 145 übt nun auf den Führungszapfens 143b eine Rückstellkraft aus einer Druckspannung in Richtung der neutralen Stellung in der Mitte der Schlitzöffnung 144b aus. Auf diese Weise wird der Führungszapfen 143b und mit diesem der zweite Bürstenkörper im Anschluss an eine Auslenkung durch die Rückstellkraft des Rückstellorgans 145 in die Mitte der Schlitzöffnung 144b zurückgeführt.

Die Rückstellorgane können auch eine andere Formgestalt aufweisen. Ist das Rückstellorgan in der Schlitzöffnung einerseits mit dem Kopfteil und andererseits mit dem Führungszapfen verbunden, so kann auch nur auf einer Seite des Führungszapfens ein Rückstellorgan in der Schlitzöffnung angeordnet sein.

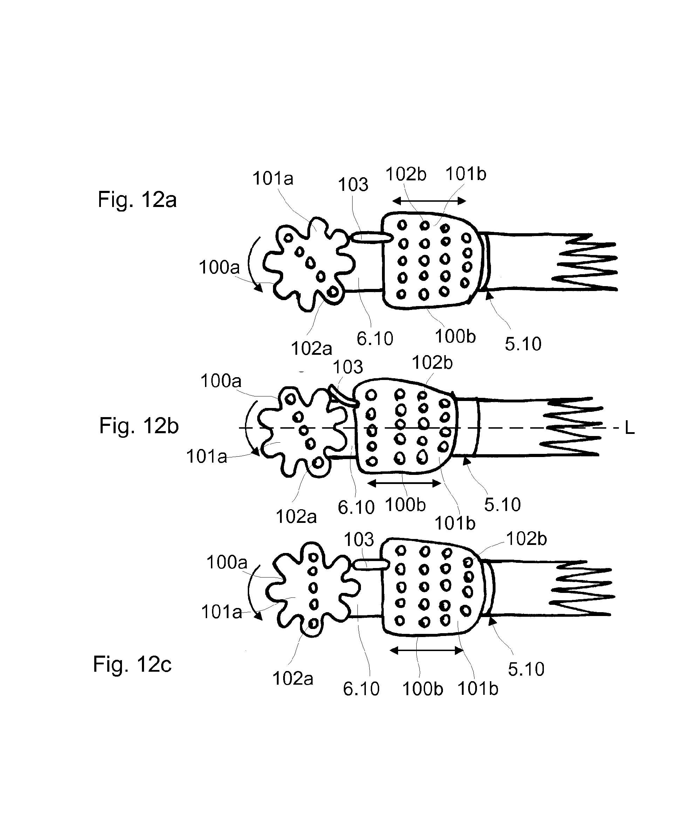

Die Figuren 11a-11b und 12a-12c zeigt eine neunte und zehnte Ausführungsvariante einer erfindungsgemässen Zahnbürste, bei welcher die Bewegung zwischen dem ersten und zweiten Bürstenkörper 90a, 90b; 100a, 100b über ein Kopplungselement 93, 103 gekoppelt ist. Das Kopplungselement kann aus einer Hart- oder Weichkomponente bestehen. Das Kopplungselement 93, 103 ist elastisch bzw. flexibel ausgebildet.

Der erste Bürstenkörper 90a, 100a ist drehbar auf dem Kopfteil 6.9, 6.10 gelagert. Der zweite Bürstenkörper 90b, 100b ist entlang der Längsachse L translatorisch verschiebbar auf dem Kopfteil 6.9, 6.10 geführt. Die Art der Führung ist gemäss diesen Ausführungsbeispielen von untergeordneter Bedeutung.

Gemäss der Ausführungsform nach Figur 11a-11b sind der erste und zweite Bürstenkörper 90a, 90b über ein Kopplungselement 93 direkt miteinander verbunden, das Kopplungselement 93 ist sowohl am ersten wie auch am zweiten Bürstenkörper 90a, 90b fixiert. Die Verbindung ist derart, dass der sich translatorisch alternierend verschiebende zweite Bürstenkörper 90b den ersten Bürstenkörper 90a über das Kopplungselement 93 in eine ebenfalls alternierende Drehbewegung versetzt. Die Drehbewegung liegt jedoch innerhalb eines begrenzten Drehwinkels von insbesondere weniger als 180°. Das Kopplungselement 93 übt die Funktion eines Treib und Zugelementes aus.

Wird der zweite Bürstenkörper 90b in Richtung gegen den ersten Bürstenkörper 90a verschoben, so wird über das Kopplungselement 93 eine Bewegung des ersten Bürstenkörpers 90a in eine Drehrichtung initiiert, insbesondere bis die beiden Bürstenkörper 90a, 90b einander anliegen. Bewegt sich der zweite Bürstenkörper 90b wieder zurück, so entfernen sich die beiden Bürstenkörper 90a, 90b wieder voneinander und der erste Bürstenkörper 90a dreht in die entgegen gesetzte Richtung zurück bis das Kopplungselement 93 gestreckt ist.

Gemäss der Ausführungsform nach Figur 12a-12c ist am zweiten Bürstenkörper 100b ein Kopplungselement 103 angeordnet. Das Kopplungselement 103 bildet einen Kontaktabschnitt zum ersten Bürstenkörper 100a hin aus, die gegenüberliegende Seite des Kopplungselements 103 ist fix und direkt mit dem zweiten Bürstenkörper 100b verbunden. Der ersten Bürstenkörper 100a weist eine zahnradförmige Umfangsstruktur aus, in welche das Kopplungselement 103 mit seinem Kontaktabschnitt eingreift. Der erste Bürstenkörper 100a weist gemäss diesem Ausführungsbeispiel zur Visualisierung der Drehbewegung lediglich eine Borstenreihe 102a auf.

Die beiden Bürstenkörper 100a, 100b wirken derart zusammen, dass der sich translatorisch alternierend verschiebende zweite Bürstenkörper 100b den ersten Bürstenkörper 100a bei Kontakterstellung über das Kopplungselement 103 in eine Drehbewegung versetzt. Während der Drehung springt der Kontaktabschnitt des Kopplungselements 103 in die nächste Vertiefung der Zahnradstruktur.

Der erste Bürstenkörper 100a kann lediglich in eine Richtung drehbar gelagert sein, also einen Freilauf aufweisen. Dadurch wird erreicht, dass sich der erste Bürstenkörper 100a nicht zurückdreht, wenn der zweite Bürstenkörper 100b sich wieder von diesem entfernt und das Kopplungselement 103 über die zahnradförmige Aussengeometrie des Bürstenkörpers 100a schleift.

Der Ablauf der Bewegung dieses Prinzips des Antriebs des ersten Bürstenkörpers 100a durch den zweiten Bürstenkörper 100b ist in den Fig. 12a bis 12c schematisch gezeigt. Der Ablauf ist in der Reihenfolge der Figuren 12c, 12b und 12a.

Die Figur 12c zeigt die Ausgangslage. Die Borstenreihe mit den Reinigungsborsten 102a ist in einer ersten Lage gezeigt. In Figur 12b kommt das Kopplungselement 103 in Kontakt mit dem ersten Bürstenkörper 100a und dreht diesen weiter wie an der Lage der dargestellten Borstenreihe zu erkennen ist. Das Kopplungselement 103 wird dabei ausgelenkt. In Figur 12a ist der zweite Bürstenkörper 100b wiederum in der Ausgangslage gezeigt, wenn dieser zurückbewegt ist und sich der erste Bürstenkörper 100a in einer nächsten Rastposition befindet. In einer weiteren Bewegungsabfolge drückt der zweite Bürstenkörper 100b das Kopplungselement 103 wiederum an den ersten Bürstenkörper 100a und treibt so die Drehbewegung des ersten Bürstenkörpers 100a weiter.

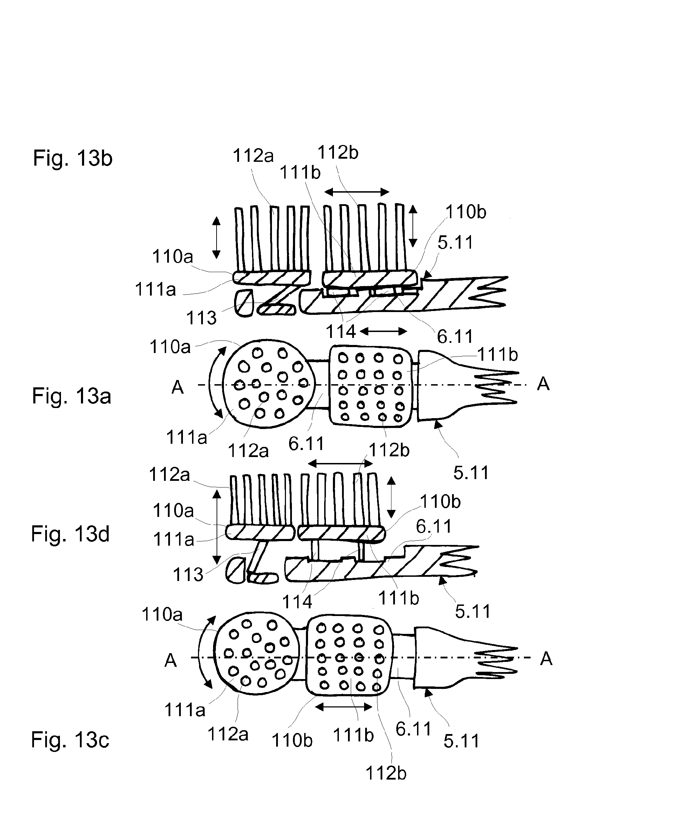

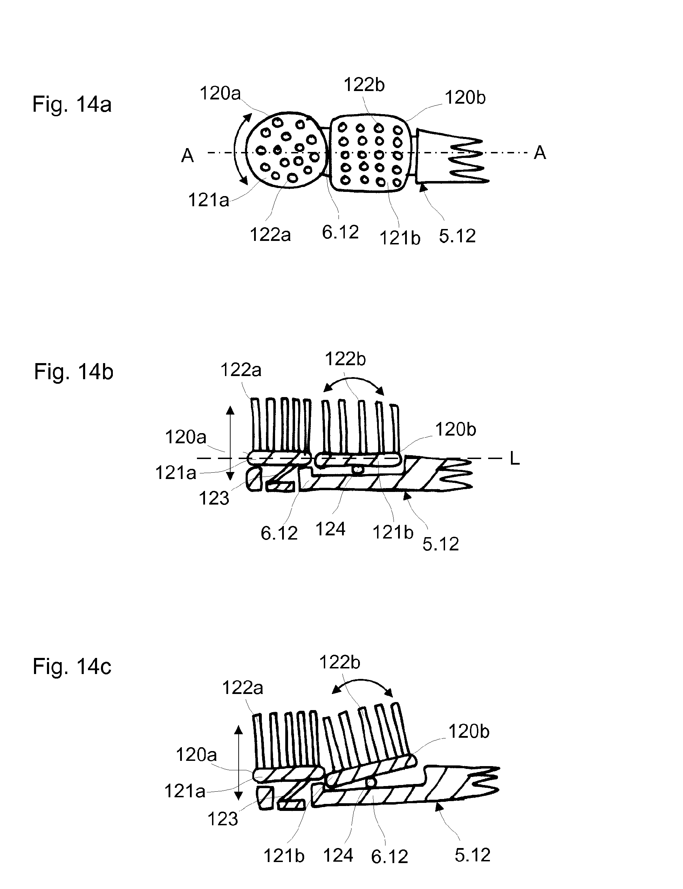

Die Figuren 13a-13d und 14a-14c zeigen eine elfte und zwölfte Ausführungsvariante mit alternativen Bewegungskonzepten für die Bürstenkörper 110a, 110b; 120a, 120b.

So weist der Bürstenkopf 5.11, 5.12 ein Hebeelement 113, 123 auf, welches den ersten Bürstenkörper 110a, 120a mit dem darunter liegenden Kopfteil 6.11, 612 beweglich verbindet. Das Hebeelement 113, 123 ist dabei auf der dem Borstenfeld gegenüber liegenden Unterseite des ersten Borstenträgers 111a, 121a befestigt. Das Hebeelement 113, 123 ist so ausgestaltet und am Kopfteil 6.11, 6.12 befestigt, dass der erste Bürstenkörper 110a, 120a über das Hebeelement 113, 123 schraubenartig zum Kopfteil 6.11, 612 hin und von diesem wegbewegbar ist.

Gemäss der Ausführungsvariante nach Figur 13a-13d ist der zweiten Bürstenkörper 110b mit dem darunter liegenden Kopfteil 6.11 über zwei, voneinander beabstandet angeordnete Hebeelemente 114 gelenkig verbunden. Die Hebeelemente 114 sind auf der dem Borstenfeld gegenüber liegenden Unterseite des zweiten Borstenträgers 111b befestigt. Die Hebeelemente 114 sind so ausgestaltet und am Bürstenkopf 5.11 bzw. am Kopfteil 6.11 befestigt, dass der zweite Bürstenkörper 110b über die Hebeelemente 114 parallelogrammartig zum Kopfteil 6.11 hin und von diesem weg bewegt werden kann.

Die Figur 13d zeigt die Ausgangslage der beiden Bürstenkörper 110a, 110b, wenn keine Kraft auf diese ausgeübt wird. Die Hebeelemente 113, 114 weisen gegenüber dem Kopfteil 6.11 einen maximalen Winkel auf. Die Rückstellkräfte der Hebeelemente 113, 114 wirken aufgrund der geometrischen Ausgestaltung so, dass die genannte Ausgangslage im unbelasteten Zustand immer wieder erreicht wird.

Durch die Ausübung eines Druckes auf die Reinigungsborsten 112a und 112b während der Anwendung werden die ersten und zweiten Borstenträger 111a, 111b in Richtung des Kopfteils 6.11 gedrückt. Der erste Borstenträger 111a macht durch den Druck eine Bewegung in Richtung des Kopfteils 6.11 und gleichzeitig eine Drehung in eine Richtung, welche durch das entsprechende Hebeelement 113 vorgeben ist. Der erste Borstenträger 111a führt quasi eine Schraubbewegung aus.

Der zweite Borstenträger 111b führt bei Anwendung eines Druckes eine parallelogrammartige Bewegung aus. Die parallelogrammartige Bewegung ist eine kombinierte Bewegung, einerseits in Richtung des Kopfteils 6.11 und andererseits in Richtung des Halsteils der Zahnbürste, das heisst in eine Richtung vom ersten Bürstenkörper 110a weg. Die parallelogrammartige Bewegung ist wiederum durch die Ausgestaltung der Hebeelemente 114 vorgegeben.

Die Ausgestaltung der Bürstenkörper 110a, 110b und Kopfteile 6.11 mit Hebeelementen 113, 114 umfasst also zwei Bewegungskomponenten. Eine erste gemeinsame Bewegungskomponente verläuft in die Höhe, d.h. zum Kopfteil 6.11 hin und wieder von diesem weg. Eine zweite Bewegungskomponente umfasst entweder eine Drehung um eine geometrische Drehachse oder eine Translation vom anderen Bürstenkörper 110a weg und wieder zu diesem hin.

Die Figur 13c zeigt die Ausgangslage in Draufsicht. Die Figur 13d zeigt eine Querschnittsansicht der Figur 13c. Die Figur 13a zeigt den Bürstenkopf bei Anwendung eines Druckes auf die Bürstenkörper 110a, 110b. Die Figur 13b zeigt eine Querschnittsansicht der Figur 13a.

Gemäss der Ausführungsvariante nach Figur 14a-14d ist der zweite Bürstenkörper 120b als Wippe ausgebildet, bei welcher der zweite Borstenträger 121b auf einer Wippenachse 124 gelagert ist. Die Wippenachse 124 ist quer zur Längsachse L ausgerichtet und liegt parallel zur geometrischen Reinigungsebene. Der zweite Borstenträger 121b kann so gegenüber dem Kopfteil 6.12 eine Wippbewegung ausüben.

Die Bewegung der Bürstenkörper 110a, 110b; 120a, 120b relativ zum Kopfteil 6,11, 6.12 wird ebenfalls über die manuell ausgeführte Reinigungsbewegung der Zahnbürste mittels Hin- und Herbewegen und Ausüben eines Anpressdruckes des Bürstenkopfes 5.11 bzw. 5.12 an die Zähne ausgelöst.

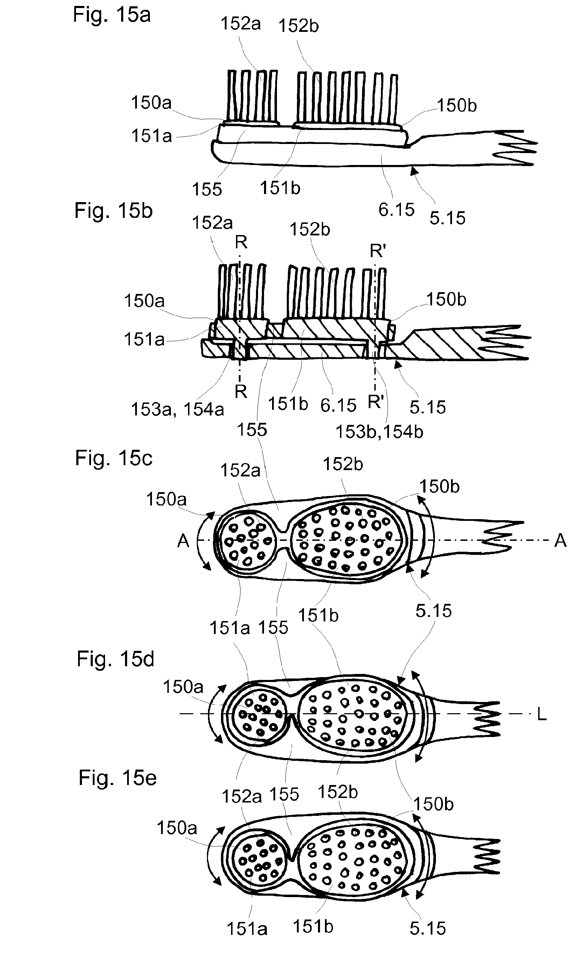

Gemäss der dreizehnten Ausführungsvariante nach Figur 15a-15e ist der erste Bürstenkörper 150a in Draufsicht rund, insbesondere kreisrund, ausgebildet. Der erste Bürstenkörper 150a enthält als Achselement einen Achszapfen 153a, welcher auf der dem ersten Borstenfeld gegenüber liegenden Seite am ersten Borstenträger 151a angeordnet ist.

Der Achszapfen 153a und über diesen der erste Bürstenkörper 150a sind drehbar in der Achsaufnahme, einer Aufnahmeöffnung 154a, am Kopfteil 6.15 gelagert. Die Aufnahmeöffnung 154a ist als durchgehende Rundöffnung im Kopfteil 6.15 ausgebildet. Die Rundöffnung braucht jedoch nicht durchgängig zu sein, sondern kann auch lediglich als Vertiefung ausgebildet sein. Der Achszapfen 153a als Teil des ersten Borstenträgers 151a ist über eine Schnapp-Klickverbindung mit dem Kopfteil 6.15 verbunden und dadurch axial gesichert. Der Achszapfen 153a und somit die geometrische Drehachse R sind zentrisch angeordnet.

Der zweite Bürstenkörper 150b ist oval ausgebildet. Der zweite Bürstenkörper 150b enthält als Achselement einen Achszapfen 153b, welcher auf der dem zweiten Borstenfeld gegenüber liegenden Seite am zweiten Bürstenkörper 150b angeordnet ist.

Der Achszapfen 153b und über diesen der zweite Bürstenkörper 150b sind drehbar in der Achsaufnahme, einer Aufnahmeöffnung 154b, am Kopfteil 6.15 gelagert. Die Aufnahmeöffnung 154b ist ebenfalls als durchgehende Rundöffnung im Kopfteil 6.15 ausgebildet. Die Rundöffnung braucht jedoch nicht durchgängig zu sein, sondern kann auch lediglich als Vertiefung ausgebildet sein. Der Achszapfen 153b als Teil des zweiten Bürstenkörpers 150b ist über eine Schnapp-Klickverbindung mit dem Kopfteil 6.15 verbunden und dadurch axial gesichert. Der Achszapfen 153b und somit die geometrische Drehachse R' sind jedoch exzentrisch gegenüber dem zweiten Borstenträger 151b angeordnet. Daher schwenkt der zweite Bürstenkörper 150b bei einer Drehbewegung um die Drehachse R' seitlich aus.

Die beiden Bürstenkörper 150a, 150b werden von einem gummielastischen Einfassungselement 155 gemeinsam umfasst, welches direkt an die beiden Bürstenkörper 150a und 150b angebracht ist.

Durch die manuell mit der Zahnbürste ausgeführte Reinigungsbewegung mittels Hin-und Herbewegen und durch Ausüben eines Anpressdruckes des Bürstenkopfes 5.15 an die Zähne, wird der zweite Bürstenkörper 150b um die Drehachse R' in eine Drehbewegung versetzt.

Dabei schwenkt der zweite Bürstenkörper aufgrund der exzentrischen Anordnung der Drehachse R' seitlich aus und übt eine Auslenkkraft auf das Einfassungselement 155 ein. Die Auslenkkraft bewirkt eine Zugspannung im Einfassungselement 155, welches zu einer Dehnung desselbigen führt. Durch die Dehnungsbewegung des Einfassungselementes 155 wird der erste Bürstenkörper 150a in Drehung versetzt.

Die Beeinflussung der Bewegungen geschieht gegenseitig, so dass auch der erste Bürstenkörper 150a den zweiten Bürstenkörper 150b in Bewegung versetzen kann.

Gemäss der vierzehnten Ausführungsvariante nach Figur 16a-16h ist auf dem Kopfteil 6.16 ein hufeisenförmig ausgestalteter, zweiter Bürstenkörper 160b angeordnet. Der hufeisenförmige, zweite Bürstenkörper 160b bildet zwei flexible Schenkel aus, welche einen Aufnahmeraum einschliessen. Die beiden Schenkel weisen elastische Eigenschaften auf und sind dadurch seitlich nach aussen bewegbar. Die elastischen Eigenschaften werden beispielsweise durch flexible Zonen in den Schenkeln oder durch die geometrische Gestaltung der Schenkel erreicht. Die Schenkel bestehen insbesondere aus einer Hartkomponente, damit die Borsten ebenfalls verankert werden können. Auf den Schenkeln sind Reinigungsborsten 162b angeordnet, welche ein Borstenfeld ausbilden. Der Aufnahmeraum ist zum freien Ende des Bürstenkopfes 5.16 hin offen.

Auf dem Kopfteil 6.16 ist zum freien Ende des Bürstenkopfes 5.16 hin ist ein erster Bürstenkörper 160a angeordnet, welcher mit einem Abschnitt in die hufeisenförmige Öffnung des zweiten Bürstenkörpers 160b hineinreicht. Der erste Bürstenkopf 160a ist über eine Schlittenführung entlang der Längsachse L translatorisch verschiebbar geführt. Die Schlittenführung umfasst eine Führungsnut 165 im Kopfteil 6.16 sowie ein in der Führungsnut 165 geführtes Führungselement 166 am ersten Bürstenkörper 160a. Das Führungselement 166 ist an der dem Borstenfeld gegenüber liegenden Seite am ersten Borstenträger 161 a angeordnet. Das Führungselement 166 ist über eine Schnapp-Klickverbindung in die Führungsnut eingeführt und gegen ein Herausgleiten gesichert. Die Schlittenführung kann jedoch auch anderes ausgebildet sein.

Durch die manuell mit der Zahnbürste ausgeführte Reinigungsbewegung mittels Hin-und Herbewegen und durch Ausüben eines Anpressdruckes des Bürstenkopfes 5.16 an die Zähne, wird der erste Bürstenkörper 160a in eine translatorische Bewegung versetzt. Dabei wird der erste Bürstenkörper 160a in die Öffnung zwischen den beiden Schenkeln des zweiten Bürstenkörpers 160b geschoben. Der erste Bürstenkörper 160a übt bei diesem Vorgang eine Spreizkraft auf die beiden Schenkel aus. Die beiden Schenkel werden in der Folge unter Vergrösserung der Öffnung auseinander gedrückt und weichen seitlich aus. Beim Zurückweichen des ersten Bürstenkörpers 160a aus der Öffnung mit der Gegenbewegung, weichen auch die beiden Schenkel aufgrund einer elastischen Rückstellkraft wieder in ihre Ausgangsposition zurück.

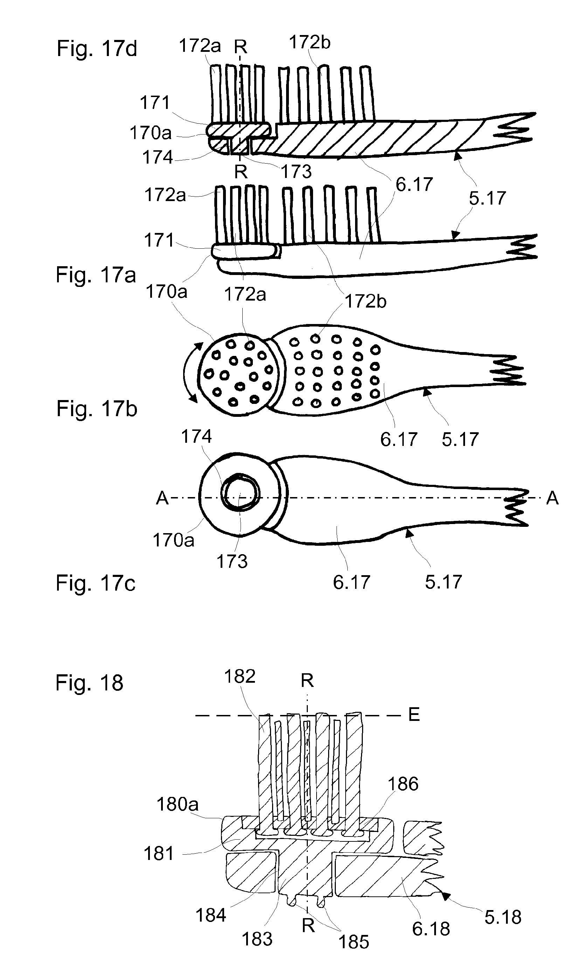

Gemäss einer fünfzehnten Ausführungsvariante nach Figur 17a-17d enthält der Bürstenkopf 5.17 im Gegensatz zu den vorangehenden Ausführungsvarianten lediglich einen am Kopfteil 6.17 beweglich angeordneten Bürstenkörper 170a.

Der Bürstenkörper 170a ist vorne, d.h. am freien Endabschnitt des Kopfteils 6.17 angeordnet. Der Bürstenkörper 170a umfasst einen Borstenträger 171 sowie erste Reinigungsborsten 172a, welche am Borstenträger 171 angeordnet sind. Diese ersten Reinigungsborsten 172a bilden ein erstes Borstenfeld aus.

Im Anschluss an den Bürstenkörper 170a in Richtung Griffteil ist ein zweites Borstenfeld mit zweiten Reinigungsborsten 172b angeordnet. Die zweiten Reinigungsborsten 172b sind direkt im Kopfteil 6.17 verankert. Alternativ zu dieser Ausführungsform können die Reinigungsborsten auch in einem Borstenträger eines zweiten Bürstenkörpers verankert sein, welcher fix am Kopfteil angeordnet ist. Das zweite Borstenfeld ist aber nicht als Ganzes relativ zum Kopfteil bewegbar.

Der bewegliche Bürstenkörper 170a ist in Draufsicht rund ausgebildet. Er enthält als Achselement einen Achszapfen 173, welcher auf der dem ersten Borstenfeld gegenüber liegenden Seite am Borstenträger 171 angeordnet ist.

Der Achszapfen 173 und über diesen der bewegliche Bürstenkörper 170a sind drehbar in einer Achsaufnahme bzw. Achsöffnung oder wie hier genannt einer Aufnahmeöffnung 174 am Kopfteil 6.17 gelagert. Die Aufnahmeöffnung 174 ist als durchgehende Rundöffnung im Kopfteil 6.17 ausgebildet. Die Rundöffnung braucht jedoch nicht durchgängig zu sein, sondern kann auch lediglich als Vertiefung ausgebildet sein. Der Achszapfen 173 als Teil des beweglichen Bürstenkörpers 170a ist über eine Schnapp-Klickverbindung mit dem Kopfteil 6.17 verbunden und dadurch axial gesichert. Der Achszapfen 173 und somit die geometrische Drehachse R sind zentrisch angeordnet.

Das dem ersten Borstenfeld gegenüber liegende, freie Ende des Achszapfens 173 erstreckt sich auf der anderen Seite der durchgängigen Aufnahmeöffnung 174 über das Kopfteil 6.17 hinaus.

Durch die manuell mit der Zahnbürste ausgeführte Reinigungsbewegung mittels Hin-und Herbewegen und durch Ausüben eines Anpressdruckes des Bürstenkopfes 5.17 an die Zähne, wird nun der bewegliche Bürstenkörper 170a um eine Drehachse R in eine Drehbewegung versetzt.

Die Figur 18 zeigt einen Längsschnitt durch eine besondere Ausführungsform eines rotierenden Bürstenkörpers 180a. Der rotierende Bürstenkörper 180a ist bezüglich Ausgestaltung und Anordnung am Kopfteil 6.18 mit Ausnahme der nachfolgend beschriebenen Unterschiede gleichartig ausgebildet.

Im Unterschied zur Ausführungsvariante nach Figur 1a-1d sind die Reinigungsborsten 182 nicht direkt am Borstenträger 181 angeordnet, d.h. angebracht oder integral mit diesem hergestellt, sondern auf einem Trägerkörper 186 befestigt. Die Reinigungsborsten 182 sind hierbei mittels eines sogenannten AFT-Verfahrens am Trägerkörper 186 befestigt. Dies geschieht, indem die Reinigungsborsten 182 durch Durchgangsöffnungen im Trägerkörper 186 hindurch geführt werden. Dabei werden die am anderen Ende aus den Durchgangsöffnungen austretenden Endabschnitte der Reinigungsborsten 182 unter Ausbildung eines Schmelzbades angeschmolzen. Die Reinigungsborsten 182 werden so über das wiederverfestigte Schmelzbad im Trägerkörper 186 verankert. Danach wird der Trägerkörper 186 am Borstenträger 181 befestigt. Hierzu wird der Trägerkörper 186 in eine Vertiefung im Borstenträger 181 eingesetzt.

Im Weiteren können am Trägerkörper 186 noch weitere Funktionselemente, wie weichelastische Borsten, angebracht sein. Weitere Funktionselemente 185 sind am Achselement 183 angeordnet.

## Patentansprüche

1. Zahnbürste (1), enthaltend einen Grundkörper (2) mit einem Griffteil (3), einem Halsteil (4) und einem Kopfteil (6.1-6.12),
**dadurch gekennzeichnet, dass**
im Kopfteil (6.1-6.12) mindestens ein, relativ zum Kopfteil (6.1-6.12) beweglicher Bürstenkörper (10a-120a, 10b-120b) angeordnet ist, welcher zusammen mit dem Kopfteil (6.1-6.12) wenigstens einen Teil eines Bürstenkopfes (5.1-5.12) ausbildet, wobei der mindestens eine Bürstenkörper (10a-120a, 10b-120b) über eine manuell auf die Zähne ausgeübte Reinigungsbewegung relativ zum Kopfteil (6.1-6.12) bewegbar ist.

2. Zahnbürste gemäss Anspruch 1, **dadurch gekennzeichnet, dass** im Kopfteil (6.1-6.12) mindestens zwei, relativ zum Kopfteil (6.1-6.12) sowie relativ zueinander bewegliche Bürstenkörper (10a-120a, 10b-120b) angeordnet sind, welche zusammen mit dem Kopfteil (6.1-6.12) wenigstens einen Teil eines Bürstenkopfs (5.1-5.12) ausbilden, wobei die mindestens zwei Bürstenkörper (10a-120a, 10b-120b) über eine manuell auf die Zähne ausgeübte Reinigungsbewegung relativ zum Kopfteil (6.1-6.12) bewegbar sind.

3. Zahnbürste gemäss Anspruch 1 oder 2, **dadurch gekennzeichnet, dass** mindestens ein Bürstenkörper (10a-100a) am Kopfteil (6.1-6.10) um eine geometrische Drehachse (D) innerhalb eines Drehwinkels drehbar gelagert ist.

4. Zahnbürste gemäss einem der Ansprüche 1 bis 3, **dadurch gekennzeichnet, dass** mindestens ein Bürstenkörper (10b-40b, 60b-100b) am Kopfteil (6.1-6.4, 6.6-6.12) entlang der Längsachse (L) der Zahnbürste (1) translatorisch bewegbar ist.

5. Zahnbürste gemäss einem der Ansprüche 1 bis 4, **dadurch gekennzeichnet, dass** der Grundkörper (2) einteilig in einem Spritzgiessverfahren hergestellt ist.

6. Zahnbürste gemäss einem der Ansprüche 2 bis 5, **dadurch gekennzeichnet, dass** die mindestens zwei Bürstenkörper (10a-80a, 110a-120a; 10b-80b, 110b-120b) voneinander unabhängig bewegbar sind.

7. Zahnbürste gemäss einem der Ansprüche 2 bis 5, **dadurch gekennzeichnet, dass** die mindestens zwei Bürstenkörper (90a, 100a; 90b, 100b) über Kopplungsmittel (14) miteinander gekoppelt sind, derart dass eine Bewegung des einen Bürstenkörpers (20) über die Kopplungsmittel (14) eine Bewegung im anderen Bürstenkörper (10) auslöst.

8. Zahnbürste gemäss einem der Ansprüche 2 bis 7, **dadurch gekennzeichnet, dass** ein erster Bürstenkörper (10a-40a; 60a-100a) am Kopfteil (6.1-6.4; 6.6-6.10) um eine geometrische Drehachse (D) innerhalb eines Drehwinkels drehbar gelagert ist, und ein zweiter Bürstenkörper (10b-40b; 60b-100b) neben dem ersten Bürstenkörper (10a-40a; 60a-100a) zum Griffteil hin (3) am Kopfteil (6.1-6.4; 6.6-6.10) angeordnet und entlang der Längsachse (L) der Zahnbürste (1) translatorisch bewegbar ist.

9. Zahnbürste gemäss einem der Ansprüche 4 bis 8, **dadurch gekennzeichnet, dass** der translatorisch bewegbare Bürstenkörper (10b-40b, 60b-100b) entlang einer Schlittenführung (13b-43b, 73b-103b; 14b-44b, 74b-104b) translatorisch bewegbar ist.

10. Zahnbürste gemäss Anspruch 9, **dadurch gekennzeichnet, dass** die Schlittenführung einen durch das Kopfteil (6.3, 6.4, 6.8) ausgebildeten Längsführungskörper (34b, 44b, 84b) enthält, auf welchem der Bürstenkörper (30b, 40b, 80b) über, wenigstens ein, den Längsführungskörper (34b, 44b, 84b) wenigstens teilweise umgreifendes Führungselements (33b, 43b, 83b) gleitend geführt ist.

11. Zahnbürste gemäss Anspruch 9, **dadurch gekennzeichnet, dass** die Schlittenführung eine durch das Kopfteil (6.1, 6.2, 6.7, 6.13, 6.14) ausgebildete Führungsöffnung (14b, 24b, 74b, 134b, 144b) enthält, entlang welcher der Bürstenkörper (10b, 20b, 70b) über wenigstens ein, in die Führungsöffnung (14b, 24b, 74b, 134b, 144b) greifendes Führungselement (13b, 23b, 73b, 133b, 143b) gleitend geführt ist.

12. Zahnbürste gemäss einem der Ansprüche 1 bis 11, **dadurch gekennzeichnet, dass** mindestens ein Bürstenkörper (30a, 40a) über eine Gelenkverbindung (33a, 34a; 43a, 44a) mit dem Kopfteil (6.3, 6.4) um einen Drehpunkt (P) in drei Achsrichtungen auslenkbar ist.

13. Zahnbürste gemäss Anspruch 12, **dadurch gekennzeichnet, dass** die Gelenkverbindung (33a, 34a; 43a, 44a) ein Kugelgelenk ist, wobei das Kugelgelenk einen Gelenkkopf (33a, 43a) und eine Gelenkpfanne (34a, 44a) umfasst.

14. Zahnbürste gemäss einem der Ansprüche 1 bis 13, **dadurch gekennzeichnet, dass** mindestens ein Bürstenkörper (120b) über eine gelenkige Verbindung mit dem Kopfteil (6.12) als Wippe ausgebildet ist, wobei der Borstenträger (121b) auf einer Wippenachse (124b) gelagert ist.

15. Zahnbürste gemäss einem der Ansprüche 1 bis 14, **dadurch gekennzeichnet, dass** mindestens ein Bürstenkörper (112a, 122a, 112b) über ein oder mehrere Hebeelemente 113, 114, 123), welche mit dem Bürstenkörper (112a, 122a, 112b) und dem Kopfteil (6.11, 6.12) verbunden sind und jeweils eine Drehachse oder einen Drehpunkt ausbilden, parallelogrammartig aus dem Kopfteil (6.11, 6.12) ausschwenkbar ist.

16. Zahnbürste gemäss einem der Ansprüche 1 bis 15, **dadurch gekennzeichnet, dass** am Kopfteil (6.6, 6.13, 6.14) oder am Bürstenkörper ein Rückstellorgan (63, 75, 135, 145) vorgesehen ist, zur Rückstellung des Bürstenkörpers (60b, 70b) aus einer, insbesondere rotativen oder translatorischen Auslenkung in eine Ausgangsposition.

17. Zahnbürste gemäss Anspruch 16, **dadurch gekennzeichnet, dass** das Rückstellorgan (63, 75, 135, 145) aus einer Weichkomponente mit elastischen Eigenschaften besteht.

18. Zahnbürste gemäss einem der Ansprüche 16 bis 17, **dadurch gekennzeichnet, dass** das Rückstellorgan als Federelement ausgebildet ist.

19. Zahnbürste gemäss einem der Ansprüche 16 bis 18, **dadurch gekennzeichnet, dass** das Rückstellorgan (75) mindestens ein seitlich vom Bürstenkörper (70b) am Kopfteil (6.7) angeordnetes Auslenkelement umfasst, welches derart vom Kopfteil (6.7) seitlich vorstehend ist, dass dieses bei einer translatorischen Verschiebung des Bürstenkörpers (70b) über einen Mitnahmekontakt mit dem Bürstenkörper (70b) in Bewegungsrichtung ausgelenkt wird.

20. Verfahren zur Herstellung einer Zahnbürste gemäss den Ansprüchen 1 bis 19, **gekennzeichnet durch** die Herstellung wenigstens des Grundkörper (2) in einem Spritzgiessverfahren.
